# EUROPEAN PATENT SPECIFICATION

(11) **EP 4 408 102 B1**
(45) Date of publication and mention of the grant of the patent: **11.11.2026**
(21) Application number: 22882494.2
(22) Date of filing: 08.09.2022
(51) Int. Cl.: H04W 72/04, H04W 72/12, H04W 72/0453, H04W 72/23

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 22.10.2021 CN 202111233358
(43) Date of publication of application: 31.07.2024
(73) Proprietor: Huawei Technologies Co., Ltd., Shenzhen, Guangdong 518129 (CN)
(72) Inventor: LI, Ruijie, Shenzhen, Guangdong 518129 (CN); GUAN, Lei, Shenzhen, Guangdong 518129 (CN); LI, Shengyu, Shenzhen, Guangdong 518129 (CN); GAO, Fei, Shenzhen, Guangdong 518129 (CN); MA, Ruixiang, Shenzhen, Guangdong 518129 (CN); SU, Tong, Shenzhen, Guangdong 518129 (CN)
(74) Representative: Pfenning, Meinig & Partner mbB
(86) International application number: PCT/CN2022/117948
(87) International publication number: WO 2023/065880

(56) References cited:
- CN-A- 109 152 036
- CN-A- 111 901 869
- CN-A- 113 382 479
- CN-A- 113 518 441
- US-A1- 2016 270 114
- US-A1- 2021 058 940
- "5G NR", 18 September 2020, ELSEVIER, ISBN: 978-0-12-822320-8, article DAHLMAN ERIK ET AL: "5G NR The Next Generation Wireless Access Technology, 2nd Edition, Chapters 1-17", pages: 1 - 611, XP055908004

## Description

### TECHNICAL FIELD

This application relates to the wireless communication field, and in particular, to a communication method and apparatus.

### BACKGROUND

In a communication system, a frame structure of a frequency band on which a network device is deployed is a frequency division duplex (frequency division duplex, FDD) frame structure or a time division duplex (time division duplex, TDD) frame structure. The TDD frame structure includes one or more of an uplink slot, a downlink slot, or a flexible slot (which may also be referred to as a special slot). The uplink slot may be used to transmit an uplink message, the downlink slot may be used to transmit a downlink message, and the flexible slot may be used to transmit an uplink message or a downlink message. For the network device, if one piece of downlink data arrives in a specific uplink slot, the network device needs to wait until a downlink slot or a flexible slot arrives then sending the downlink data to a terminal in the downlink slot or a flexible slot. This increases a transmission delay. Similarly, after the terminal receives the downlink data, if the downlink data has not arrived in the uplink slot or the flexible slot, the terminal needs to wait until the downlink data arrives in the uplink slot or the flexible slot before sending a feedback message to the network device, so that the network device determines whether to perform data retransmission. In this case, a time for waiting for retransmission by the network device is excessively long. As a result, using the TDD frame structure for communication causes a high transmission delay. In comparison, in the FDD frame structure, an uplink resource and a downlink resource are distinguished by using a frequency, and unidirectional resources (for example, uplink resources or downlink resources) are continuous in time. Therefore, the FDD frame structure has the uplink resource and the downlink resource at any moment, and does not cause a waiting delay. For services that are symmetrical in an uplink and a downlink, the FDD frame structure can fully utilize uplink and downlink resources. However, for services that are asymmetric in the uplink and the downlink, resource utilization is low.

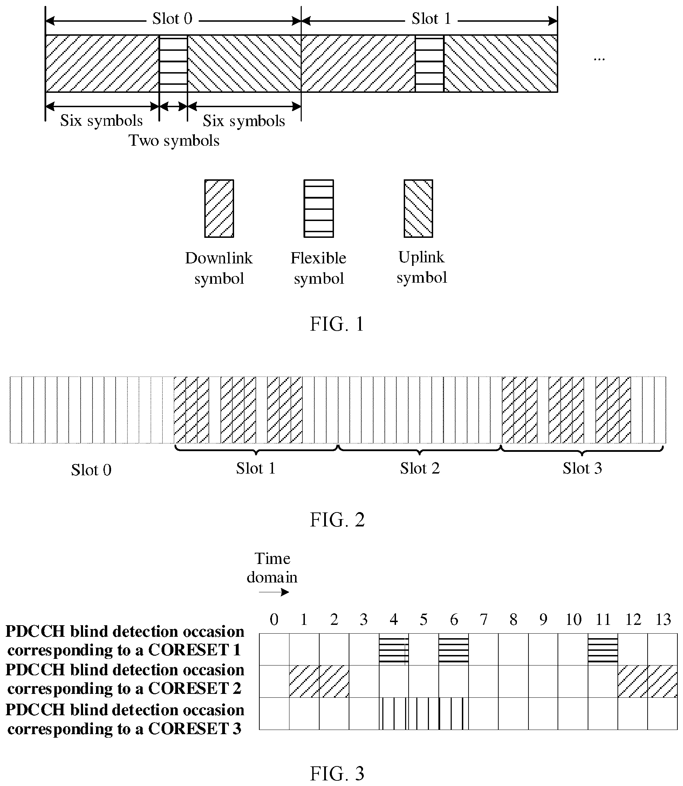

To resolve the above problem, a self-contained (self-contained) frame structure is proposed. In the self-contained frame structure, one slot includes both a downlink part and an uplink part, and there is a switching interval between the downlink part and the uplink part. FIG. 1 is a schematic diagram of a self-contained frame structure. In FIG. 1, one self-contained slot includes six downlink symbols, two flexible symbols, and six uplink symbols. It is clear that the self-contained frame structure has a quite small uplink-downlink switching periodicity, and does not cause an excessively high waiting delay. However, this frame structure introduces a quite small scheduling granularity and a quite high scheduling specification, and consequently implementation complexity is high. In addition, this frame structure introduces quite high uplink-downlink switching overheads, and because a transmission granularity is quite small, demodulation reference signal (demodulation reference signal, DMRS) overheads for data transmission are also quite high.
US2021058940A1 discloses that a UE of a wireless communication system and a wireless communication method using the same. More particularly, the method including receiving scheduling information including resource allocation information, wherein the resource allocation information comprises a RIV determined based on the number of RBs of a first BWP, and transmitting or receiving data on a RB set corresponding to the RIV in a second BWP, wherein the number of RBs of the second BWP is greater than the number of RBs of the first BWP, the starting RB index S and the number of RBs of the RB set corresponding to the RIV in the second BWP are given in powers of 2 and a device for the same are disclosed.

### SUMMARY

Embodiments of this application provide a communication method and apparatus, so that a frequency resource may be flexibly scheduled, a transmission delay is low, and resource utilization is high.

The invention is defined in the appended set of claims.

### BRIEF DESCRIPTION OF DRAWINGS

FIG. 1 is a schematic diagram of a self-contained frame structure;
FIG. 2 is a schematic diagram 1 of a PDCCH blind detection occasion according to an embodiment of this application;
FIG. 3 is a schematic diagram 2 of a PDCCH blind detection occasion according to an embodiment of this application;
FIG. 4 is a schematic diagram 1 of cross-carrier scheduling according to an embodiment of this application;
FIG. 5 is a schematic diagram of group DCI according to an embodiment of this application;
FIG. 6 is a schematic diagram of a complementary frame structure according to an embodiment of this application;
FIG. 7 is a schematic diagram 2 of cross-carrier scheduling according to an embodiment of this application;
FIG. 8 is a schematic diagram of an architecture of a communication system according to an embodiment of this application;
FIG. 9 is a schematic diagram of a hardware structure of a communication apparatus according to an embodiment of this application;
FIG. 10 is a schematic flowchart 1 of a communication method according to an embodiment of this application;
FIG. 11 is a schematic diagram of a time unit set according to an embodiment of this application;
FIG. 12 is a schematic flowchart 2 of a communication method according to an embodiment of this application;
FIG. 13 is a schematic flowchart 3 of a communication method according to an embodiment of this application;
FIG. 14 is a schematic diagram 3 of cross-carrier scheduling according to an embodiment of this application;
FIG. 15 is a schematic diagram 4 of cross-carrier scheduling according to an embodiment of this application;
FIG. 16 is a schematic diagram 5 of cross-carrier scheduling according to an embodiment of this application;
FIG. 17 is a schematic diagram 1 of division into time units according to an embodiment of this application;
FIG. 18 is a schematic diagram 2 of division into time units according to an embodiment of this application;
FIG. 19 is a schematic flowchart 4 of a communication method according to an embodiment of this application;
FIG. 20 is a schematic flowchart 5 of a communication method according to an embodiment of this application;
FIG. 21 is a schematic diagram 1 of a structure of a communication apparatus according to an embodiment of this application;
FIG. 22 is a schematic diagram 2 of a structure of a communication apparatus according to an embodiment of this application; and
FIG. 23 is a schematic diagram 3 of a structure of a communication apparatus according to an embodiment of this application.

### DESCRIPTION OF EMBODIMENTS

First, to facilitate understanding of technical solutions provided in embodiments of this application, technical terms used in embodiments of this application are explained and described.

### 1. Physical downlink control channel (physical downlink control channel, PDCCH)

Information carried on the PDCCH is downlink control information (downlink control information, DCI). The DCI may indicate at least one type of the following information: time-frequency resource information of a physical downlink shared channel (physical downlink shared channel, PDSCH), information about a physical uplink control channel (physical uplink control channel, PUCCH) on which feedback information corresponding to the PDSCH is located, or time-frequency resource information of a physical uplink shared channel (physical uplink shared channel, PUSCH). It should be understood that during specific application, in addition to the foregoing information, the DCI may further indicate other information. This is not limited.

In a communication system, a minimum resource unit for carrying PDCCH transmission is a control channel element (control channel element, CCE). One CCE may include a plurality of resource element groups (resource element groups, REGs). For example, one CCE includes six REGs. A time domain width of one REG is one symbol, and a frequency domain width is one resource block (resource block, RB). A control channel (for example, a PDCCH) is obtained through CCE aggregation. In other words, the control channel occupies a time-frequency resource in a unit of a CCE. Usually, an aggregation level (aggregation level, AL) of the CCE may be 1, 2, 4, 8, or 16. The aggregation level indicates a quantity of CCEs that carry the control channel. For example, if AL=2, it indicates that the control channel is transmitted through two CCEs.

It should be noted that, in embodiments of this application, the PDCCH may also be described as a candidate PDCCH. This is not limited.

### 2. PDCCH blind detection (PDCCH monitoring)

A network device may send a PDCCH to a terminal. Although the terminal knows a time-frequency resource area in which the network device sends the PDCCH, the terminal does not know information, for example, a specific position at which the network device sends the PDCCH, an aggregation level used for the PDCCH, and a format of the PDCCH. Therefore, the terminal needs to attempt to decode DCI carried at the position at which the PDCCH may be sent, that is, the terminal needs to perform blind detection at the position at which the PDCCH may be sent. In embodiments of this application, the position at which the PDCCH may be sent may be referred to as a candidate position of the PDCCH.

For example, the terminal may determine specific aggregation levels on which blind detection needs to be performed, and a candidate position of the PDCCH at each aggregation level, to determine a resource position that may be used to send the PDCCH. Subsequently, the terminal may assume a format DCI (or a quantity of bits) and a radio network temporary identifier (radio network temporary identifier, RNTI) corresponding to a scrambling manner, and decode a signal received at the resource position. If the decoding succeeds, the terminal determines that DCI is sent, and determines the DCI format and the scrambling manner. If the decoding fails, the terminal determines that no DCI is sent, and the terminal may try again by using another DCI format and another scrambling manner until blind detection is performed on all aggregation levels on which blind detection needs to be performed and all candidate positions of the PDCCH.

### 3. Control resource set (control resource set, CORESET)

The CORESET may indicate a frequency domain position at which the PDCCH is located and a quantity of time domain symbols occupied by the PDCCH in time domain. Optionally, the quantity of time domain symbols occupied by the PDCCH in time domain is 1, 2, or 3. Specifically, the network device may preconfigure different CORESET identifiers for CORESETs, so that different CORESETs are distinguished based on the different CORESET identifiers. For example, if there are two CORESETs, a CORESET identifier of a 1^{st} CORESET may be set to p1, and a CORESET identifier of a 2^{nd} CORESET may be set to p2.

The CORESET may be included in a CORESET group (CORESET group). One CORESET group may include a plurality of CORESETs, and one CORESET may belong to one CORESET group. The CORESET group corresponds to a group identifier, and the group identifier may identify the CORESET group.

In the communication system, the network device may send one piece of indication information to the terminal, and the indication information may indicate one or more CORESETs. The indication information may further indicate a group identifier corresponding to a CORESET group in which each CORESET in the one or more CORESETs is located. After receiving the indication information, the terminal may determine the one or more CORESETs based on the indication information. The terminal may further determine, based on the indication information, the group identifier corresponding to the CORESET group in which each CORESET in the one or more CORESETs is located. For example, a candidate value of the group identifier may be 0 to W-1. W may indicate a quantity of CORESET groups. That candidate values of the group identifiers are 0 to W-1 may be understood as that the indication information indicates a CORESET group 0, a CORESET group 1, ..., and a CORESET group W-1. W is an integer greater than or equal to 2.

For example, W=2 is used as an example. If the indication information indicates three CORESETs and a group identifier corresponding to a CORESET group in which each CORESET in the three CORESETs is located, where identifiers of the three CORESETs are respectively 1, 2, and 3, the three CORESETs may be respectively denoted as a CORESET 1, a CORESET 2, and a CORESET 3, a group identifier corresponding to a CORESET group in which the CORESET 1 is located is 0, and a group identifier corresponding to a CORESET group in which the CORESET 2 and the CORESET 3 are located is 1, the CORESET 1 belongs to the CORESET group 0, and both the CORESET 2 and the CORESET 3 belong to the CORESET group 1. For any CORESET in the one or more CORESETs, if the indication information does not include a group identifier corresponding to the CORESET, it may be considered that the CORESET belongs to the CORESET group 0.

In embodiments of this application, the CORESET group may also be referred to as a CORESET pool (pool). The group identifier corresponding to the CORESET group may also be referred to as a control resource set group index (CORESETGroupIndex) or a pool index (coresetPoolIndex) corresponding to the CORESET pool. Optionally, the CORESET group may be used to enable a multi-transmission reception point (multi-transmission reception point/multi-transmission reception point, multi-TRP). Generally, it may be considered that CORESETs with a same coresetPoolIndex correspond to one TRP.

### 4. Search space (search space, SS)

One search space may be associated with one CORESET. According to different functions of search spaces, the search spaces may be classified into two types: a common search space (common search space, CSS) and a user equipment (user equipment, UE) specific search space (UE-specific search space, USS).

The CSS may be used to transmit cell-level common control information related to a broadcast control channel (broadcast control channel, BCCH), paging, a random access procedure (random access procedure, RAR), and the like. The USS may be used to transmit UE-level control information related to a downlink shared channel (downlink shared channel, DL-SCH), an uplink shared channel (uplink shared channel, UL-SCH), and the like.

In a possible design, different search space identifiers are preconfigured for search spaces, so that different search spaces are distinguished by using different search space identifiers. For example, if there are two search spaces, a search space identifier of a 1^{st} first search space may be set to s1, and a search space identifier of a 2^{nd} search space may be set to s2.

In a possible design, configuration information of the search space may indicate a time domain position at which the PDCCH is located. For example, the configuration information of the search space may include at least one of the following: a search space identifier s, a CORESET identifier p associated with the search space, a search space type, a search space periodicity, a search space offset, a search space mode, an aggregation level, and a quantity of candidate PDCCHs of the aggregation level.

The search space identifier may identify a current search space. The CORESET identifier associated with the search space may identify the CORESET associated with the current search space. The search space type may indicate that the current search space is a CSS or a USS. The search space periodicity may indicate a periodicity length corresponding to the current search space. The search space offset may indicate an offset position of a slot corresponding to the current search space in a slot corresponding to the search space periodicity. The search space mode may indicate a start time domain symbol on which PDCCH blind detection needs to be performed in each slot corresponding to the current search space. The quantity of candidate PDCCHs corresponding to the aggregation level is a quantity of candidate positions at which the PDCCH may be sent by using the aggregation level. For example, if a quantity of candidate PDCCHs whose aggregation level is 2 is 4, it may indicate that there are four PDCCH candidate positions for sending the PDCCH, and the AL of each candidate position is 2, that is, each candidate position occupies two CCEs.

It may be understood that a specific slot corresponding to the current search space may be determined based on the search space periodicity and the search space offset. According to the specific slot corresponding to the current search space, the search space mode, and the CORESET, a specific time domain symbol occupied by the PDCCH on which PDCCH blind detection needs to be performed in each slot corresponding to the current search space may be determined, that is, a PDCCH blind detection occasion (occasion) may be determined. The PDCCH blind detection occasion is a time domain position of one symbol or a plurality of continuous symbols on which PDCCH blind detection needs to be performed. It may be understood that a plurality of PDCCH blind detection positions, namely, positions of start symbols of a plurality of PDCCH blind detection occasions, may be determined based on one search space. A quantity of symbols of the PDCCH blind detection occasion is a quantity of symbols of the CORESET associated with the search space. One search space may include one or more PDCCH blind detection occasions.

For example, as shown in FIG. 2, there are four slots in total: a slot 0, a slot 1, a slot 2, and a slot 3 respectively, and each slot includes 14 symbols. If the search space periodicity is two slots, the search space offset is 2, a bitmap (bitmap) of 14 bits (bits) corresponding to the search space mode is 10001000100000, and a quantity of time domain symbols occupied by the PDCCH indicated by the CORESET associated with the search space in time domain is 3, it may be determined, based on the search space periodicity and the search space offset, that the current search space corresponds to a slot 1 and a slot 3, and it may be determined, based on the search space mode and the control resource set, that PDCCH blind detection is performed on a symbol 0 to a symbol 2, a symbol 4 to a symbol 6, and a symbol 8 to a symbol 10 in each of the slot 1 and the slot 3. Alternatively, it may be described as that there are three PDCCH blind detection occasions in each of the slot 1 and the slot 3. The three PDCCH blind detection occasions are respectively a PDCCH blind detection occasion that occupies a symbol 0 to a symbol 2, a PDCCH blind detection occasion that occupies a symbol 4 to a symbol 6, and a PDCCH blind detection occasion that occupies a symbol 8 to a symbol 10. Alternatively, it is described as that there are three candidate PDCCHs in each of the slot 1 and the slot 3. The three candidate PDCCHs are respectively a candidate PDCCH that occupies a symbol 0 to a symbol 2, a candidate PDCCH that occupies a symbol 4 to a symbol 6, and a candidate PDCCH that occupies a symbol 8 to a symbol 10.

In embodiments of this application, the search space may also be described as a search space set (search space set). In other words, the "search space" and the "search space set" in embodiments of this application may be interchanged.

### 5. PDCCH blind detection capability

The PDCCH blind detection capability may indicate a maximum quantity of candidate PDCCHs that can be detected by the terminal in a period of time, and/or a maximum quantity of non-overlapped (non-overlapped) CCEs that can be detected by the terminal. In embodiments of this application, the candidate PDCCH is a PDCCH that may carry the DCI. It may be understood that there may be a plurality of candidate PDCCHs at the same time, and a specific candidate PDCCH on which the DCI is finally carried may be determined by the network device.

In an example, the PDCCH blind detection capability may indicate a maximum quantity of detection times and/or a maximum quantity of non-overlapped CCEs. The maximum quantity of detection times is a maximum quantity of times that the terminal can blindly detect the candidate PDCCH in a time unit, or a maximum quantity of candidate PDCCHs that the terminal can blindly detect in a time unit. The maximum quantity of detection times may also be referred to as a maximum quantity of candidate PDCCHs for blind detection. The maximum quantity of non-overlapped CCEs is a maximum quantity of non-overlapped CCEs that the terminal can detect when the terminal performs PDCCH blind detection in a time unit.

The time unit may be a slot (slot) or a blind detection span (monitoring span, span for short below). Optionally, one slot includes a plurality of spans, to ensure a delay and reliability.

In a possible implementation, the terminal may report at least one parameter combination (X, Y) to the network device, where X≥Y. For example, a value of a parameter (X, Y) may be (2, 2), (4, 3), or (7, 3). X may indicate a minimum interval between 1^{st} symbols of two continuous spans, and a unit of X may be used as a symbol. In addition to a last span of a slot, a time length of each span is between a value of Y and a maximum value of a time length corresponding to a CORESET configured by the network device for the terminal. Therefore, density of a blind detection occasion configured by the network device may be limited by using the parameter (X, Y).

For one parameter (X, Y), if a maximum quantity of non-overlapped CCEs of the terminal in one span is denoted as C, and a maximum quantity of candidate PDCCHs on which blind detection is performed by the terminal in one span is denoted as M, a maximum quantity of detection times corresponding to the parameter combination (X, Y) may be shown in Table 1, and a maximum quantity of non-overlapped CCEs corresponding to the parameter combination (X, Y) may be shown in Table 2.

**Table 1**

| | ${M}_{PDCCH}^{max \left(X, Y\right) , μ}$ | | |
|---|---|---|---|
| *µ* | (2, 2) | (4, 3) | (7, 3) |
| 0 | 14 | 28 | 44 |
| 1 | 12 | 24 | 36 |

In Table 1, when *µ* is 0, it may indicate that a subcarrier spacing (subcarrier spacing, SCS) is 15 kilohertz (kHz); or when *µ* is 1, it may indicate that a subcarrier spacing is 30 kHz. ${M}_{PDCCH}^{max \left(X, Y\right) , μ}$ is a maximum quantity (maximum number of monitored PDCCH candidates per span for combination and per serving cell) of candidate PDCCHs on which blind detection is performed in one span when the subcarrier spacing is 2*^{µ}*·15 kHz. Table 1 shows that when *µ* is 0 and a parameter combination is (2, 2), ${M}_{PDCCH}^{max \left(X, Y\right) , μ}$ is 14; when *µ* is 0, and a parameter combination is (4, 3), ${M}_{PDCCH}^{max \left(X, Y\right) , μ}$ is 28; when *µ* is 0, and a parameter combination is (7, 3), ${M}_{PDCCH}^{max \left(X, Y\right) , μ}$ is 44; when *µ* is 1, and a parameter combination is (2, 2), ${M}_{PDCCH}^{max \left(X, Y\right) , μ}$ is 12; when *µ* is 1, and a parameter combination is (4, 3), ${M}_{PDCCH}^{max \left(X, Y\right) , μ}$ is 24; or when *µ* is 1, and a parameter combination is (7, 3), ${M}_{PDCCH}^{max \left(X, Y\right) , μ}$ is 36.

**Table 2**

| | ${C}_{PDCCH}^{max \left(X, Y\right) , μ}$ | | |
|---|---|---|---|
| *µ* | (2, 2) | (4, 3) | (7, 3) |
| 0 | 18 | 36 | 56 |
| 1 | 18 | 36 | 56 |

In Table 2, ${C}_{PDCCH}^{max \left(X, Y\right) , μ}$ is a maximum quantity (maximum number of non-overlapped CCEs per span for combination (X, Y) and per serving cell) of non-overlapped CCEs in one span when the subcarrier spacing is 2*^{µ}*·15 kHz. Table 2 shows that when *µ* is 0 or 1, and a parameter combination is (2, 2), ${C}_{PDCCH}^{max \left(X, Y\right) , μ}$ is 18; when *µ* is 0 or 1, and a parameter combination is (4, 3), ${C}_{PDCCH}^{max \left(X, Y\right) , μ}$ is 36; or when *µ* is 0 or 1, and a parameter combination is (7, 3), ${C}_{PDCCH}^{max \left(X, Y\right) , μ}$ is 56.

It may be understood that Table 1 and Table 2 are merely used to describe the introduced examples, and do not limit the protection scope of this application.

The following describes in detail a process in which a terminal determines a span. For details, refer to S1.1 to S1.3 described below.

S1.1: The terminal may determine a start symbol position of a 1^{st} span.

In a possible implementation, the start symbol position of the 1^{st} span is a start symbol position of a PDCCH blind detection occasion with a top-ranked time domain position in all PDCCH blind detection occasions. It may be understood that all PDCCH blind detection occasions are all PDCCH blind detection occasions determined by the terminal based on a CORESET configured by a network device and a search space.

For example, FIG. 3 is a schematic diagram of a PDCCH blind detection occasion. In FIG. 3, all PDCCH blind detection occasions are shadow parts in FIG. 3. To be specific, all the PDCCH blind detection occasions include a PDCCH blind detection occasion corresponding to a CORESET 1, a PDCCH blind detection occasion corresponding to a CORESET 2, and a PDCCH blind detection occasion corresponding to a CORESET 3 in the figure. A time domain length occupied by the PDCCH blind detection occasion corresponding to the CORESET 1 includes one symbol, and the PDCCH blind detection occasion corresponding to the CORESET 1 is located at a time domain position at which a symbol 4 is located, a time domain position at which a symbol 6 is located, and a time domain position at which a symbol 11 is located. A time domain length occupied by the PDCCH blind detection occasion corresponding to the CORESET 2 includes two symbols, and the PDCCH blind detection occasion corresponding to the CORESET 2 is located at time domain positions at which a symbol 1 and a symbol 2 are located and time domain positions at which a symbol 12 and a symbol 13 are located. A time domain length occupied by the PDCCH blind detection occasion corresponding to the CORESET 3 includes three symbols, and the PDCCH blind detection occasion corresponding to the CORESET 3 is located at time domain positions at which a symbol 4 to a symbol 6 are located. Therefore, for the PDCCH blind detection occasion shown in FIG. 3, a start symbol position of a 1^{st} span is a start symbol position of a 1^{st} PDCCH blind detection occasion in the blind detection occasion corresponding to the CORESET 2, namely, the position of the symbol 1.

S1.2: The terminal may determine a length of the 1^{st} span.

In a possible implementation, the terminal determines a smallest Y in at least one parameter combination reported to the network device, and determines a maximum quantity of symbols in a quantity of symbols occupied by a PDCCH, in time domain, that is indicated by the CORESET configured by the network device, where the length of the 1^{st} span is a maximum value of the two values.

For example, the CORESET configuration shown in FIG. 3 is used as an example. The network device configures the CORESET 1, the CORESET 2, and the CORESET 3, a quantity of symbols occupied by a PDCCH indicated by the CORESET 1 in time domain is 1, a quantity of symbols occupied by a PDCCH indicated by the CORESET 2 in time domain is 2, and a quantity of symbols occupied by a PDCCH indicated by the CORESET 3 in time domain is 3. Therefore, a maximum quantity of symbols in quantities of symbols occupied by the PDCCHs, in time domain, that are indicated by the CORESETs configured by the network device is 3. If a smallest value of Y in the at least one parameter combination reported by the terminal to the network device is 2, the length of the 1^{st} span is three symbols, that is, the 1^{st} span is located at time domain positions at which the symbol 1 to the symbol 3 are located.

S1.3: The terminal continues to determine a start symbol position and a length of a 2^{nd} span.

The start symbol position of the 2^{nd} span is a start symbol position of a PDCCH blind detection occasion with a top-ranked time domain position in time domain positions after the time domain position of the 1^{st} span. A schematic diagram of a PDCCH blind detection occasion shown in FIG. 3 is used as an example. If the 1^{st} span is located at a symbol 1 to a symbol 3, the start symbol position of the 2^{nd} span is a time domain position at which a symbol 4 is located. The length of the 2^{nd} span is the same as the length of the 1^{st} span.

It may be understood that the terminal may determine a start symbol position and a length of a subsequent span according to S1.3, until there is no PDCCH blind detection occasion at a time domain position after a determined time domain position of a specific span. For example, a start symbol position of a 3^{rd} span is a start symbol position of a PDCCH blind detection occasion with a top-ranked time domain position in time domain positions after the time domain position of the 2^{nd} span. A length of the 3^{rd} span is the same as the length of the 1^{st} span. If there is no PDCCH blind detection occasion at a time domain position after the time domain position of the 3^{rd} span, the terminal stops determining the time domain position of the span. If there is a PDCCH blind detection occasion at a time domain position after the time domain position of the 3^{rd} span, the terminal continues to determine a start symbol position and a length of a 4^{th} span.

It should be noted that a span does not cross a slot boundary. If a quantity of symbols between a start symbol of a last span in a slot and the slot boundary is greater than or equal to the length of the 1^{st} span, the last span is a span that uses the start symbol of the last span as a start position and whose length is the length of the 1^{st} span. If the quantity of symbols between the start symbol of the last span in the slot and the slot boundary is less than a length of the 1^{st} span, the last span is a span that uses the start symbol of the last span as a start position and uses the slot boundary as an end position. In this case, a length of the last span is less than the length of the 1^{st} span.

For example, the CORESET configuration shown in FIG. 3 is used as an example. If the smallest value of Y in the at least one parameter combination reported by the terminal to the network device is 2, three spans may be determined according to the foregoing method, and a length of each span is three symbols. A 1^{st} span includes the symbol 1 to the symbol 3, a 2^{nd} span includes the symbol 4 to the symbol 6, and a 3^{rd} span includes the symbol 11 to the symbol 13. Optionally, for each slot, patterns of the spans may be the same. In other words, each slot may include three spans, a length of each span is three symbols, a 1^{st} span includes the symbol 1 to the symbol 3, a 2^{nd} span includes the symbol 4 to the symbol 6, and a 3^{rd} span includes the symbol 11 to the symbol 13.

In a possible implementation, after determining the pattern of the span, the terminal may determine a PDCCH blind detection capability in one span.

In a possible design, if the terminal reports one parameter (X, Y), and an interval between start symbols of any two spans in a finally determined span is greater than X, the PDCCH blind detection capability in the span may be determined based on a PDCCH blind detection capability corresponding to (X, Y). In other words, the PDCCH blind detection capability in the span may be determined according to Table 1 and/or Table 2.

In another possible design, if the terminal reports a plurality of parameters (X, Y), (X, Y) that satisfies a requirement may be determined in the plurality of parameters (X, Y), and the PDCCH blind detection capability in the span is determined based on a maximum value of the PDCCH blind detection capability corresponding to (X, Y) that satisfies the requirement. X in (X, Y) that satisfies the requirement is less than the interval between the start symbols of any two spans in the span determined by the terminal. In other words, the maximum value of the PDCCH blind detection capability corresponding to (X, Y) that satisfies the requirement may be determined according to Table 1 and/or Table 2, and the maximum value is determined as the PDCCH blind detection capability in the span.

For example, the terminal reports (7, 3), (4, 3), and (2, 2), and a smallest value of the interval between the start symbols of any two spans in the finally determined span is five symbols. It may be learned that 4 and 2 are less than 5, but 7 is greater than 5. Therefore, (X, Y) that satisfies the requirement is (4, 3) and (2, 2). The terminal may determine the PDCCH blind detection capability in the span based on a maximum value of the PDCCH blind detection capability corresponding to (4, 3) and a blind detection capability corresponding to (2, 2). For example, if *µ* is 0, for (4, 3), ${M}_{PDCCH}^{max \left(4, 3\right) , 0}$ is 28, and ${C}_{PDCCH}^{max \left(4, 3\right) , 0}$ is 36; and for (2, 2), ${M}_{PDCCH}^{max \left(2, 2\right) , 0}$ is 14, and ${C}_{PDCCH}^{max \left(2, 2\right) , 0}$ is 18. In this case, the terminal may determine the PDCCH blind detection capability in the span based on ${M}_{PDCCH}^{max \left(4, 3\right) , 0}$ and ${C}_{PDCCH}^{max \left(4, 3\right) , 0}$.

The foregoing describes the method for determining the PDCCH blind detection capability in the span, and the following describes a method for determining a PDCCH blind detection capability in a slot.

As described above, a PDCCH blind detection capability in one slot may indicate a maximum quantity of times that the terminal can detect a candidate PDCCH in one slot (which is referred to as a maximum quantity of detection times in the slot), and/or a maximum quantity of non-overlapped CCEs of the terminal in one slot (which is referred to as a maximum quantity of non-overlapped CCEs in the slot). Optionally, the maximum quantity of non-overlapped CCEs is a maximum quantity of non-overlapped CCEs on which channel estimation is performed when the terminal performs blind detection.

At different subcarrier spacings, the maximum quantity of detection times in the slot may be different from the maximum quantity of non-overlapped CCEs in the slot. Specifically, these may be shown in Table 3 and Table 4.

**Table 3**

| *µ* | ${M}_{PDCCH}^{max , slot , μ}$ |
|---|---|
| 0 | 44 |
| 1 | 36 |
| 2 | 22 |
| 3 | 20 |

In Table 3, when *µ* is 0, it may indicate that the subcarrier spacing is 15 kHz; when *µ* is 1, it may indicate that the subcarrier spacing is 30 kHz; when *µ* is 2, it may indicate that the subcarrier spacing is 60 kHz; or when *µ* is 3, it may indicate that the subcarrier spacing is 120 kHz. ${M}_{PDCCH}^{max , slot , μ}$ is a maximum quantity of candidate PDCCHs (Maximum number of monitored PDCCH candidates per slot and per serving cell) on which blind detection is performed in one slot when the subcarrier spacing is 2*^{µ}*·15 kHz. Table 3 shows that when *µ* is 0, ${M}_{PDCCH}^{max , slot , μ}$ is 44; when *µ* is 1, ${M}_{PDCCH}^{max , slot , μ}$ is 36; when *µ* is 2, ${M}_{PDCCH}^{max , slot , μ}$ is 22; or when *µ* is 3, ${M}_{PDCCH}^{max , slot , μ}$ is 20.

**Table 4**

| *µ* | ${C}_{PDCCH}^{max , slot , μ}$ |
|---|---|
| 0 | 56 |
| 1 | 56 |
| 2 | 48 |
| 3 | 32 |

In Table 4, ${C}_{PDCCH}^{max , slot , μ}$ is a maximum quantity (Maximum number of non-overlapped CCEs per slot and per serving cell) of non-overlapped CCEs in one slot when the subcarrier spacing is 2*^{µ}*·15 kHz. Table 4 shows that when *µ* is 0 or 1, ${C}_{PDCCH}^{max , slot , μ}$ is 56; when *µ* is 2, ${C}_{PDCCH}^{max , slot , μ}$ is 48; or when *µ* is 3, ${C}_{PDCCH}^{max , slot , μ}$ is 32.

It may be understood that Table 3 and Table 4 are merely used to describe the introduced examples, and do not limit the protection scope of this application.

It should be noted that Table 1 and Table 2 show PDCCH blind detection capabilities when a time unit is a span in different parameter combinations and at different subcarrier spacings, and Table 3 and Table 4 show PDCCH blind detection capabilities when a time unit is a slot at different subcarrier spacings. However, during specific application, the PDCCH blind detection capability (for example, the PDCCH blind detection capability in the span or the PDCCH blind detection capability in the slot) in the time unit is not directly obtained through table querying, but needs to be obtained through calculation. The following provides detailed descriptions.

In a possible implementation, the terminal may group cells based on the subcarrier spacing, denoted as ${N}_{cells , 0}^{DL , μ}$ or ${N}_{cells , 1}^{DL , μ}$. A meaning of *µ* may be as described above. ${N}_{cells , 0}^{DL , μ}$ or ${N}_{cells , 1}^{DL , μ}$ may indicate a quantity of cells that can be scheduled by a primary scheduling cell when a subcarrier spacing is 2*^{µ}*·15 kHz, or a quantity of all scheduled cells corresponding to a case that the subcarrier spacing of the primary scheduling cell is 2*^{µ}*·15 kHz.

The primary scheduling cell is a configured cell that can send DCI, or a cell that can schedule the primary scheduling cell or another cell, or a cell that is allowed to send DCI, or a cell that needs to be detected by the terminal (where the terminal needs to detect whether the cell has DCI), or a cell that carries DCI, or a cell that can carry DCI. The scheduled cell is a cell scheduled by the primary scheduling cell, or a cell scheduled by the scheduled cell or another cell, or a cell that is indicated by the DCI to perform data transmission. For example, the network device may send the DCI in the primary scheduling cell, and the DCI may be used to schedule data transmission in the scheduled cell. ${N}_{cells , 0}^{DL , μ}$ or ${N}_{cells , 1}^{DL , μ}$ has the following difference: In a cell set indicated by ${N}_{cells , 0}^{DL , μ}$ (for example, a cell set that can be scheduled by the primary scheduling cell when the subcarrier spacing is 2*^{µ}*·15 kHz), no coresetPoolIndex is configured in a CORESET associated with all cells, or all coresetPoolIndexes are the same. That no coresetPoolIndex is configured in a CORESET associated with all cells, or all coresetPoolIndexes are the same may be understood as that the CORESET associated with all the cells is included in one CORESET group. In a cell set indicates by ${N}_{cells , 1}^{DL , μ}$ (for example, a cell set that can be scheduled by the primary scheduling cell when the subcarrier spacing is 2*^{µ}*·15 kHz), a CORESET associated with all cells has one of the following two cases: (1) Some CORESETs are not associated with a coresetPoolIndex, and a coresetPoolIndex associated with remaining COERSETs is 1. (2) A coresetPoolIndex associated with some CORESETs is 0, and a coresetPoolIndex associated with remaining CORESETs is 1. For descriptions of the coresetPoolIndex, refer to descriptions corresponding to the foregoing descriptions of the CORESET.

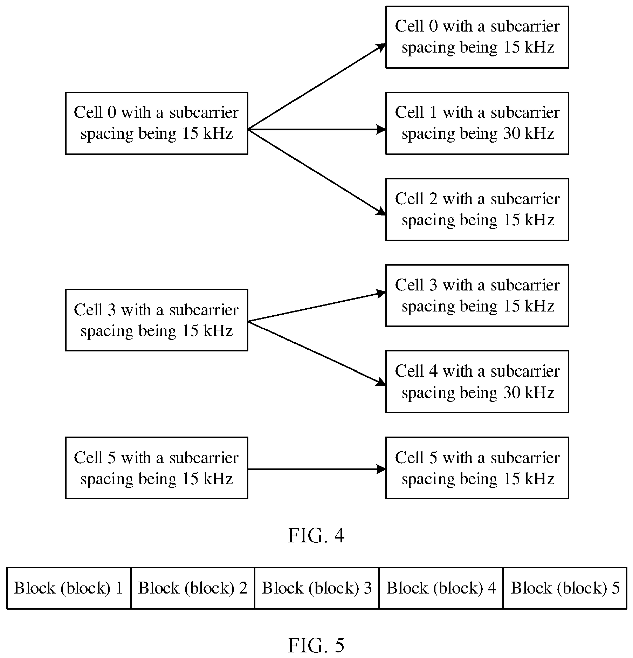

For example, a schematic diagram of cross-carrier scheduling shown in FIG. 4 is used as an example to describe a process of determining ${N}_{cells , 0}^{DL , μ}$. In FIG. 4, there are six cells: a cell 0 to a cell 5 respectively, subcarrier spacings of the cell 0, the cell 2, the cell 3, and the cell 5 are 15 kHz (that is, *µ* = 0), and subcarrier spacings of the cell 1 and the cell 4 are 15 kHz (that is, *µ* = 1). Cells that can be scheduled by the cell 0 include the cell 0, the cell 1, and the cell 2. Cells that can be scheduled by the cell 3 include the cell 3 and the cell 4. A cell that can be scheduled by the cell 5 includes the cell 5. It may be seen that, in FIG. 4, primary scheduling cells are respectively the cell 0, the cell 3, and the cell 5, and ${N}_{cells , 0}^{DL , 0} = 3 + 2 + 1 = 6$,

It may be understood that, after determining ${N}_{cells , 0}^{DL , μ}$ and ${N}_{cells , 1}^{DL , μ}$, the terminal may determine a blind detection capability of the terminal in the primary scheduling cell based on ${N}_{cells , 0}^{DL , μ}$ and ${N}_{cells , 1}^{DL , μ}$. The following provides detailed descriptions.

In a possible implementation, ${\sum }_{μ = 0}^{3} \left({N}_{cells , 0}^{DL , μ}+{γN}_{cells , 1}^{DL , μ}\right) \leq {N}_{cells}^{cap}$, where *γ* is a constant, and may be reported by the terminal to the network device, or indicated by the network device, or protocol-predefined, and ${N}_{cells}^{cap}$ is a constant, and may be reported by the terminal to the network device, or indicated by the network device, or protocol-predefined. This is not limited. Therefore, the blind detection capability of the terminal in the primary scheduling cell is specified as follows. For details, refer to (1) to (3) below:
(1) For a cell scheduled by a primary scheduling cell in ${N}_{cells , 0}^{DL , μ}$, a maximum quantity ${M}_{PDCCH}^{total , slot , μ}$ of detection times in the time unit satisfies the formula: ${M}_{PDCCH}^{total , slot , μ} = {M}_{PDCCH}^{max , slot , μ}$, and a maximum quantity ${C}_{PDCCH}^{total , slot , μ}$ of non-overlapped CCEs in the time unit satisfies the formula: ${C}_{PDCCH}^{total , slot , μ} = {C}_{PDCCH}^{max , slot , μ}$. ${M}_{PDCCH}^{max , slot , μ}$ may be obtained by querying Table 1 or Table 3, and ${C}_{PDCCH}^{max , slot , μ}$ may be obtained by querying Table 2 or Table 4. For example, if the time unit is a span, ${M}_{PDCCH}^{max , slot , μ}$ may be obtained by querying Table 1, and ${C}_{PDCCH}^{max , slot , μ}$ may be obtained by querying Table 2; or if the time unit is a slot, ${M}_{PDCCH}^{max , slot , μ}$ may be obtained by querying Table 3, and ${C}_{PDCCH}^{max , slot , μ}$ may be obtained by querying Table 4.
(2) For a cell scheduled by a primary scheduling cell in ${N}_{cells , 1}^{DL , μ}$, a maximum quantity ${M}_{PDCCH}^{total , slot , μ}$ of detection times in the time unit satisfies the formula: ${M}_{PDCCH}^{total , slot , μ} = {γM}_{PDCCH}^{max , slot , μ}$, and a maximum quantity ${C}_{PDCCH}^{total , slot , μ}$ of non-overlapped CCEs in the time unit satisfies the formula: ${C}_{PDCCH}^{total , slot , μ} = {γC}_{PDCCH}^{max , slot , μ}$*.*
(3) For a cell scheduled by a primary scheduling cell in ${N}_{cells , 1}^{DL , μ}$, a maximum quantity of detection times in a total time unit of CORESETs with a same coresetPoolIndex is ${M}_{PDCCH}^{max , slot , μ}$, and a maximum quantity of non-overlapped CCEs in the total time unit of the CORESETs with the same coresetPoolIndex is ${C}_{PDCCH}^{max , slot , μ}$.

A difference between (2) and (3) described above is as follows: If the cell 0 belongs to a cell set represented by ${N}_{cells , 1}^{DL , μ}$, and the cell 0 is configured with three CORESETs, which are respectively a CORESET 0, a CORESET 1, and a CORESET 2, where coresetPoolIndexes of the CORESET 0 and the CORESET 1 are 0, and a coresetPoolIndex of the CORESET 2 is 1, (2) described above describes a maximum quantity of detection times in a time unit corresponding to a sum of all CORESETs, and a maximum quantity of non-overlapped CCEs in the time unit corresponding to the sum of all the CORESETs; and (3) described above describes a maximum quantity of detection times in a time unit corresponding to a sum of the CORESET 0 and the CORESET 1, a maximum quantity of non-overlapped CCEs in the time unit corresponding to the sum of the CORESET 0 and the CORESET 1, a maximum quantity of detection times in a time unit corresponding to the CORESET 2, and a maximum quantity of non-overlapped CCEs in the time unit. It may be understood that a same coresetPoolIndex may be considered as scheduling of a TRP. In other words, (3) described above limits the scheduling of the single TRP.

For the cell scheduled by the primary scheduling cell in ${N}_{cells , 0}^{DL , μ}$, the maximum quantity of detection times in the time unit is a smaller value in ${M}_{PDCCH}^{max , slot , μ}$ and ${M}_{PDCCH}^{total , slot , μ}$, that is, $min \left({M}_{PDCCH}^{max , slot , μ}, {M}_{PDCCH}^{total , slot , μ}\right)$; and the maximum quantity of non-overlapped CCEs in the time unit of the primary scheduling cell is a smaller value in ${C}_{PDCCH}^{max , slot , μ}$ and ${C}_{PDCCH}^{total , slot , μ}$, that is, $min \left({C}_{PDCCH}^{max , slot , μ}, {C}_{PDCCH}^{total , slot , μ}\right)$.

For the cell scheduled by the primary scheduling cell in ${N}_{cells , 1}^{DL , μ}$, the maximum quantity of detection times in the time unit is a smaller value in ${γM}_{PDCCH}^{max , slot , μ}$ and ${M}_{PDCCH}^{total , slot , μ}$, that is, $min \left({γM}_{PDCCH}^{max , slot , μ}, {M}_{PDCCH}^{total , slot , μ}\right)$; and the maximum quantity of non-overlapped CCEs in the time unit of the primary scheduling cell is a smaller value in ${γC}_{PDCCH}^{max , slot , μ}$ and ${C}_{PDCCH}^{total , slot , μ}$, that is, $min \left({γC}_{PDCCH}^{max , slot , μ}, {C}_{PDCCH}^{total , slot , μ}\right)$.

For the cell scheduled by the primary scheduling cell in ${N}_{cells , 1}^{DL , μ}$, the maximum quantity of detection times in the total time unit of the CORESETs with the same coresetPoolIndex is a smaller value in ${M}_{PDCCH}^{max , slot , μ}$ and ${M}_{PDCCH}^{total , slot , μ}$, that is, $min \left({M}_{PDCCH}^{max , slot , μ}, {M}_{PDCCH}^{total , slot , μ}\right)$; and the maximum quantity of non-overlapped CCEs in the total time unit of the CORESETs with the same coresetPoolIndex is a smaller value in ${C}_{PDCCH}^{max , slot , μ}$ and ${C}_{PDCCH}^{total , slot , μ}$, that is, $min \left({C}_{PDCCH}^{max , slot , μ}, {C}_{PDCCH}^{total , slot , μ}\right)$.

In another possible implementation, if ${\sum }_{μ = 0}^{3} \left({N}_{cells , 0}^{DL , μ}+{γN}_{cells , 1}^{DL , μ}\right) > {N}_{cells}^{cap}$, the blind detection capability of the terminal in the primary scheduling cell has the following stipulation: For any primary scheduling cell, the maximum quantity ${M}_{PDCCH}^{total , slot , μ}$ of detection times in the time unit satisfies the ormula: ${M}_{PDCCH}^{total , slot , μ} = \left⌊{N}_{cells}^{cap}{M}_{PDCCH}^{max , slot , μ}\left({N}_{cells , 0}^{DL , μ}+{γN}_{cells , 1}^{DL , μ}\right)/{\sum }_{j = 0}^{3} \left({N}_{cells , 0}^{DL , j}+{γN}_{cells , 1}^{DL , j}\right)\right⌋$, and the maximum quantity ${C}_{PDCCH}^{total , slot , μ}$ of non-overlapped CCEs in the time unit satisfies the formula: ${C}_{PDCCH}^{total , slot , μ} = \left⌊{N}_{cells}^{cap}{C}_{PDCCH}^{max , slot , μ}\left({N}_{cells , 0}^{DL , μ}+{γN}_{cells , 1}^{DL , μ}\right)/{\sum }_{j = 0}^{3} \left({N}_{cells , 0}^{DL , j}+{γN}_{cells , 1}^{DL , j}\right)\right⌋$. ${M}_{PDCCH}^{max , slot , μ}$ may be obtained by querying Table 1 or Table 3, and ${C}_{PDCCH}^{max , slot , μ}$ may be obtained by querying Table 2 or Table 4. The PDCCH blind detection capability in the time unit may be obtained in the following manners:

For the cell scheduled by the primary scheduling cell in ${N}_{cells , 0}^{DL , μ}$, the maximum quantity of detection times in the time unit is a smaller value in ${M}_{PDCCH}^{max , slot , μ}$ and ${M}_{PDCCH}^{total , slot , μ}$, that is, $min \left({M}_{PDCCH}^{max , slot , μ}, {M}_{PDCCH}^{total , slot , μ}\right)$; and the maximum quantity of non-overlapped CCEs in the time unit of the primary scheduling cell is a smaller value in ${C}_{PDCCH}^{max , slot , μ}$ and ${C}_{PDCCH}^{total , slot , μ}$, that is, $min \left({C}_{PDCCH}^{max , slot , μ}, {C}_{PDCCH}^{total , slot , μ}\right)$.

For the cell scheduled by the primary scheduling cell in ${N}_{cells , 1}^{DL , μ}$, the maximum quantity of detection times in the time unit is a smaller value in ${γM}_{PDCCH}^{max , slot , μ}$ and ${M}_{PDCCH}^{total , slot , μ}$, that is, $min \left({γM}_{PDCCH}^{max , slot , μ}, {M}_{PDCCH}^{total , slot , μ}\right)$; and the maximum quantity of non-overlapped CCEs in the time unit of the primary scheduling cell is a smaller value in ${γC}_{PDCCH}^{max , slot , μ}$ and ${C}_{PDCCH}^{total , slot , μ}$, that is, $min \left({γC}_{PDCCH}^{max , slot , μ}, {C}_{PDCCH}^{total , slot , μ}\right)$.

For the cell scheduled by the primary scheduling cell in ${N}_{cells , 1}^{DL , μ}$, the maximum quantity of detection times in the total time unit of the CORESETs with the same coresetPoolIndex is a smaller value in ${M}_{PDCCH}^{max , slot , μ}$ and ${M}_{PDCCH}^{total , slot , μ}$, that is, $min \left({M}_{PDCCH}^{max , slot , μ}, {M}_{PDCCH}^{total , slot , μ}\right)$; and the maximum quantity of non-overlapped CCEs in the total time unit of the CORESETs with the same coresetPoolIndex is a smaller value in ${C}_{PDCCH}^{max , slot , μ}$ and ${C}_{PDCCH}^{total , slot , μ}$, that is, $min \left({C}_{PDCCH}^{max , slot , μ}, {C}_{PDCCH}^{total , slot , μ}\right)$.

It may be understood that ${N}_{cells , 0}^{DL , μ}$ and ${N}_{cells , 1}^{DL , μ}$ correspond to different scenarios. ${N}_{cells , 0}^{DL , μ}$ corresponds to a single-TRP scenario, and ${N}_{cells , 1}^{DL , μ}$ corresponds to a multi-TRP scenario. For brevity of description, in the following embodiments of this application, ${N}_{cells , 0}^{DL , μ}$ is used as an example for description.

It may be understood that both the terminal and the network device may determine the PDCCH blind detection capability in the time unit by using the foregoing method. Subsequently, the terminal may detect the PDCCH based on the PDCCH blind detection capability in the determined time unit, that is, the terminal performs blind detection based on the determined blind detection capability in the time unit.

It may be understood that, in a blind detection process of the terminal, the maximum quantity of detection times in the time unit is not greater than the maximum quantity of detection times that is indicated by the PDCCH blind detection capability in the time unit and that is determined by the terminal, and the maximum quantity of non-overlapped CCEs in the time unit is not greater than the maximum quantity of non-overlapped CCEs that is indicated by the PDCCH blind detection capability in the time unit and that is determined by the terminal. In other words, in a process of performing blind detection by the terminal, if one of a quantity of detection times for performing blind detection and a quantity of non-overlapped CCEs occupied by a candidate PDCCH for performing blind detection reaches a corresponding maximum value, the terminal stops blind detection. The following describes a process in which the terminal performs blind detection based on the PDCCH blind detection capability in the time unit. For details, refer to S2.1 to S2.3 described below.

S2.1: The terminal determines a PDCCH blind detection occasion, namely, a time domain position of PDCCH blind detection. Specifically, reference may be made to the foregoing descriptions of the search space. Details are not described herein.

S2.2: The terminal determines a position of a candidate PDCCH, namely, an identifier of a CCE occupied by the candidate PDCCH.

In a possible implementation, an identifier of a CCE occupied by an *m_{s,n_{CI}}* ^{th} candidate PDCCH at an aggregation level L may be determined based on an aggregation level, a quantity of candidate PDCCHs at the aggregation level, a CORESET p, and a search space s. Specifically, the identifier of the CCE occupied by *m_{s,n_{CI}}* ^{th} candidate PDCCH at the aggregation level L satisfies the formula: $L ⋅ \left\{\left({Y}_{p , {n}_{s , f}^{μ}}+\left⌊\frac{{m}_{s , {n}_{CI} ⋅} {N}_{CCE , p}}{L ⋅ {M}_{s , max}^{\left(L\right)}}\right⌋+{n}_{CI}\right)mod\left⌊{N}_{CCE , p}/L\right⌋\right\} + i$.

L is a value of the aggregation level. For the CSS, ${Y}_{p , {n}_{s , f}^{μ}} = 0$. For the USS, ${Y}_{p , {n}_{s , f}^{μ}} = \left({A}_{p}⋅{Y}_{p , {n}_{s , f}^{μ} - 1}\right) mod D$, and *Y*_{*p,-*1} = *n_{RNTI}* ≠ 0. Wheₙ *p* mod 3 = 0, *Aₚ* =39827. When *p* mod 3 = 1, *Aₚ* =39829. When *p* mod 3 = 2, *Aₚ* =39839. *n_{RNTI}* is a cell radio network temporary identifier (cell radio network temporary identifier, C-RNTI), and D=65537. A value of i ranges from 1 to L-1. *N_{CCE,p}* is a quantity of CCEs in the CORESET p, and labels of the CCEs in the CORESET p start from 0. If a carrier indicator field is configured, *n_{CI}* is a value of the carrier indicator field. Otherwise, for any CSS, *n_{CI}* =0, and ${m}_{s , {n}_{CI}} = 0 , … , {M}_{s , {n}_{CI}}^{\left(L\right)} - 1$, and ${M}_{s , {n}_{CI}}^{\left(L\right)}$ is a configured quantity of candidate PDCCHs detected at the aggregation level L. For the CSS, ${M}_{s , max}^{\left(L\right)} = {M}_{s , 0}^{\left(L\right)}$. For the USS, ${M}_{s , max}^{\left(L\right)}$ is the maximum quantity of candidate PDCCHs in all configured aggregation levels L.

In short, the terminal may determine, based on the foregoing formula, an identifier of a CCE of each candidate PDCCH at the aggregation level L in the CORESET p associated with the search space s. For example, the terminal determines that identifiers of CCEs of four candidate PDCCH positions at an aggregation level 2 are respectively: a CCE 0 and a CCE 1, a CCE 2 and a CCE 3, a CCE 4 and a CCE 5, and a CCE 6 and a CCE 7.

It may be understood that, after determining the positions of the candidate PDCCHs, the terminal may perform PDCCH blind detection on these positions. As described above, when performing PDCCH blind detection, the terminal needs to attempt to decode the DCI, and needs to know channel information for decoding. Therefore, before attempting to decode, the terminal further needs to perform channel estimation on the CCE at the candidate PDCCH position. If a plurality of candidate PDCCH positions occupy a same CCE, a channel estimation result at the CCE positions may be reused, and channel estimation does not need to be performed on the CCE each time.

S2.3: The terminal allocates the quantity of blind detection times, so that the maximum quantity of times for performing PDCCH blind detection by the terminal does not exceed the capability of the terminal.

As described above, in the blind detection process of the terminal, the maximum quantity of detection times in the time unit is not greater than the maximum quantity of detection times that is indicated by the PDCCH blind detection capability in the time unit and that is determined by the terminal, and the maximum quantity of non-overlapped CCEs in the time unit is not greater than the maximum quantity of non-overlapped CCEs that is indicated by the PDCCH blind detection capability in the time unit and that is determined by the terminal.

It may be understood that, in the blind detection process of the terminal, to ensure that the maximum quantity of detection times in the time unit is not greater than the maximum quantity of detection times that is indicated by the PDCCH blind detection capability in the time unit and that is determined by the terminal, the terminal may allocate the quantity of blind detection times to each search space. Before allocating the quantity of blind detection times, the terminal may determine a quantity of times that blind detection needs to be performed in each search space, namely, a quantity of candidate PDCCHs that need to be blindly detected in each search space. Specifically, a quantity of CSS blind detection times and a quantity of USS blind detection times are included.

In a possible implementation, after determining a candidate PDCCH position in each search space, the terminal may determine whether each candidate PDCCH position is calculated as one time of blind detection in the search space.

For example, if there are two candidate PDCCHs in a same search space, CCEs occupied by the two candidate PDCCHs are the same, scrambling manners are the same, and quantities of bits of DCI for blind detection are the same, blind detection is performed once at a position of a candidate PDCCH with a smaller candidate position identifier. If there are two search spaces associated with a same CORESET, the two search spaces have two candidate PDCCH positions, CCEs occupied by the two search spaces are the same, scrambling manners are the same, and quantities of bits of DCI for blind detection are the same, blind detection is performed once in a search space with a smaller search space identifier.

In a possible design, the terminal may first allocate a maximum quantity of blind detection times that can be used to perform blind detection to the CSS, and then allocate quantities of remaining blind detection times in ascending order of USS identifiers. If a quantity of candidate PDCCHs that can be allocated to a specific USS is less than a quantity of blind detection times that the USS needs to perform blind detection, blind detection may not be performed in the search space and a search space with a larger identifier.

It may be understood that before allocating the quantity of blind detection times, the terminal may further determine a quantity of non-overlapped CCEs that are in each search space and on which channel estimation needs to be performed. Specifically, the quantity of non-overlapped CCEs of the CSS and the quantity of non-overlapped CCEs of the USS are included.

In a possible implementation, after determining the position of the candidate PDCCH in each search space, that is, the identifier of the CCE, the terminal may determine whether each CCE is calculated as a non-overlapped CCE.

For example, if two candidate PDCCHs are from different CORESETs, or the two candidate PDCCHs have different time domain start symbols, CCEs occupied by the two candidate PDCCHs are non-overlapped CCEs.

In a possible design, the terminal may first allocate the maximum quantity of non-overlapped CCEs to the CSS, and then allocate quantities of remaining non-overlapped CCEs in ascending order of USS identifiers. If a quantity of non-overlapped CCEs that can be allocated to a specific USS is less than a quantity of non-overlapped CCEs that are originally required by the USS, blind detection is no longer performed in the search space and a search space with a larger identifier, to ensure that the maximum quantity of blind detection times and the maximum quantity of non-overlapped CCEs are not exceeded when the terminal performs blind detection in the time unit.

### 6. Group DCI (group DCI)

Generally, one piece of DCI may indicate information to one terminal. The group DCI may jointly send indication information of a plurality of terminals in one piece of DCI. For example, one piece of group DCI may include a plurality of blocks (blocks), and each block may correspond to indication information of one terminal. Before the group DCI is received, each terminal corresponds to one block in the group DCI.

FIG. 5 is a schematic diagram of group DCI. The group DCI shown in FIG. 5 includes a block 1 to a block 5, and each block may correspond to indication information of one terminal.

As described in the background, if a TDD frame structure is used for communication, a transmission delay is high; if an FDD frame structure is used for communication, resource utilization is low; or if a self-contained frame structure is used for communication, DMRS overheads are high, and implementation complexity is also high.

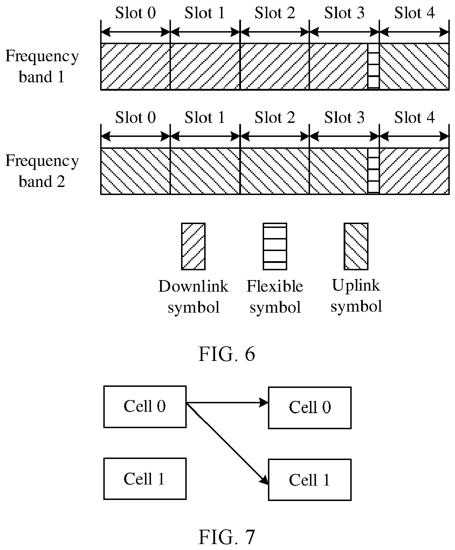

To resolve the foregoing problem, a complementary frame structure is proposed. The complementary frame structure may be applied to different frequency bands, so that frame structures of different frequency bands complement each other. FIG. 6 is a schematic diagram of a complementary frame structure. In FIG. 6, for a frequency band 1, a slot 0 to a slot 2 are downlink slots, a slot 3 includes a downlink symbol and a flexible symbol, and a slot 4 is an uplink slot. For a frequency band 2, a slot 0 to a slot 2 are uplink slots, a slot 3 includes an uplink symbol and a flexible symbol, and a slot 4 is a downlink slot. It may be learned that each frequency band in FIG. 6 is a TDD frame structure. Therefore, the network device may estimate a downlink transmission channel by using an uplink reference signal, to improve spectral efficiency. In addition, the complementary frame structure has both an uplink resource and a downlink resource at some moments. Therefore, when a message is sent, a frequency band may be dynamically scheduled, so that the message may be sent in time, to reduce a delay. For example, if a downlink message arrives in the slot 1, the network device may schedule the frequency band 1 to send the downlink message. In addition, it may be understood that the so-called complementary frame structure does not require that an uplink resource and a downlink resource are available at any moment, provided that an uplink resource and a downlink resource are available at a specific moment.

For example, FIG. 7 is a schematic diagram of cross-carrier scheduling. In FIG. 7, a frequency band corresponding to a cell 0 is different from a frequency band corresponding to a cell 1. Optionally, a carrier corresponding to the cell 0 is also different from a carrier corresponding to the cell 1. The cell 0 may schedule the cell 0, and may also schedule the cell 1. That the cell 0 schedules the cell 1 is cross-carrier scheduling. Scheduling means that the network device may send DCI in the cell 0, to indicate (or schedule) data transmission in the cell 0 or the cell 1. The data transmission may be uplink data transmission, or may be downlink data transmission. This is not limited.

In a possible design, an information element (information element, IE) for cross-carrier scheduling is configured as follows:

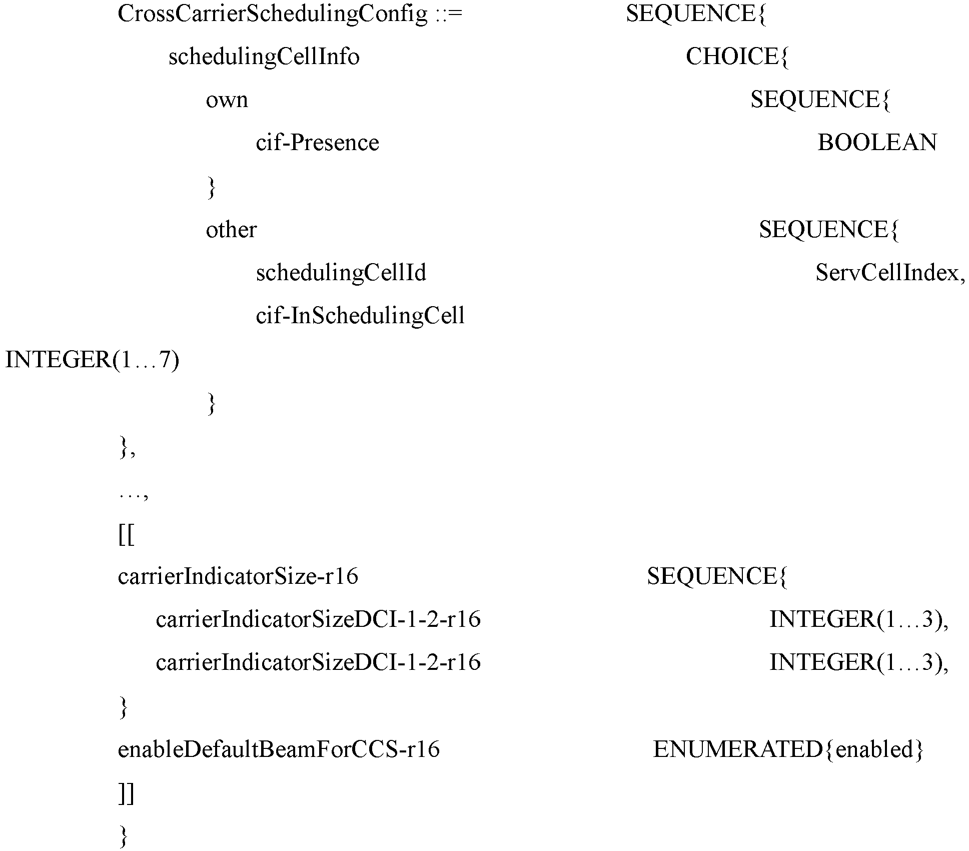

CrossCarrierSchedulingConfig may be used to configure scheduling information of a specific cell. The following uses an example in which the specific cell is a cell 0 for description. A meaning of the foregoing "own" is as follows: If own configuration is configured, it indicates that the cell 0 is scheduled by the cell 0. For example, DCI corresponding to data in the cell 0 is also sent in the cell 0. A meaning of the foregoing "other" is as follows: If "other" is configured, it indicates that the cell 0 is scheduled by using another cell. For example, DCI corresponding to data in the cell 0 is sent in the another cell, and a specific cell in which the DCI is sent is configured by using a ServCellIndex corresponding to a schedulingCellId. In addition, "own" and "other" cannot be configured at the same time. In other words, for a specific cell, the cell is either scheduled by the cell or scheduled by another cell, and cannot be scheduled by the cell or by another cell at the same time. In addition, "other" is configured for a secondary cell (secondary cell, SCell), in other words, the SCell may be configured to be scheduled by another cell. However, a PCell (primary cell, PCell) cannot be scheduled by using another cell, and needs to be scheduled by using the PCell. That is, the PCell cannot be configured with "other".

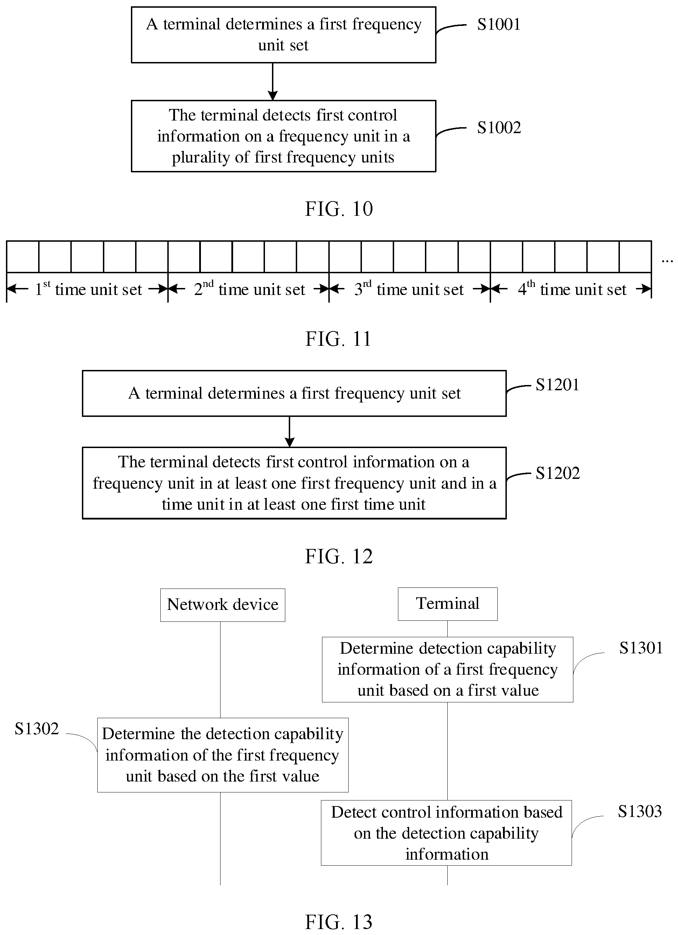

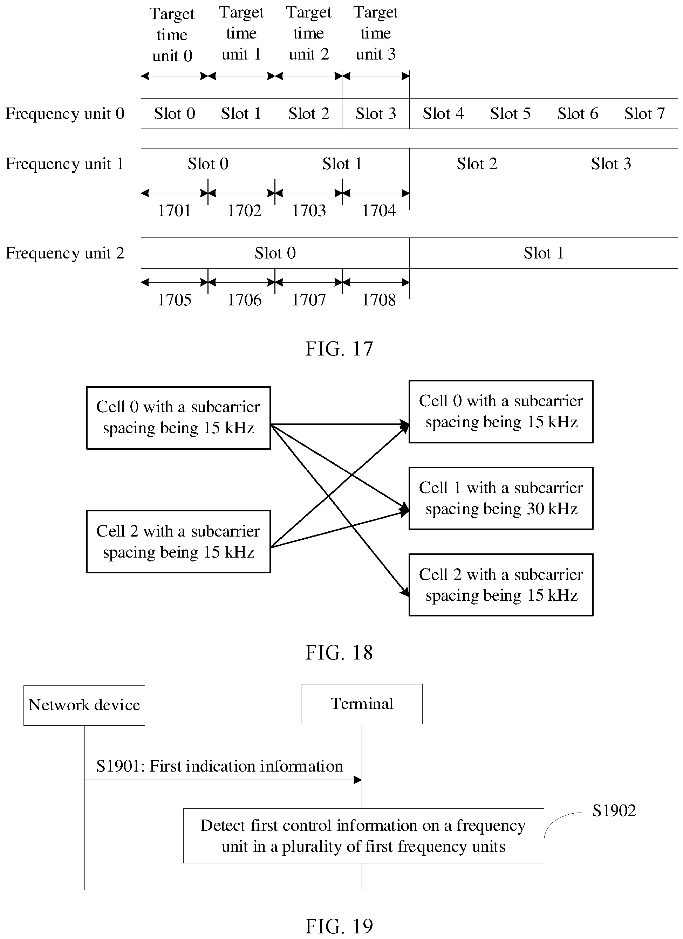

For scheduling described above, there are a large quantity of limitation conditions, so that scheduling is not flexible enough. To resolve a problem that scheduling is not flexible enough, an embodiment of this application provides a communication method. In the method, a network device may send, to a terminal, first indication information used by the terminal to determine a plurality of first frequency units in a first frequency unit set. After receiving the first indication information, the terminal may detect first control information on a frequency unit in the plurality of first frequency units. The first frequency unit is a candidate frequency unit for carrying the first control information, and the first control information may be used to schedule data transmission on a second frequency unit. In the foregoing process, the terminal may determine the plurality of first frequency units in the first frequency unit set, and detect the first control information on the frequency unit in the plurality of first frequency units, so that a frequency resource may be flexibly scheduled. The foregoing method is specifically described in a subsequent method shown in FIG. 10 or FIG. 19. Details are not described herein again.

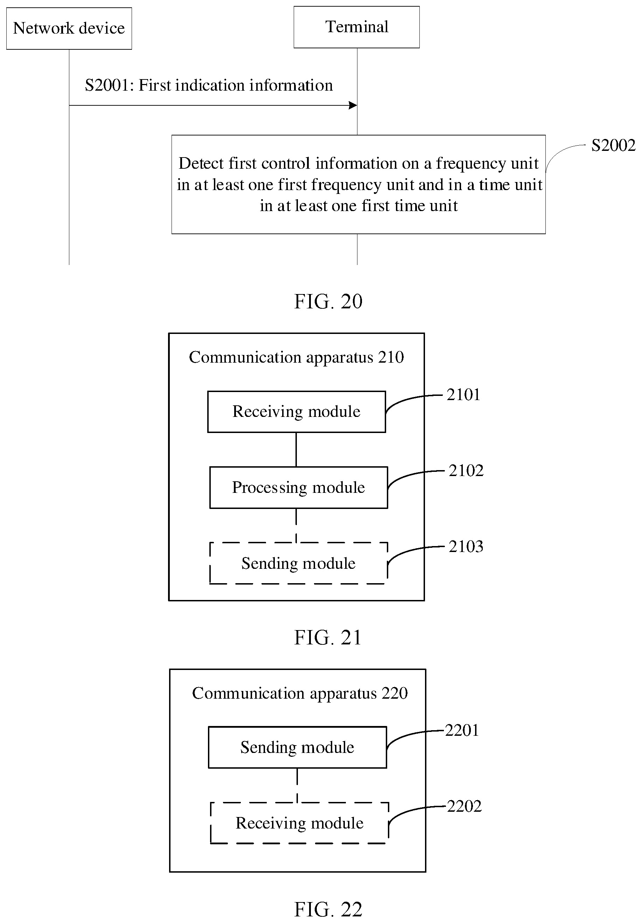

To resolve a problem that scheduling is not flexible enough, an embodiment of this application further provides a communication method. In the method, a network device may send, to a terminal, first indication information used by the terminal to determine at least one first frequency unit in a first frequency unit set. After receiving the first indication information, the terminal may detect first control information on a frequency unit in the at least one first frequency unit and in a time unit in at least one first time unit. The first frequency unit corresponds to the at least one first time unit, and the first time unit is a candidate time unit for detecting the first control information by the terminal. The first frequency unit is a candidate frequency unit for carrying the first control information, and the first control information may be used to schedule data transmission on a second frequency unit. In the foregoing process, the candidate frequency unit (namely, the first frequency unit) that carries the first control information may be configured based on the time unit, so that the frequency unit is flexibly scheduled. The foregoing method is specifically described in a subsequent method shown in FIG. 12 or FIG. 20. Details are not described herein again.

The following describes implementations of embodiments of this application in detail with reference to the accompanying drawings.

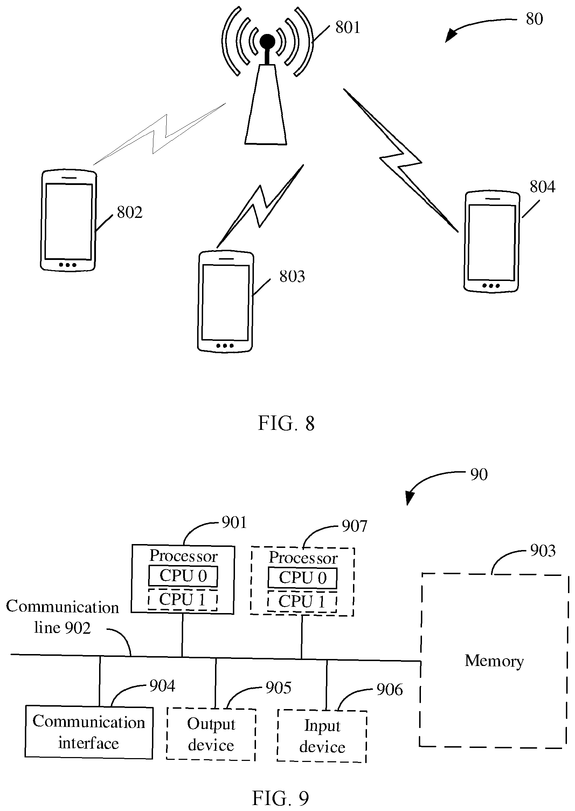

The method provided in embodiments of this application may be used in various communication systems. For example, the communication system may be a long term evolution (long term evolution, LTE) system, a 5th generation (5th generation, 5G) communication system, a wireless fidelity (wireless fidelity, Wi-Fi) system, a 3rd generation partnership project (3rd generation partnership project, 3GPP) related communication system, a future evolved communication system, a system in which a plurality of systems are converged, or the like. This is not limited. 5G may also be referred to as new radio (new radio, NR). The following uses a communication system 80 shown in FIG. 8 as an example, to describe the method provided in embodiments of this application.

FIG. 8 is a schematic diagram of an architecture of the communication system 80 according to an embodiment of this application. In FIG. 8, the communication system 80 may include one or more network devices 801 (where only one network device is shown) and a terminal 802 to a terminal 804 that may communicate with the network device 801. FIG. 8 is merely a schematic diagram, and does not constitute a limitation on an applicable scenario of the technical solutions provided in this application.

In FIG. 8, the network device may provide a wireless access service for the terminal. Specifically, each network device corresponds to one service coverage area. A terminal that enters the area may communicate with the network device through a Uu interface, to receive a wireless access service provided by the network device. Alternatively, the service coverage area may include one or more cells. The terminal and the network device may communicate with each other through a Uu interface link. Uu interface links may be classified into an uplink (uplink, UL) and a downlink (downlink, DL) based on directions of data transmitted through the Uu interface links. Uplink data sent by the terminal to the network device may be transmitted on the UL, and downlink data transmitted by the network device to the terminal may be transmitted on the DL. For example, in FIG. 8, the terminal 803 is located in a coverage area of the network device 801. The network device 801 may send downlink data to the terminal 803 through a DL, and the terminal 803 may send uplink data to the network device 801 through a UL.

The network device in embodiments of this application, for example, the network device 801, may be any device having a wireless transceiver function. The network device includes but is not limited to: an evolved base station (NodeB or eNB or e-NodeB, evolved NodeB) in LTE, a base station (gNodeB or gNB) or a TRP in NR, a subsequently evolved base station after 3GPP, an access node in a Wi-Fi system, a wireless relay node, a wireless backhaul node, and the like. The base station may be a macro base station, a micro base station, a picocell base station, a small cell, a relay station, a balloon station, or the like. A plurality of base stations may support the foregoing networks using a same technology, or may support the foregoing networks using different technologies. The base station may include one or more co-site or non-co-site TRPs. The network device may alternatively be a radio controller in a cloud radio access network (cloud radio access network, CRAN) scenario. Alternatively, the network device may be a central unit (central unit, CU) and/or a distributed unit (distributed unit, DU). The network device may alternatively be a server, a wearable device, a machine type communication device, a vehicle-mounted device, or the like. The following uses an example in which the network device is a base station for description. The plurality of network devices may be base stations of a same type, or may be base stations of different types. The base station may communicate with a terminal, or may communicate with the terminal through a relay station. The terminal may communicate with a plurality of base stations using different technologies. For example, the terminal may communicate with a base station supporting an LTE network, or may communicate with a base station supporting a 5G network, or may support dual connections to a base station in an LTE network and a base station in a 5G network. In embodiments of this application, an apparatus configured to implement a function of a network device may be a network device, or may be an apparatus, for example, a chip system, that can support the network device in implementing the function. The apparatus may be installed in the network device or used in combination with the network device. In embodiments of this application, the chip system may include a chip, or may include a chip and another discrete device. In the method provided in embodiments of this application, that the apparatus configured to implement a function of a network device is a network device is used as an example, to describe the method provided in embodiments of this application.

The terminal in embodiments of this application, for example, the terminal 802, the terminal 803, or the terminal 804, is a device having a wireless transceiver function. The terminal may be deployed on land, including an indoor device, an outdoor device, a handheld device, or a vehicle-mounted device; or may be deployed on water (for example, on a ship); or may be deployed in the air (for example, on a plane, a balloon, and a satellite). The terminal may also be referred to as a terminal device. The terminal device may be UE. The UE includes a handheld device having a wireless communication function, a vehicle-mounted device, a wearable device, or a computing device. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of a terminal may be a terminal, or may be an apparatus, for example, a chip system, that can support the terminal in implementing the function. The apparatus may be installed in the terminal or used in combination with the terminal. In embodiments of this application, the chip system may include a chip, or may include a chip and another discrete device. In the method provided in embodiments of this application, that the apparatus configured to implement a function of a terminal may be a terminal is used as an example, to describe the method provided in embodiments of this application.

By way of an example but not a limitation, the terminal in this application may be a wearable device. The wearable device may also be referred to as a wearable intelligent device, and is a general term of wearable devices, such as glasses, gloves, watches, clothes, and shoes, that are intelligently designed and developed for daily wear by using a wearable technology. The wearable device is a portable device that is directly worn on a body or integrated into clothes or accessories of a user. The wearable device is a hardware device, and implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus only on a specific type of application function and need to collaboratively work with other devices such as smartphones, for example, various intelligent bands or intelligent jewelry for monitoring physical signs.

In this application, the terminal may be a terminal in an internet of things (internet of things, IoT) system. IoT is an important component in development of future information technologies. A main technical feature of IoT is to connect an object to a network by using a communication technology, to implement an intelligent network of human-machine interconnection and thing-thing interconnection. The terminal in this application may be a terminal in machine type communication (machine type communication, MTC). The terminal in this application may be a vehicle-mounted module, a vehicle-mounted module, a vehicle-mounted component, a vehicle-mounted chip, or a vehicle-mounted unit that is built in a vehicle as one or more components or units. The vehicle may implement the method in this application through the vehicle-mounted module, the vehicle-mounted module, the vehicle-mounted component, the vehicle-mounted chip, or the vehicle-mounted unit that is built in the vehicle. Therefore, embodiments of this application may be applied to an internet of vehicles, for example, vehicle to everything (vehicle to everything, V2X), long term evolution vehicle (long term evolution vehicle, LTE-V), and vehicle to vehicle (vehicle to vehicle, V2V).

The communication system 80 shown in FIG. 8 is merely used as an example, but is not intended to limit the technical solutions of this application. A person skilled in the art should understand that in a specific implementation process, the communication system 80 may further include another device, and a quantity of network devices and a quantity of terminals may alternatively be determined based on a specific requirement. This is not limited.

Optionally, each network element or device (for example, the terminal or the network device) in FIG. 8 in embodiments of this application may also be referred to as a communication apparatus, and may be a general-purpose device or a dedicated device. This is not specifically limited in embodiments of this application.

Optionally, a related function of each network element or device in FIG. 8 in embodiments of this application may be implemented by one device, or may be jointly implemented by a plurality of devices, or may be implemented by one or more functional modules in one device. This is not specifically limited in embodiments of this application. It may be understood that the foregoing function may be a network element in a hardware device, or may be a software function running on dedicated hardware, a combination of hardware and software, or a virtualization function instantiated on a platform (for example, a cloud platform).

During specific implementation, each device or network element shown in FIG. 8 may use a composition structure shown in FIG. 9, or include components shown in FIG. 9. FIG. 9 is a schematic diagram of a hardware structure of a communication apparatus that may be used in an embodiment of this application. The communication apparatus 90 includes at least one processor 901 and at least one communication interface 904, and is configured to implement the method provided in embodiments of this application. The communication apparatus 90 may further include a communication line 902 and a memory 903.

The processor 901 may be a general-purpose central processing unit (central processing unit, CPU), a microprocessor, an application-specific integrated circuit (application-specific integrated circuit, ASIC), or one or more integrated circuits configured to control program execution in the solutions in this application.

The communication line 902 may include a path, for example, a bus, for transferring information between the foregoing components.

The communication interface 904 is configured to communicate with another device or a communication network. The communication interface 904 may be any apparatus such as a transceiver, for example, may be an Ethernet interface, a radio access network (radio access network, RAN) interface, a wireless local area network (wireless local area network, WLAN) interface, a transceiver, a pin, a bus, or a transceiver circuit.

The memory 903 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction structure or a data structure and that is accessible to a computer. However, this is not limited herein. The memory may exist independently, and is coupled to the processor 901 through the communication line 902. The memory 903 may alternatively be integrated with the processor 901. The memory provided in embodiments of this application may be usually non-volatile.

The memory 903 is configured to store computer-executable instructions for executing the solutions provided in embodiments of this application, and the processor 901 controls execution. The processor 901 is configured to execute the computer-executable instructions stored in the memory 903, to implement the method provided in embodiments of this application. Alternatively, optionally, in embodiments of this application, the processor 901 may perform processing-related functions in a method provided in the following embodiments of this application, and the communication interface 904 is responsible for communication with another device or a communication network. This is not specifically limited in embodiments of this application.

Optionally, the computer-executable instructions in embodiments of this application may also be referred to as application program code. This is not specifically limited in embodiments of this application.

The coupling in embodiments of this application is an indirect coupling or a communication connection between apparatuses, units, or modules, or may be in an electrical form, a mechanical form, or another form, and is used for information exchange between the apparatuses, the units, or the modules.

In an embodiment, the processor 901 may include one or more CPUs, for example, a CPU 0 and a CPU 1 in FIG. 9.

In an embodiment, the communication apparatus 90 may include a plurality of processors, for example, the processor 901 and a processor 907 in FIG. 9. Each of these processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 90 may further include an output device 905 and/or an input device 906. The output device 905 is coupled to the processor 901, and may display information in a plurality of manners. For example, the output device 905 may be a liquid crystal display (liquid crystal display, LCD), a light emitting diode (light emitting diode, LED) display device, a cathode ray tube (cathode ray tube, CRT) display device, a projector (projector), or the like. The input device 906 is coupled to the processor 901, and may receive an input of a user in a plurality of manners. For example, the input device 906 may be a mouse, a keyboard, a touchscreen device, a sensor device, or the like.

It may be understood that the composition structure shown in FIG. 9 does not constitute a limitation on the communication apparatus. In addition to the components shown in FIG. 9, the communication apparatus may include more or fewer components than those shown in the figure, combine some components, or have different component arrangements.

The following describes, with reference to the accompanying drawings, the communication method provided in embodiments of this application. Network elements in the following embodiments may have components shown in FIG. 9. Details are not described.

It should be noted that names of messages between network elements, names of parameters in the messages, or the like in the following embodiments of this application are merely examples, and there may be other names during specific implementation. This is not specifically limited in embodiments of this application.

It should be noted that, in embodiments of this application, "/" may indicate an "or" relationship between associated objects. For example, A/B may indicate A or B. The term "and/or" may indicate that there are three relationships between associated objects. For example, A and/or B may indicate the following three cases: Only A exists, both A and B exist, and only B exists, where A and B may be singular or plural. In addition, a representation similar to "at least one of A, B, and C" or "at least one of A, B, or C" usually indicates any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the representation, a meaning of the representation may be obtained according to the foregoing rules.

To facilitate description of the technical solutions in embodiments of this application, in embodiments of this application, terms such as "first" and "second" may be used to distinguish between technical features with same or similar functions. The terms such as "first" and "second" do not limit a quantity and an execution sequence, and the terms such as "first" and "second" do not indicate a definite difference. In embodiments of this application, the terms such as "example" or "for example" indicates an example, an illustration, or a description. Any embodiment or design scheme described with "example" or "for example" should not be explained as being more preferred or having more advantages than another embodiment or design scheme. Use of the terms such as "example" or "for example" is intended to present a related concept in a specific manner for ease of understanding.

It should be noted that in embodiments of this application, for a technical feature, "first", "second", "third", "A", "B", "C", and "D" are used to distinguish between technical features in the technical feature, and there is no sequential order or size order between the technical features described by "first", "second", "third", "A", "B", "C", and "D".

It may be understood that a same step or a step or a technical feature having a same function in embodiments of this application may be mutually referenced in different embodiments.

It may be understood that, in embodiments of this application, a terminal and/or a network device may perform some or all of steps in embodiments of this application. The steps are merely examples. In embodiments of this application, other steps or variations of various steps may be further performed. In addition, the steps may be performed in different sequences presented in embodiments of this application, and not all the steps in embodiments of this application need to be performed.

It should be noted that, in embodiments of this application, a time unit is not limited to a time unit corresponding to a cell, but may be a time unit corresponding to any frequency unit. Therefore, all cells in embodiments of this application may be replaced with frequency units. In embodiments of this application, the frequency unit may be a cell, a carrier, a frequency band, a bandwidth part (bandwidth part, BWP), a subband, or the like. This is not limited. Unified descriptions are provided herein, and details are not described below again.

FIG. 10 shows a communication method according to an embodiment of this application. The communication method includes S1001 and S1002.

S1001: A terminal determines a first frequency unit set.

A network device may be the network device 801 in the communication system 80 shown in FIG. 8, and the terminal may be any terminal, for example, the terminal 802, the terminal 803, or the terminal 804, in the communication system 80 shown in FIG. 8.

The first frequency unit set may include a plurality of frequency units. Optionally, the plurality of frequency units are all frequency units configured by the network device for the terminal, or the plurality of frequency units are a subset of all frequency units configured by the network device for the terminal.

Optionally, transmission directions of any two frequency units included in all the frequency units configured by the network device for the terminal in a same time unit are opposite. It may be understood that opposite transmission directions may indicate that in a same time unit, one of any two frequency units is for uplink transmission, and the other frequency unit is for downlink transmission.

Optionally, any two frequency units included in all the frequency units configured by the network device for the terminal have a same transmission direction in a same time unit. It may be understood that a same transmission direction indicates that transmission directions of any two frequency units in a same time unit are both for uplink transmission or downlink transmission.

Optionally, a transmission direction of any frequency unit included in all the frequency units in the time unit is independently configured.

Optionally, the terminal receives indication information A sent by the network device, where the indication information A indicates a transmission direction, in a time unit A, of a frequency unit A included in all the frequency units. The transmission direction may be for uplink transmission or downlink transmission.

Optionally, the terminal further receives indication information B sent by the network device, where the indication information B indicates a transmission direction, in the time unit A, of a frequency unit B included in all the frequency units. The transmission direction may be for uplink transmission or downlink transmission.

In an implementation, the indication information A is configured for the frequency unit A, and the indication information B is configured for the frequency unit B.

In a possible design, if the plurality of frequency units are the subset of all the frequency units configured by the network device for the terminal, the plurality of frequency units are primary scheduling frequency units configured by the network device. In other words, the plurality of frequency units may schedule data transmission on a specific frequency unit or data transmission on specific frequency units. For descriptions of the primary scheduling frequency unit, refer to the foregoing corresponding descriptions of the primary scheduling cell. Details are not described herein. The specific frequency unit may be included in the plurality of frequency units, or may not be included in the plurality of frequency units. The specific frequency units may include all of the plurality of frequency units or a part of the plurality of frequency units, or the specific frequency units may not include the plurality of frequency units.

In another possible design, there is an association relationship between the first frequency unit set and a second frequency unit. It may be understood that the first frequency unit set includes a primary scheduling frequency unit of the second frequency unit. Alternatively, the first frequency unit set is configured for the second frequency unit, and the primary scheduling frequency unit corresponding to the second frequency unit is located in the first frequency unit set. For another example, when the network device configures a plurality of second frequency units for the terminal, frequency units included in the first frequency unit set associated with each second frequency unit may be the same or may be different. Further, first frequency unit sets associated with different second frequency units are independently configured. For example, assuming that the second frequency unit is a cell 0 and a cell 1, a first frequency unit set associated with the cell 0 may include the cell 0, the cell 1, and a cell 2, and a first frequency unit set associated with the cell 1 may include the cell 0 and the cell 2. In this example, a primary scheduling cell corresponding to the cell 0 may be one or more of the cell 0, the cell 1, and the cell 2, and a primary scheduling cell corresponding to the cell 1 may be one or both of the cell 0 and the cell 2.

In an example, the network device may configure the first frequency unit set by using the foregoing IE for configuring cross-carrier scheduling. Specifically, the network device may configure a frequency unit set or a group of frequency unit sets in a schedulingCellId in "other", and the set may be in a form of a list (list). In this way, data transmission on a specific frequency unit may be scheduled on the plurality of frequency units. This improves transmission flexibility.

In a possible implementation, the first frequency unit set may be predefined (for example, protocol-defined), or configured by the network device. For example, the first frequency unit set is configured by the network device. Before S1001, the network device may send third indication information to the terminal. Correspondingly, the terminal may receive the third indication information from the network device. The third indication information may indicate the first frequency unit set. For example, the third indication information includes an identifier of the first frequency unit set, or the third indication information includes an identifier of each frequency unit in the first frequency unit set.

In a possible implementation, the terminal determines the plurality of first frequency units based on the first frequency unit set. The first frequency unit is the primary scheduling frequency unit corresponding to the second frequency unit. For a process in which the terminal determines the plurality of first frequency units based on the first frequency unit set, refer to the following method 1 to method 3.

### Method 1:

In an implementation, the plurality of frequency units included in the first frequency unit set are all primary scheduling frequency units (namely, the first frequency units) of the second frequency unit. The foregoing example is still used for description. In this case, the primary scheduling cells of the cell 0 are the cell 0, the cell 1, and the cell 2. The primary scheduling cells of the cell 1 are the cell 0 and the cell 2.

### Method 2:

In a possible implementation, the terminal determines the plurality of first frequency units in the first frequency unit set based on first indication information.

In the method 2, the following steps may be further included:
The network device sends the first indication information to the terminal. Correspondingly, the terminal receives the first indication information from the network device. The first indication information may be used by the terminal to determine the plurality of first frequency units in the first frequency unit set. In other words, after receiving the first indication information, the terminal may determine the plurality of first frequency units in the first frequency unit set based on the first indication information.

Optionally, the first indication information is carried in radio resource control (radio resource control, RRC) signaling, a media access control control element (media access control control element, MAC-CE), or physical layer signaling. The physical layer signaling may be DCI. The DCI may be carried on a first PDCCH.

It may be understood that the first frequency unit is the primary scheduling frequency unit corresponding to the second frequency unit, or the first frequency unit is a candidate frequency unit for carrying first control information. To be specific, after the terminal determines the plurality of first frequency units in the first frequency unit set based on the first indication information, the terminal knows the candidate frequency unit for carrying the first control information.

Optionally, the candidate frequency unit may be understood as a frequency unit that may carry the first control information. In other words, the candidate frequency unit is a frequency unit that has a possibility to carry the first control information. Specifically, whether to carry the first control information depends on self-implementation of the network device. This is not limited. Alternatively, the candidate frequency unit is a frequency unit on which the network device can send the first control information. Even if the network device finally does not send the first control information on the candidate frequency unit, the terminal needs to detect the first control information on the candidate frequency unit. For another example, the candidate frequency unit is a frequency unit that can be used to carry the first control information.

The first control information may be used to schedule data transmission on the second frequency unit. In other words, the network device may send the first control information on the first frequency unit, to schedule data transmission on the second frequency unit. In an example, the first control information may be DCI or group DCI. The first control information may be carried on a second PDCCH. For descriptions of the group DCI, refer to the foregoing explanations and descriptions of the technical terms. It should be understood that, in time domain, the first PDCCH that carries the first indication information is located before the second PDCCH.

Optionally, the first frequency unit and the second frequency unit may be the same or may be different. In other words, the second frequency unit may be scheduled by the second frequency unit, or may be scheduled by another frequency unit. Alternatively, the first frequency unit may be scheduled by the first frequency unit, or may be scheduled by another frequency unit. Scheduling of the frequency unit is flexible. In an example, if a frequency unit can schedule the frequency unit (where for example, the frequency unit has a time-frequency resource carrying DCI), the first frequency unit set includes the frequency unit. In this case, it may be understood that when the first frequency unit set is configured, the frequency unit is configured to be capable of scheduling the frequency unit.

In another possible implementation, the terminal determines, in the plurality of first frequency units, the candidate frequency unit for carrying the first control information. To be specific, after the terminal determines the plurality of first frequency units in the first frequency unit set based on the first indication information, the terminal may further determine, in the plurality of first frequency units, the candidate frequency unit for carrying the first control information.

In an example, if the plurality of first frequency units include the second frequency unit, the candidate frequency unit for carrying the first control information is the second frequency unit. In other words, in this case, the candidate frequency unit is the second frequency unit. It may be understood that, if the candidate frequency unit that is determined by the terminal and that is for carrying the first control information is the second frequency unit, when the first control information needs to be sent, the network device sends the first control information on the second frequency unit. Therefore, the terminal may detect the first control information on the second frequency unit, and does not need to detect the first control information on another frequency unit. In this way, complexity of blind detection performed by the terminal may be reduced without affecting flexibility of frequency unit scheduling.

Further, if the second frequency unit is the candidate frequency unit, the first indication information may include indication information of the second frequency unit, to indicate the second frequency unit. In this case, if the plurality of first frequency units include the second frequency unit, and after the terminal determines the second frequency unit by using the indication information of the second frequency unit, the primary scheduling frequency unit corresponding to the second frequency unit is also determined.

The frequency unit (for example, the first frequency unit or the second frequency unit) in this embodiment of this application may be a cell, a carrier, a frequency band, a BWP, or a subband. Unified descriptions are provided herein, and details are not described below again.

In a possible implementation, the first indication information may have any one of the following cases 1 to 5.

Case 1: The first indication information may indicate a correspondence between the first frequency unit and a first time unit.

The first time unit is a candidate time unit for detecting the first control information by the terminal. The first time unit may also be described as a candidate time unit for carrying the first control information, or a candidate time unit for sending the first control information by the network device. The candidate time unit may be understood as a time unit that may carry the first control information. In other words, the candidate time unit is a time unit that has a possibility to carry the first control information. Specifically, whether to carry the first control information depends on indicator implementation of the network device. This is not limited. Alternatively, the candidate time unit is a time unit in which the network device can send the first control information. Even if the network device finally does not send the first control information in the candidate time unit, the terminal needs to detect the first control information in the candidate time unit. Alternatively, the candidate time unit is a time unit that can carry the first control information. For another example, the candidate time unit is a time unit for detecting the first control information by the terminal.

The time unit (for example, the first time unit, the candidate time unit, or a target time unit) in this embodiment of this application may be a time domain unit used for signal transmission, and may include a radio frame (radio frame), a subframe (subframe), a slot, a mini-slot (mini-slot), at least one orthogonal frequency division multiplexing (orthogonal frequency division multiplexing, OFDM) symbol, a span, or the like. Unified descriptions are provided herein, and details are not described below again.

In a possible design, the first indication information includes an index of at least one first frequency unit. The index of the first frequency unit corresponds to the first time unit. Optionally, the index of the first frequency unit is an index of the first frequency unit in the first frequency unit set. For another example, the index of the first frequency unit may be an identifier of the first frequency unit. In an implementation, the index of the first frequency unit identifies the first frequency unit.

For example, an example in which the first frequency unit set includes a frequency unit 1, a frequency unit 2, a frequency unit 3, a frequency unit 4, and a frequency unit 5, and the first indication information includes indexes 2, 1, 3, 4, and 5 is used for description. If the index 2 corresponds to a 1^{st} time unit, the index 1 corresponds to a 2^{nd} time unit, the index 3 corresponds to a 3^{rd} time unit, the index 4 corresponds to a 4^{th} time unit, and the index 5 corresponds to a 5^{th} time unit, a candidate frequency unit for carrying the first control information in the 1^{st} time unit is a frequency unit whose index is 2, namely, the frequency unit 2; a candidate frequency unit for carrying the first control information in the 2^{nd} time unit is a frequency unit whose index is 1, namely, the frequency unit 1; a candidate frequency unit for carrying the first control information in the 3^{rd} time unit is a frequency unit whose index is 3, namely, the frequency unit 3; a candidate frequency unit for carrying the first control information in the 4^{th} time unit is a frequency unit whose index is 4, namely, the frequency unit 4; and a candidate frequency unit for carrying the first control information in the 5^{th} time unit is a frequency unit whose index is 5, namely, the frequency unit 5.

For example, an example in which the first frequency unit set includes a frequency unit 1, a frequency unit 2, a frequency unit 3, a frequency unit 4, and a frequency unit 5, and the first indication information includes {2, 1}, {1, 3}, and {2, 4} is used for description. If the index 2 and the index 1 correspond to a 1^{st} time unit, the index 1 and the index 3 correspond to a 2^{nd} time unit, and the index 2 and the index 4 correspond to a 3^{rd} time unit, candidate frequency units for carrying the first control information in the 1^{st} time unit are a frequency unit whose index is 2 and a frequency unit whose index is 1, namely, the frequency unit 2 and the frequency unit 1; candidate frequency units for carrying the first control information in the 2^{nd} time unit are a frequency unit whose index is 1 and a frequency unit whose index is 3, namely, the frequency unit 1 and the frequency unit 3; and candidate frequency units for carrying the first control information in the 3^{rd} time unit are a frequency unit whose index is 2 and a frequency unit whose index is 4, namely, the frequency unit 2 and the frequency unit 4.

It may be understood that, after receiving the first indication information, the terminal may determine, based on the correspondence between the first frequency unit and the first time unit, the candidate frequency unit corresponding to the first time unit. In this way, a time-frequency position for detecting the first control information may be determined. Subsequently, the terminal may perform blind detection at the determined time-frequency position. The time-frequency position for detecting the first control information includes at least one frequency unit in the plurality of first frequency units and at least one first time unit corresponding to the at least one frequency unit.

For example, in the foregoing example, the terminal determines that the candidate frequency unit for carrying the first control information in the 1^{st} time unit is the frequency unit 1, the candidate frequency unit for carrying the first control information in the 2^{nd} time unit is the frequency unit 2, the candidate frequency unit for carrying the first control information in the 3^{rd} time unit is the frequency unit 3, the candidate frequency unit for carrying the first control information in the 4^{th} time unit is the frequency unit 4, and the candidate frequency unit for carrying the first control information in the 5^{th} time unit is the frequency unit 5. In this way, the time-frequency position for detecting the first control information may be the 1^{st} time unit and the frequency unit 1, and the 2^{nd} time unit and the frequency unit 2, or the time-frequency position for detecting the first control information may be the 2^{nd} time unit and the frequency unit 2, the 4^{th} time unit and the frequency unit 4, and the 5^{th} time unit and the frequency unit 5.

Case 2: The first indication information may indicate a periodicity of the first frequency unit.

In a possible design, the first indication information may include periodicity information of the first frequency unit. The periodicity information of the first frequency unit may indicate the periodicity of the first frequency unit.

It may be understood that a plurality of frequency units in the first frequency unit set may be associated with one periodicity. In other words, the frequency units included in the first frequency unit set have a same periodicity.

For example, an example in which the first frequency unit set includes a frequency unit 1 and a frequency unit 2, and the periodicity included in the first indication information is 5 is used. In a o^{th} time unit, a 5^{th} time unit, a ¹⁰th time unit, ..., and a (5*n)^{th} time unit, a candidate frequency unit for carrying the first control information is the frequency unit 1 and/or the frequency unit 2, where n is a positive integer.

It may be understood that each frequency unit in the first frequency unit set may be associated with one periodicity. Periodicities of different frequency units in the first frequency unit set may be the same or may be different. For example, an example in which the first frequency unit set includes a frequency unit 1 and a frequency unit 2, the first indication information includes a periodicity of the frequency unit 1 and a periodicity of the frequency unit 2, the periodicity of the frequency unit 1 is 3, and the periodicity of the frequency unit 2 is 5 is used. In a 0^{th} time unit, a 3^{rd} time unit, a 6^{th} time unit, ..., and a (3*n)^{th} time unit, a candidate frequency unit for carrying the first control information is the frequency unit 1, and in a 0^{th} time unit, a 5^{th} time unit, a 10^{th} time unit, ..., and a (5*n)^{th} time unit, a candidate frequency unit for carrying the first control information is the frequency unit 2.

It may be understood that, after receiving the first indication information, the terminal may determine, based on the periodicity of the first frequency unit, the candidate frequency unit corresponding to the candidate time unit. In this way, a time-frequency position for detecting the first control information may be determined. Subsequently, the terminal may perform blind detection at the determined time-frequency position.

Case 3: The first indication information may indicate a periodicity of the first frequency unit and a first offset.

The first offset is an offset between at least one first time unit corresponding to the first frequency unit and a time domain start position of the periodicity of the first frequency unit. For descriptions of the first time unit, refer to descriptions in Case 1.

In a possible design, the first indication information includes periodicity information of the first frequency unit and the first offset. The periodicity information of the first frequency unit may indicate the periodicity of the first frequency unit.

It may be understood that a plurality of frequency units in the first frequency unit set may be associated with one periodicity and one first offset. In other words, periodicities of the frequency units included in the first frequency unit set are the same, and first offsets corresponding to the frequency units included in the first frequency unit set are also the same.

For example, an example in which the first frequency unit set includes a frequency unit 1 and a frequency unit 2, a periodicity included in the first indication information is 3, and a first offset included in the first indication information is 1 is used. In a 1^{st} time unit, a 4^{th} time unit, a 7^{th} time unit, ..., and a (3*n+1)^{th} time unit, a candidate frequency unit for carrying the first control information is the frequency unit 1 and/or the frequency unit 2.

It may be understood that each frequency unit in the first frequency unit set may be associated with one periodicity. Periodicities of different frequency units in the first frequency unit set may be the same or may be different. In addition, first offsets of different frequency units in the first frequency unit set may be the same or may be different. For example, an example in which the first frequency unit set includes a frequency unit 1 and a frequency unit 2, the first indication information includes a periodicity of the frequency unit 1, a periodicity of the frequency unit 2, and a first offset, the periodicity of the frequency unit 1 is 3, the periodicity of the frequency unit 2 is 5, and the first offset is 1 is used. In a 1^{st} time unit, a 4^{th} time unit, a 7^{th} time unit, ..., and a (3*n+1)^{th} time unit, a candidate frequency unit for carrying the first control information is the frequency unit 1, and in a 1^{st} time unit, the 6^{th} time unit, the 11^{th} time unit, ..., and a (5*n+1)^{th} time unit, a candidate frequency unit for carrying the first control information is the frequency unit 2.

In the foregoing example, a first offset corresponding to the frequency unit 1 is the same as a first offset corresponding to the frequency unit 2. During actual application, the first offset corresponding to the frequency unit 1 may also be different from the first offset corresponding to the frequency unit 2. For example, an example in which the first frequency unit set includes a frequency unit 1 and a frequency unit 2, the first indication information includes a periodicity of the frequency unit 1, a first offset corresponding to the frequency unit 1, a periodicity of the frequency unit 2, and a first offset corresponding to the frequency unit 2, the periodicity of the frequency unit 1 is 3, the first offset corresponding to the frequency unit 1 is 1, the periodicity of the frequency unit 2 is 5, and the first offset corresponding to the frequency unit 2 is 2 is used. In a 1^{st} time unit, a 4^{th} time unit, a 7^{th} time unit, ..., and a (3*n+1)^{th} time unit, a candidate frequency unit for carrying the first control information is the frequency unit 1, and in a 2^{nd} time unit, a 7^{th} time unit, a 12^{th} time unit, ..., and a (5*n+2)^{th} time unit, a candidate frequency unit for carrying the first control information is the frequency unit 2.

It may be understood that, after receiving the first indication information, the terminal may determine, based on the periodicity of the first frequency unit and the first offset, the candidate frequency unit corresponding to the candidate time unit. In this way, a time-frequency position for detecting the first control information may be determined. Subsequently, the terminal may perform blind detection at the determined time-frequency position.

Case 4: The first indication information may indicate a periodicity of a time unit set.

The time unit set may include a plurality of time units, and the plurality of time units may include the first time unit. For descriptions of the first time unit, refer to descriptions in Case 1.

In a possible design, the first indication information includes periodicity information of the time unit set. The periodicity information of the time unit set may indicate the periodicity of the time unit set.

It may be understood that a plurality of frequency units in the first frequency unit set may be associated with one periodicity. In other words, periodicities of time unit sets corresponding to the frequency units included in the first frequency unit set are the same.

For example, FIG. 11 is a schematic diagram of a time unit set. In FIG. 11, the time unit set includes five time units. If the first frequency unit set includes a frequency unit 1 and a frequency unit 2, and the periodicity included in the first indication information is 2, a candidate frequency unit for carrying the first control information in a 1^{st} time unit set and a 3^{rd} time unit set is the frequency unit 1 and/or the frequency unit 2.

It may be understood that each frequency unit in the first frequency unit set may be associated with one periodicity. In the first frequency unit set, periodicities of time unit sets corresponding to different frequency units may be the same or may be different. For example, the time unit set shown in FIG. 11 is used as an example. If the first frequency unit set includes a frequency unit 1 and a frequency unit 2, a periodicity of a time unit set corresponding to the frequency unit 1 is 2, and a periodicity of a time unit set corresponding to the frequency unit 2 is 3, a candidate frequency unit for carrying the first control information in a 1^{st} time unit set is the frequency unit 1, and candidate frequency units for carrying the first control information in a 3^{rd} time unit set are the frequency unit 1 and the frequency unit 2.

In a possible design, the network device sends fourth indication information to the terminal. Correspondingly, the terminal receives the fourth indication information from the network device. The fourth indication information may indicate a position of the first time unit in the time unit set. For example, the fourth indication information includes indication information of a time domain position, and the indication information of the time domain position indicates the position of the first time unit in the time unit set.

For example, the time unit set shown in FIG. 11 is used as an example. If the first frequency unit set includes a frequency unit 1 and a frequency unit 2, a periodicity of a time unit set corresponding to the frequency unit 1 is 2, a periodicity of a time unit set corresponding to the frequency unit 2 is 3, and indication information of a time domain position includes "10010", a candidate frequency unit for carrying the first control information in a 1^{st} first time unit and a 4^{th} time unit in a 1^{st} time unit set is the frequency unit 1, and candidate frequency units for carrying the first control information in a 1^{st} time unit and a 4^{th} time unit in a 3^{rd} time unit set are the frequency unit 1 and the frequency unit 2.

It should be noted that the position of the first time unit in the time unit set may also be predefined, for example, protocol-defined. In addition, the position of the first time unit in the time unit set may also be indicated by using the first indication information. In this case, the network device may not send the fourth indication information to the terminal.

It may be understood that, after receiving the first indication information, the terminal may determine, based on the periodicity of the time unit set, the candidate frequency unit corresponding to the candidate time unit. In this way, a time-frequency position for detecting the first control information may be determined, or the frequency unit corresponding to the candidate time unit may be determined based on the periodicity of the time unit set and the position of the first time unit in the time unit set. In this way, a time domain position for detecting the first control information may be determined. Subsequently, the terminal may perform blind detection at the determined time-frequency position.

Case 5: The first indication information may indicate a periodicity of a time unit set and a second offset.

The time unit set may include a plurality of time units, and the plurality of time units may include the first time unit. For descriptions of the first time unit, refer to descriptions in Case 1. The second offset is an offset between a time unit set corresponding to the first frequency unit and a time domain start position of the periodicity of the time unit set.

In a possible design, the first indication information includes periodicity information of the time unit set and the second offset. The periodicity information of the time unit set may indicate the periodicity of the time unit set.

It may be understood that a plurality of frequency units in the first frequency unit set may be associated with one periodicity and one second offset. In other words, periodicities of time unit sets corresponding to the frequency units included in the first frequency unit set are the same, and second offsets corresponding to the frequency units included in the first frequency unit set are also the same.

For example, the time unit set shown in FIG. 11 is used as an example. If the first frequency unit set includes a frequency unit 1 and a frequency unit 2, a periodicity included in the first indication information is 2, and the second offset included in the first indication information is 1, a candidate frequency unit for carrying the first control information in a 2^{nd} time unit set and a 4^{th} time unit set is the frequency unit 1 and/or the frequency unit 2.

It may be understood that each frequency unit in the first frequency unit set may be associated with one periodicity and one second offset. In the first frequency unit set, periodicities of time unit sets corresponding to different frequency units may be the same or may be different. For example, the time unit set shown in FIG. 11 is used as an example. If the first frequency unit set includes a frequency unit 1 and a frequency unit 2, a periodicity of a time unit set corresponding to the frequency unit 1 is 2, a periodicity of a time unit set corresponding to the frequency unit 2 is 3, and a second offset is 1, a candidate frequency unit for carrying the first control information in a 2^{nd} time unit set is the frequency unit 1, and candidate frequency units for carrying the first control information in a 4^{th} time unit set are the frequency unit 1 and the frequency unit 2.

In the foregoing example, a second offset corresponding to the frequency unit 1 is the same as a second offset corresponding to the frequency unit 2. During actual application, the second offset corresponding to the frequency unit 1 may also be different from the second offset corresponding to the frequency unit 2.

In a possible design, the network device sends fourth indication information to the terminal. Correspondingly, the terminal receives the fourth indication information from the network device. For descriptions of the fourth indication information, refer to descriptions in Case 4 described above.

For example, the time unit set shown in FIG. 11 is used as an example. If the first frequency unit set includes a frequency unit 1 and a frequency unit 2, a periodicity of a time unit set corresponding to the frequency unit 1 is 2, a periodicity of a time unit set corresponding to the frequency unit 2 is 3, a second offset is 1, and indication information of a time domain position includes "10010", a candidate frequency unit for carrying the first control information in a 1^{st} first time unit and a 4^{th} time unit in a 2^{nd} time unit set is the frequency unit 1, and candidate frequency units for carrying the first control information in a 1^{st} time unit and a 4^{th} time unit in a 4^{th} time unit set are the frequency unit 1 and the frequency unit 2.

It should be noted that a position of the first time unit in the time unit set may also be predefined, for example, protocol-defined. In addition, the position of the first time unit in the time unit set may also be indicated by using the first indication information. In this case, the network device may not send the fourth indication information to the terminal.

It may be understood that, after receiving the first indication information, the terminal may determine, based on the periodicity of the time unit set and the second offset, the candidate frequency unit corresponding to the candidate time unit. In this way, a time-frequency position for detecting the first control information may be determined, or the candidate frequency unit corresponding to the candidate time unit may be determined based on the periodicity of the time unit set, the second offset, and the position of the first time unit in the time unit set. In this way, a time domain position for detecting the first control information may be determined. Subsequently, the terminal may perform blind detection at the determined time-frequency position.

It may be understood that each frequency unit in the first frequency unit set may be associated with one piece of first indication information, or a plurality of frequency units in the first frequency unit set may be associated with one piece of first indication information. An example in which the first frequency unit set includes a frequency unit 1 to a frequency unit 3 is used. The network device may send three pieces of first indication information to the terminal. A 1^{st} piece of first indication information is first indication information corresponding to the frequency unit 1, a 2^{nd} piece of first indication information is first indication information corresponding to the frequency unit 2, and a 3^{rd} piece of first indication information is first indication information corresponding to the frequency unit 3. Alternatively, the network device may send one piece of first indication information to the terminal. The first indication information is indication information corresponding to the frequency unit 1, the frequency unit 2, and the frequency unit 3.

### Method 3:

In a possible design, the frequency unit in the first frequency unit set corresponds to a first time unit. In this case, the terminal already knows a correspondence between the first frequency unit and the first time unit. Therefore, the network device may not send first indication information to the terminal. The terminal may determine, based on the correspondence between the frequency unit in the first frequency unit set and the first time unit, a candidate frequency unit corresponding to any first time unit. Subsequently, the terminal may detect first control information on the determined candidate frequency unit.

For example, an example in which the first frequency unit set includes a frequency unit 1, a frequency unit 2, a frequency unit 3, a frequency unit 4, and a frequency unit 5 is used. If the frequency unit 1 corresponds to a 1^{st} time unit, the frequency unit 2 corresponds to a 2^{nd} time unit, the frequency unit 3 corresponds to a 3^{rd} time unit, the frequency unit 4 corresponds to a 4^{th} time unit, and the frequency unit 5 corresponds to a 5^{th} time unit, a candidate frequency unit for carrying the first control information in the 1^{st} time unit is the frequency unit 1, a candidate frequency unit for carrying the first control information in the 2^{nd} time unit is the frequency unit 2, a candidate frequency unit for carrying the first control information in the 3^{rd} time unit is the frequency unit 3, a candidate frequency unit for carrying the first control information in the 4^{th} time unit is the frequency unit 4, and a candidate frequency unit for carrying the first control information in the 5^{th} time unit is the frequency unit 5.

S1002: The terminal detects the first control information on the frequency unit in the plurality of first frequency units.

It may be understood that, after determining the plurality of first frequency units, the terminal may detect the first control information on all frequency units of the plurality of first frequency units, or may detect the first control information on a part of frequency units of the plurality of first frequency units. This is not limited. For example, if the plurality of first frequency units are candidate frequency units, the terminal detects the first control information on all the frequency units of the plurality of first frequency units; or if the second frequency unit of the plurality of first frequency units is a candidate frequency unit, the terminal detects the first control information on the second frequency unit. That the terminal detects the first control information on the frequency unit in the plurality of first frequency units may be understood as that the terminal performs blind detection on the frequency unit in the plurality of first frequency units. That the terminal detects the first control information on the second frequency unit may be understood as that the terminal performs blind detection on the second frequency unit.

It may be understood that the frequency unit for performing blind detection by the terminal may be referred to as a frequency unit used to detect the first control information. The frequency unit used to detect the first control information is included in the plurality of first frequency units. The frequency unit used to detect the first control information may be understood as a frequency unit that may send the first control information, or a frequency unit that may carry the first control information, or a candidate frequency unit for carrying the first control information.

In a possible implementation, a quantity of frequency units used to detect the first control information is less than or equal to a first threshold. The first threshold may be reported by the terminal to the network device. For example, the terminal sends second indication information to the network device, and the second indication information indicates the first threshold. The first threshold may reflect a capability of the terminal, and first thresholds reported by different terminals may be the same or may be different. This is not limited. Blind detection performed by the terminal by using the first threshold may better match a processing capability of the terminal, and complexity of blind detection performed by the terminal may be further reduced.

It may be understood that the terminal and/or the network device may make, in a plurality of manners, the quantity of frequency units used to detect the first control information less than or equal to the first threshold. The following uses the terminal as an example for description.

In a possible implementation, the terminal determines M frequency units in the first frequency unit set according to a preset rule, and detects the first control information on the M frequency units. In other words, the M frequency units are frequency units that are finally determined by the terminal and that are used to detect the first control information. M is a positive integer, and is less than or equal to the first threshold. For descriptions of the first frequency unit set, refer to descriptions in S1001. Details are not described herein. It may be understood that, in this case, the terminal may determine, according to the preset rule, to detect the first control information on the M frequency units. Therefore, the network device may not send the first indication information to the terminal.

In an example, the M frequency units are M frequency units with maximum indexes (or identifiers) in the first frequency unit set, or the M frequency units are M frequency units with minimum indexes (or identifiers) in the first frequency unit set, or the M frequency units are randomly determined by the terminal in the first frequency unit set, or the M frequency units are determined according to an indication of the network device. For example, the network device may indicate priorities of frequency units, and the M frequency units are M frequency units with high priorities in the first frequency unit set. For another example, the network device indicates an order of the plurality of frequency units, and the M frequency units are first M frequency units or last M frequency units in the order in the first frequency unit set.

In another example, the M frequency units are M frequency units that are in the first frequency unit set and whose indexes are far away from each other. For example, if the first frequency unit set includes a frequency unit whose index is 1, a frequency unit whose index is 4, and a frequency unit whose index is 5, and M is equal to 2, the M frequency units include the frequency unit whose index is 1 and the frequency unit whose index is 5. In this way, more frequency diversity gains can be provided.

As described in S1001, the terminal may determine, based on the first indication information, the candidate frequency unit for carrying the first control information, where the candidate frequency unit may include the plurality of first frequency units or include the second frequency unit. In another possible implementation, the quantity of candidate frequency units for carrying the first control information is less than or equal to the first threshold. In other words, if a quantity of initial frequency units determined by the terminal according to Case 1 to Case 5 described above is less than or equal to the first threshold, the initial frequency unit is the candidate frequency unit for carrying the first control information. If the quantity of initial frequency units determined by the terminal according to Case 1 to Case 5 described above is greater than the first threshold, the terminal may determine, in the initial frequency unit according to the preset rule, the candidate frequency unit for carrying the first control information, so that the quantity of candidate frequency units for carrying the first control information is less than or equal to the first threshold. A process in which the terminal determines, in the initial frequency unit according to the preset rule, the candidate frequency unit for carrying the first control information is similar to a process in which the terminal determines the M frequency units in the first frequency unit set according to the preset rule. Therefore, reference may be made to the foregoing process in which the terminal determines the M frequency units in the first frequency unit set according to the preset rule. Details are not described herein.

It may be understood that the network device may alternatively determine the plurality of first frequency units in the first frequency unit set. When the first control information needs to be sent, the network device may send the first control information to the terminal on at least one frequency unit in the plurality of first frequency units. The terminal may perform blind detection on the frequency unit in the plurality of first frequency units, to obtain the first control information.

As described above, the first time unit is a candidate time unit for detecting the first control information by the terminal. The following specifically describes the first time unit.

In a possible implementation, a length of the first time unit is configured by the network device. For example, the network device may indicate that the length of the first time unit is 1 millisecond (ms).

It may be understood that in this embodiment of this application, the time unit may be a time domain unit used for signal transmission, and may include a radio frame, a subframe, a slot, a mini-slot, at least one OFDM symbol, or the like. The time unit may alternatively be a span. Different first frequency units may correspond to different lengths of time units. An example in which the first frequency unit is a cell, and a time unit corresponding to the first frequency unit is a slot is used. If a subcarrier spacing of a cell 1 is 15 kHz, a time unit corresponding to the cell 1 is one slot, and the slot is 1 ms. If a subcarrier spacing of a cell 2 is 30 kHz, a time unit corresponding to the cell 2 is one slot, and the slot is 0.5 ms. Therefore, a reference of the first time unit may be determined, to standardize the length of the first time unit, so that first time units corresponding to different first frequency units have a same length.

In another possible implementation, the length of the first time unit is the same as a length of a time unit corresponding to a reference frequency unit. The reference frequency unit is configured by the network device or predefined (for example, protocol-defined).

In an example, if the reference frequency unit is a cell 1, the length of the first time unit is determined based on the cell 1. For example, the length of the first time unit is a frame, a subframe, a slot, a mini-slot, an OFDM symbol, a span, or the like that uses the cell 1 as a reference.

In a possible design, the reference frequency unit is a primary cell; or the reference frequency unit is a frequency unit with a maximum or minimum index; or the reference frequency unit is a frequency unit with a maximum or minimum subcarrier spacing; or the reference frequency unit is a frequency unit with a minimum or maximum subcarrier spacing and a minimum or maximum index.

In this embodiment of this application, for any frequency unit (for example, the reference frequency unit or the first frequency unit), a time unit corresponding to the frequency unit may be understood as a time unit determined based on the frequency unit, or a time unit determined by using the frequency unit as a reference. For example, the time unit corresponding to the frequency unit is a frame, a subframe, a slot, a mini-slot, an OFDM symbol, a span, or the like that uses the frequency unit as a reference. The time unit corresponding to the frequency unit may be a time unit corresponding to a PDCCH blind detection capability, for example, a time unit for calculating a maximum quantity of detection times and/or calculating a maximum quantity of non-overlapped CCEs. Alternatively, the time unit corresponding to the frequency unit may be a time unit used to determine the first frequency unit, and is irrelevant to a PDCCH blind detection capability. Unified descriptions are provided herein, and details are not described below again.

It should be noted that, in S1001 and S1002, the first indication information may be used by the terminal to determine the plurality of first frequency units in the first frequency unit set may be replaced with that the first indication information may be used by the terminal to determine a candidate frequency unit set in the first frequency unit set. The candidate frequency unit set includes at least two first frequency units. Optionally, that the terminal detects the first control information on the frequency unit in the plurality of first frequency units may be replaced with that the terminal determines, in the candidate frequency unit set, a frequency unit used to detect the first control information. Subsequently, the terminal may detect the first control information on the frequency unit used to detect the first control information. Alternatively, that the terminal detects the first control information on the frequency unit in the plurality of first frequency units may be replaced with that the terminal detects the first control information on at least one first frequency unit in the candidate frequency unit set. Alternatively, that the network device sends the first control information to the terminal on the at least one frequency unit in the plurality of first frequency units may be replaced with that the network device determines, in the candidate frequency unit set, a frequency unit used to send the first control information. Subsequently, the network device may send the first control information to the terminal on the frequency unit used to send the first control information.

It should be understood that all or a part of the frequency units used to detect the first control information are frequency units used to send the first control information. For example, the frequency units used to detect the first control information are a frequency unit 1 to a frequency unit 3, and the frequency unit used to send the first control information is the frequency unit 1. In other words, the network device sends the first control information on the frequency unit 1, but the terminal detects the first control information on the frequency unit 1, the frequency unit 2, and the frequency unit 3.

According to the method in FIG. 10, the terminal may determine the first frequency unit set, determine the plurality of first frequency units based on the first frequency unit set, and detect, on the frequency unit in the plurality of first frequency units, the first control information used to schedule data transmission on the second frequency unit. In the foregoing process, the second frequency unit may be scheduled by the plurality of first frequency units, so that the frequency unit is flexibly scheduled, a transmission delay is low, implementation is simple, and data transmission flexibility is improved. In addition, in the foregoing process, quite large uplink-downlink switching overheads and small-granularity transmission do not need to be introduced. Therefore, DMRS overheads are small. In addition, the plurality of first frequency units are determined in the first frequency unit set, so that the terminal may detect the first control information on the frequency unit in the plurality of first frequency units. This reduces complexity of blind detection performed by the terminal.

Actions of the terminal or the network device in S1001 and S1002 may be performed by the processor 901 in the communication apparatus 90 shown in FIG. 9 by invoking the application program code stored in the memory 903. This is not limited in this embodiment of this application.

It may be understood that, in the method shown in FIG. 10, the second frequency unit may be scheduled by the plurality of first frequency units, so that the frequency unit is flexibly scheduled. During actual application, the second frequency unit may alternatively be scheduled by at least one first frequency unit, and any first frequency unit in the at least one first frequency unit may correspond to at least one first time unit. In other words, the candidate frequency unit (namely, the first frequency unit) that carries the first control information may be configured based on the time unit, to flexibly schedule the frequency unit.

FIG. 12 shows another communication method according to an embodiment of this application. The communication method includes S1201 and S1202.

S1201: A terminal determines a first frequency unit set.

A network device may be the network device 801 in the communication system 80 shown in FIG. 8, and the terminal may be any terminal, for example, the terminal 802, the terminal 803, or the terminal 804, in the communication system 80 shown in FIG. 8.

The first frequency unit set may include at least one frequency unit. Optionally, the at least one frequency unit is all frequency units configured by the network device for the terminal, or the at least one frequency unit is a subset of all frequency units configured by the network device for the terminal.

Optionally, transmission directions of any two frequency units included in all the frequency units configured by the network device for the terminal in a same time unit are opposite. It may be understood that opposite transmission directions may indicate that in a same time unit, one of any two frequency units is for uplink transmission, and the other time-frequency unit is for downlink transmission.

Optionally, any two frequency units included in all the frequency units configured by the network device for the terminal have a same transmission direction in a same time unit. It may be understood that a same transmission direction indicates that transmission directions of any two frequency units in a same time unit are both for uplink transmission or downlink transmission.

Optionally, a transmission direction of any frequency unit included in all the frequency units in the time unit is independently configured.

Optionally, the terminal receives indication information A sent by the network device, where the indication information A indicates a transmission direction, in a time unit A, of a frequency unit A included in all the frequency units. The transmission direction may be for uplink transmission or downlink transmission.

Optionally, the terminal further receives indication information B sent by the network device, where the indication information B indicates a transmission direction, in the time unit A, of a frequency unit B included in all the frequency units. The transmission direction may be for uplink transmission or downlink transmission.

In an implementation, the indication information A is configured for the frequency unit A, and the indication information B is configured for the frequency unit B.

In a possible design, if the at least one frequency unit is the subset of all the frequency units configured by the network device for the terminal, the at least one frequency unit is a primary scheduling frequency unit configured by the network device. In other words, the at least one frequency unit may schedule data transmission on a specific frequency unit or data transmission on specific frequency units. For descriptions of the primary scheduling frequency unit, refer to the foregoing corresponding descriptions of the primary scheduling cell. Details are not described herein. The specific frequency unit may be included in the at least one frequency unit, or may not be included in the at least one frequency unit. The specific frequency units may include all frequency units in the at least one frequency unit or a part of frequency units in the at least one frequency unit, or the specific frequency units may not include the at least one frequency unit.

In another possible design, there is an association relationship between the first frequency unit set and a second frequency unit. It may be understood that the first frequency unit set includes a primary scheduling frequency unit of the second frequency unit. Alternatively, the first frequency unit set is configured for the second frequency unit, and the primary scheduling frequency unit corresponding to the second frequency unit is located in the first frequency unit set. For another example, when the network device configures a plurality of second frequency units for the terminal, frequency units included in the first frequency unit set associated with each second frequency unit may be the same or may be different. Further, first frequency unit sets associated with different second frequency units are independently configured. For example, assuming that the second frequency unit is a cell 0 and a cell 1, a first frequency unit set associated with the cell 0 may include the cell 0, the cell 1, and a cell 2, and a first frequency unit set associated with the cell 1 may include the cell 0 and the cell 2. In this example, a primary scheduling cell corresponding to the cell 0 may be one or more of the cell 0, the cell 1, and the cell 2, and a primary scheduling cell corresponding to the cell 1 may be one or both of the cell 0 and the cell 2.

In an example, the network device may configure the first frequency unit set by using the foregoing IE for configuring cross-carrier scheduling. Specifically, the network device may configure a frequency unit set or a group of frequency unit sets in a schedulingCellId in "other", and the set may be in a form of a list (list). In this way, data transmission on a specific frequency unit may be scheduled on the at least one frequency unit. This improves transmission flexibility.

In a possible implementation, the first frequency unit set may be predefined (for example, protocol-defined), or configured by the network device. For example, the first frequency unit set is configured by the network device. Before S1201, the network device may send third indication information to the terminal. Correspondingly, the terminal may receive the third indication information from the network device. The third indication information may indicate the first frequency unit set. For example, the third indication information includes an identifier of the first frequency unit set, or the third indication information includes an identifier of each frequency unit in the first frequency unit set.

In a possible implementation, the terminal determines at least one first frequency unit based on the first frequency unit set. The first frequency unit is the primary scheduling frequency unit corresponding to the second frequency unit. For a process in which the terminal determines the at least one first frequency unit based on the first frequency unit set, refer to the following method 1 to method 3.

### Method 1:

In an implementation, the at least one frequency unit included in the first frequency unit set is the primary scheduling frequency unit (namely, the first frequency unit) of the second frequency unit.

### Method 2:

In a possible implementation, the terminal determines the at least one first frequency unit in the first frequency unit set based on first indication information.

In the method 2, the following steps may be further included:
The network device sends the first indication information to the terminal. Correspondingly, the terminal receives the first indication information from the network device. The first indication information may be used by the terminal to determine the at least one first frequency unit in the first frequency unit set. In other words, after receiving the first indication information, the terminal may determine the at least one first frequency unit in the first frequency unit set based on the first indication information. Optionally, the first indication information is carried in RRC signaling, a MAC-CE, or physical layer signaling. The DCI may be carried on a first PDCCH. For other descriptions of the first indication information, refer to corresponding descriptions in Case 1 to Case 5 described above. Details are not described herein.

In a possible implementation, the at least one frequency unit included in the first frequency unit set includes the at least one first frequency unit. That the first frequency unit corresponds to the at least one first time unit may alternatively be described as that any first frequency unit in the at least one first frequency unit corresponds to the at least one first time unit.

In a possible implementation, the first frequency unit is a candidate frequency unit for carrying the first control information. To be specific, after the terminal determines the at least one first frequency unit in the first frequency unit set based on the first indication information, the terminal knows the candidate frequency unit for carrying the first control information. For descriptions of the candidate frequency unit and the first time unit, refer to descriptions in the method shown in FIG. 10. The first control information is used to schedule data transmission on the second frequency unit. In other words, the network device may send the first control information on the at least one first frequency unit, to schedule data transmission on the second frequency unit. In an example, the first control information may be DCI or group DCI. The first control information may be carried on a second PDCCH. For descriptions of the group DCI, refer to the foregoing explanations and descriptions of the technical terms. It should be understood that, in time domain, the first PDCCH that carries the first indication information is located before the second PDCCH.

Optionally, the first frequency unit and the second frequency unit may be the same or may be different. In other words, the second frequency unit may be scheduled by the second frequency unit, or may be scheduled by another frequency unit. Alternatively, the first frequency unit may be scheduled by the first frequency unit, or may be scheduled by another frequency unit. Scheduling of the frequency unit is flexible. In an example, if a frequency unit can schedule the frequency unit (where for example, the frequency unit has a time-frequency resource carrying DCI), the first frequency unit set includes the frequency unit. In this case, it may be understood that when the first frequency unit set is configured, the frequency unit is configured to be capable of scheduling the frequency unit.

In another possible implementation, the terminal determines, in the at least one first frequency unit, the candidate frequency unit for carrying the first control information. To be specific, after the terminal determines the at least one first frequency unit in the first frequency unit set based on the first indication information, the terminal may further determine, in the at least one first frequency unit, the candidate frequency unit for carrying the first control information.

In an example, if the at least one first frequency unit includes the second frequency unit, the candidate frequency unit for carrying the first control information is the second frequency unit. In other words, in this case, the candidate frequency unit is the second frequency unit. It may be understood that, if the candidate frequency unit that is determined by the terminal and that is for carrying the first control information is the second frequency unit, when the first control information needs to be sent, the network device sends the first control information on the second frequency unit. Therefore, the terminal may detect the first control information on the second frequency unit, and does not need to detect the first control information on another frequency unit. In this way, complexity of blind detection performed by the terminal may be reduced without affecting flexibility of frequency unit scheduling.

Further, if the second frequency unit is the candidate frequency unit, the first indication information may include indication information of the second frequency unit, to indicate the second frequency unit. In this case, if the at least one first frequency unit includes the second frequency unit, and after the terminal determines the second frequency unit by using the indication information of the second frequency unit, the primary scheduling frequency unit corresponding to the second frequency unit is also determined.

### Method 3:

In a possible design, the frequency unit in the first frequency unit set corresponds to a first time unit. In this case, the terminal already knows a correspondence between the first frequency unit and the first time unit. Therefore, the network device may not send first indication information to the terminal. The terminal may determine, based on the correspondence between the frequency unit in the first frequency unit set and the first time unit, a candidate frequency unit corresponding to any first time unit. Subsequently, the terminal may detect first control information on the determined candidate frequency unit.

S1202: The terminal detects the first control information on the frequency unit in the at least one first frequency unit and in a time unit in the at least one first time unit.

It may be understood that, after determining the at least one first frequency unit, the terminal may detect the first control information on all frequency units in the at least one first frequency unit and in all first time units corresponding to all the frequency units, or detect the first control information on all frequency units in the at least one first frequency unit and a part of first time units corresponding to all the frequency units, or detect the first control information on a part of frequency units in the at least one first frequency unit and in all first time units corresponding to the part of frequency units, or detect the first control information on a part of frequency units in the at least one first frequency unit and a part of first time units corresponding to the part of frequency units. That the terminal detects the first control information on the frequency unit in the at least one first frequency unit and in the time unit in the at least one first time unit may be understood as that the terminal performs blind detection on the frequency unit in the at least one first frequency unit and in the time unit in the at least one first time unit.

It may be understood that the frequency unit for performing blind detection by the terminal may be referred to as a frequency unit used to detect the first control information. The frequency unit used to detect the first control information is included in the at least one first frequency unit. The frequency unit used to detect the first control information may be understood as a frequency unit that may send the first control information, or a frequency unit that may carry the first control information, or a candidate frequency unit for carrying the first control information.

In a possible implementation, a quantity of frequency units used to detect the first control information is less than or equal to a first threshold. The first threshold may be reported by the terminal to the network device. For example, the terminal sends second indication information to the network device, and the second indication information indicates the first threshold. The first threshold may reflect a capability of the terminal, and first thresholds reported by different terminals may be the same or may be different. This is not limited. Blind detection performed by the terminal by using the first threshold may better match a processing capability of the terminal, and complexity of blind detection performed by the terminal may be further reduced.

It may be understood that the terminal and/or the network device may make, in a plurality of manners, the quantity of frequency units used to detect the first control information less than or equal to the first threshold. The following uses the terminal as an example for description.

In a possible implementation, the terminal determines M frequency units in the first frequency unit set according to a preset rule, and detects the first control information on the M frequency units. In other words, the M frequency units are frequency units that are finally determined by the terminal and that are used to detect the first control information. M is a positive integer, and is less than or equal to the first threshold. For descriptions of the first frequency unit set, refer to descriptions in S1201. Details are not described herein. It may be understood that, in this case, the terminal may determine, according to the preset rule, to detect the first control information on the M frequency units. Therefore, the network device may not send the first indication information to the terminal. For a process in which the terminal determines the M frequency units in the first frequency unit set according to the preset rule, refer to corresponding descriptions in S1002. Details are not described herein.

As described in S1201, the terminal may determine, based on the first indication information, the candidate frequency unit for carrying the first control information, where the candidate frequency unit may include the at least one first frequency unit or include the second frequency unit. In another possible implementation, the quantity of candidate frequency units for carrying the first control information is less than or equal to the first threshold. In other words, if a quantity of initial frequency units determined by the terminal according to Case 1 to Case 5 described above is less than or equal to the first threshold, the initial frequency unit is the candidate frequency unit for carrying the first control information. If the quantity of initial frequency units determined by the terminal according to Case 1 to Case 5 described above is greater than the first threshold, the terminal may determine, in the initial frequency unit according to the preset rule, the candidate frequency unit for carrying the first control information, so that the quantity of candidate frequency units for carrying the first control information is less than or equal to the first threshold. A process in which the terminal determines, in the initial frequency unit according to the preset rule, the candidate frequency unit for carrying the first control information is similar to a process in which the terminal determines the M frequency units in the first frequency unit set according to the preset rule. Therefore, reference may be made to the foregoing process in which the terminal determines the M frequency units in the first frequency unit set according to the preset rule. Details are not described herein.

It may be understood that the network device may alternatively determine the at least one first frequency unit in the first frequency unit set. When the first control information needs to be sent, the network device may send the first control information to the terminal on the frequency unit in the at least one first frequency unit and in the time unit in the at least one first time unit. The terminal may perform blind detection on the frequency unit in the at least one first frequency unit and in the time unit in the at least one first time unit, to obtain the first control information.

That the network device sends the first control information to the terminal on the frequency unit in the at least one first frequency unit and in the time unit in the at least one first time unit may be understood as that the network device sends the first control information to the terminal on at least one third frequency unit and in at least one second time unit. The third frequency unit is a frequency unit in the at least one first frequency unit. The second time unit is a time unit in the at least one first time unit corresponding to the third frequency unit.

As described above, the first time unit is a candidate time unit for detecting the first control information by the terminal. The following specifically describes the first time unit.

In a possible implementation, a length of the first time unit is configured by the network device. For example, the network device may indicate that the length of the first time unit is 1 ms.

It may be understood that, in the method shown in FIG. 12, different first frequency units may correspond to different lengths of time units. Therefore, a reference of the first time unit may be determined, to standardize the length of the first time unit, so that first time units corresponding to different first frequency units have a same length.

In another possible implementation, the length of the first time unit is the same as a length of a time unit corresponding to a reference frequency unit. For details, refer to descriptions in the method shown in FIG. 10. Details are not described herein.

It should be noted that, in S1201 and S1202, the first indication information may be used by the terminal to determine the at least one first frequency unit in the first frequency unit set may be replaced with that the first indication information may be used by the terminal to determine a candidate frequency unit set in the first frequency unit set. The candidate frequency unit set includes the at least one first frequency unit. That the terminal detects the first control information on the frequency unit in the at least one first frequency unit and in the time unit in the at least one first time unit may be replaced with that the terminal determines, in the candidate frequency unit set, a frequency unit used to detect the first control information. Subsequently, the terminal may detect the first control information on the frequency unit used to detect the first control information. Alternatively, that the network device sends the first control information to the terminal on the frequency unit in the at least one first frequency unit and in the time unit in the at least one first time unit may be replaced with that the network device determines, in the candidate frequency unit set, the frequency unit used to send the first control information. Subsequently, the network device may send the first control information to the terminal on the frequency unit used to send the first control information and in the time unit in the at least one first time unit corresponding to the frequency unit used to send the first control information. It should be understood that all or a part of the frequency units used to detect the first control information are frequency units used to send the first control information.

According to the method shown in FIG. 12, the terminal may determine the first frequency unit set, determine the at least one first frequency unit based on the first frequency unit set, and detect the first control information on the frequency unit in the at least one first frequency unit and in the time unit in the at least one first time unit. The first control information may be used to schedule data transmission on the second frequency unit. In the foregoing process, the second frequency unit may be scheduled by the at least one first frequency unit, and any first frequency unit in the at least one first frequency unit may correspond to the at least one first time unit. In other words, the candidate frequency unit (namely, the first frequency unit) that carries the first control information may be configured based on the time unit, so that the frequency unit is flexibly scheduled, a transmission delay is low, and implementation is simple. In addition, in the foregoing process, quite large uplink-downlink handover overheads and small-granularity transmission do not need to be introduced. Therefore, DMRS overheads are relatively small. In addition, when the at least one first frequency unit includes a plurality of first frequency units, candidate frequency units for carrying the first control information may be different in different first time units, or frequency units used to schedule the second frequency unit may be different in different first time units, so that the frequency unit is more flexibly scheduled.

Actions of the terminal or the network device in S1201 and S1202 may be performed by the processor 901 in the communication apparatus 90 shown in FIG. 9 by invoking the application program code stored in the memory 903. This is not limited in this embodiment of this application.

FIG. 13 shows another communication method according to an embodiment of this application. The communication method includes S1301 to S1303.

S1301: A terminal determines detection capability information of a first frequency unit based on a first value.

The terminal may be any terminal, for example, the terminal 802, the terminal 803, or the terminal 804, in the communication system 80 shown in FIG. 8. The first frequency unit is a primary scheduling frequency unit. To be specific, a network device may send control information on the first frequency unit, to schedule data transmission on a second frequency unit. For descriptions of the primary scheduling frequency unit, refer to the foregoing corresponding descriptions of the primary scheduling cell. Details are not described herein. The first frequency unit and the second frequency unit may be the same or may be different. In an example, the control information may be DCI or group DCI. The control information may be carried on a PDCCH. For descriptions of the group DCI, refer to the foregoing explanations and descriptions of the technical terms.

In a possible implementation, the first value may have the following two cases:
Case 1: The first value is a quantity of frequency units that can be scheduled by a frequency unit in a frequency unit set in a target time unit.

The frequency unit set may include at least one frequency unit, and the at least one frequency unit is a primary scheduling frequency unit, and may include the first frequency unit in S1301. The at least one frequency unit corresponds to a same subcarrier spacing.

Optionally, the frequency unit set is a set including the primary scheduling frequency unit. Further, optionally, the frequency unit set may be a set including primary scheduling frequency units with a same subcarrier spacing, that is, frequency units included in the frequency unit set have a same subcarrier spacing. It may be understood that, in this case, the primary scheduling frequency units with different subcarrier spacings may form a plurality of frequency unit sets. It should be noted that a meaning of the frequency unit set in the method shown in FIG. 13 is different from a meaning of the first frequency unit set in the method shown in FIG. 10 or the method shown in FIG. 12.

Optionally, the frequency units included in the frequency unit set are all frequency units configured by the network device for the terminal, or the frequency units included in the frequency unit set are a subset of all frequency units configured by the network device for the terminal.

Optionally, transmission directions of any two frequency units included in all the frequency units configured by the network device for the terminal in a same time unit are opposite or the same. For explanations of opposite or same transmission directions, refer to descriptions in S1001.

Optionally, a transmission direction of any frequency unit included in all the frequency units in the time unit is independently configured.

Optionally, the terminal receives indication information A sent by the network device, where the indication information A indicates a transmission direction, in a time unit A, of a frequency unit A included in all the frequency units. The transmission direction may be for uplink transmission or downlink transmission.

Optionally, the terminal further receives indication information B sent by the network device, where the indication information B indicates a transmission direction, in the time unit A, of a frequency unit B included in all the frequency units. The transmission direction may be for uplink transmission or downlink transmission.

In an implementation, the indication information A is configured for the frequency unit A, and the indication information B is configured for the frequency unit B.

It may be understood that, in Case 1, the first value is a parameter associated with a target time unit. Different target time units may correspond to different first values, or may correspond to a same first value. In this way, the detection capability information of the first frequency unit may be determined at different moments based on an actual situation, so that flexibility of frequency unit scheduling may be improved.

The target time unit may be a time unit corresponding to the first frequency unit, or may not be a time unit corresponding to the first frequency unit. For descriptions of the time unit corresponding to the first frequency unit, refer to corresponding descriptions of the time unit corresponding to the frequency unit in S1002. Details are not described herein.

For example, in the method shown in FIG. 13, the time unit corresponding to the first frequency unit may be a time unit corresponding to a PDCCH blind detection capability, to be specific, a maximum quantity of detection times in the time unit corresponding to the first frequency unit and/or a maximum quantity of non-overlapped CCEs in the time unit corresponding to the first frequency unit may represent the PDCCH blind detection capability.

In an example, the target time unit may be a time unit determined based on a reference frequency unit, that is, the target time unit is the time unit corresponding to the reference frequency unit, or the target time unit may be configured by the network device. For descriptions of the reference frequency unit, refer to corresponding descriptions in the method shown in FIG. 10. Details are not described herein. It may be understood that if the reference frequency unit is the first frequency unit, the target time unit is the time unit corresponding to the first frequency unit. If the reference frequency unit is not the first frequency unit, the target time unit may not be the time unit corresponding to the first frequency unit.

For example, an example in which the frequency unit is a cell is used. The terminal may group the frequency units based on the subcarrier spacing, denoted as ${N}_{cells , 0}^{DL , μ} \left(t\right)$ or ${N}_{cells , 1}^{DL , μ} \left(t\right)$*.* ${N}_{cells , 0}^{DL , μ} \left(t\right)$ or ${N}_{cells , 1}^{DL , μ} \left(t\right)$ may indicate a quantity of cells that can be scheduled by a primary scheduling cell when a subcarrier spacing is 2*^{µ}* ·15 kHz in the target time unit, or a quantity of all scheduled cells corresponding to a case that the subcarrier spacing of the primary scheduling cell is 2*^{µ}* ·15 kHz in the target time unit. In other words, the first value includes ${N}_{cells , 0}^{DL , μ} \left(t\right)$ and ${N}_{cells , 1}^{DL , μ} \left(t\right)$. For a difference between ${N}_{cells , 0}^{DL , μ} \left(t\right)$ and ${N}_{cells , 1}^{DL , μ} \left(t\right)$, refer to descriptions of a difference between ${N}_{cells , 0}^{DL , μ}$ and ${N}_{cells , 1}^{DL , μ}$ in the foregoing descriptions of technical terms.

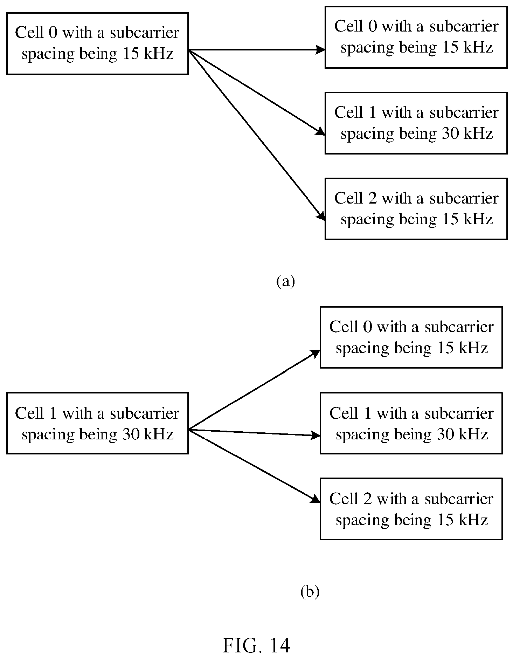

For example, FIG. 14 is a schematic diagram of cross-carrier scheduling. In FIG. 14, a cross-carrier scheduling status in a 1^{st} target time unit may be shown in (a) in FIG. 14. A cell 0 may schedule the cell 0, a cell 1, and a cell 2. Therefore, ${N}_{cells , 0}^{DL , 0} \left(1\right) = 3$. A cross-carrier scheduling status in a 2^{nd} target time unit may be shown in (b) in FIG. 14. A cell 1 may schedule a cell 0, the cell 1, and a cell 2, and the cell 0 has no cell that can be scheduled. Therefore, ${N}_{cells , 0}^{DL , 0} \left(2\right) = 0$.

In a possible design, the terminal can detect control information in the target time unit and on the frequency unit in the frequency unit set. In other words, a downlink signal can be sent in the target time unit and on the frequency unit in the frequency unit set. Alternatively, a time domain resource corresponding to the target time unit and the frequency unit in the frequency unit set includes a downlink symbol or a flexible symbol. In other words, when the downlink signal can be sent in the target time unit and on a frequency unit 1 in the frequency unit set, the terminal may consider the frequency unit 1 when determining the first value, or the terminal may calculate the frequency unit 1 when determining the first value. Otherwise, the terminal does not consider the frequency unit 1 when determining the first value, or the terminal does not calculate the frequency unit 1 when determining the first value. It may be understood that the first value is grouped based on the primary scheduling cell. Therefore, that a specific frequency unit is not considered may be understood as that regardless of whether the frequency unit is a primary scheduling frequency unit, the frequency unit is not considered as a primary scheduling frequency unit; or if the frequency unit is a primary scheduling frequency unit, a quantity of frequency units scheduled by the frequency unit is not counted.

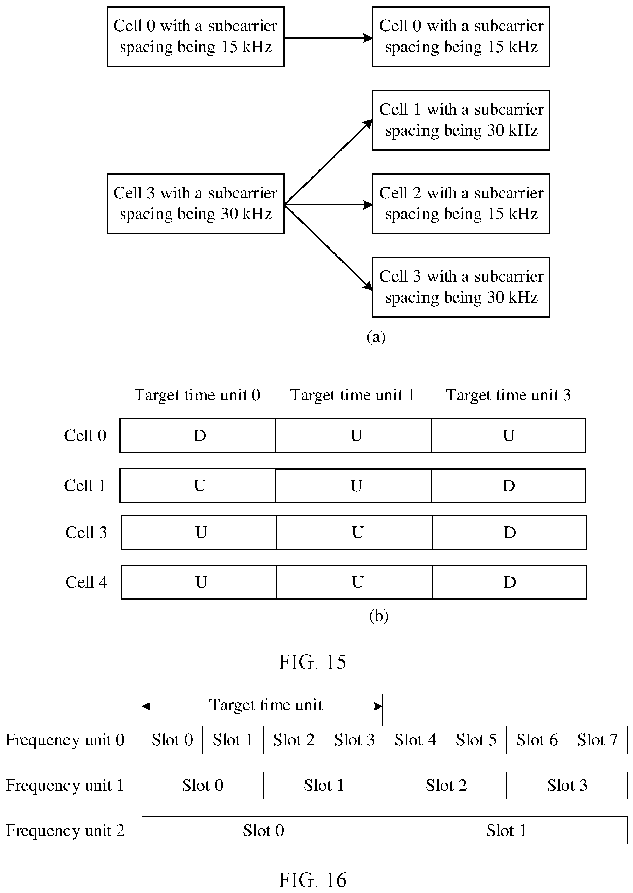

For example, FIG. 15 is a schematic diagram of cross-carrier scheduling. (a) in FIG. 15 shows that for a target time unit 0, a cell 0 can schedule the cell 0, and a cell 3 can schedule a cell 1, a cell 2, and the cell 3. (b) in FIG. 15 shows a frame structure of a cell 0 to a cell 3. For the target time unit 0, only the cell 0 can send a downlink signal, and the cell 1 to the cell 3 can send only an uplink signal. The first value may have two results. Result 1: The terminal can detect the control information without being limited to the target time unit and the frequency unit in the frequency unit set. In other words, when the first value corresponding to the target time unit 0 is determined, the cell 0 and the cell 3 need to be considered. In this case, ${N}_{cells , 0}^{DL , 0} \left(0\right) = 1$, and ${N}_{cells , 0}^{DL , 1} \left(0\right) = 3$. Result 2: Limited to the target time unit and the frequency unit in the frequency unit set, the terminal can detect the control information. In other words, when the first value corresponding to the target time unit 0 is determined, the cell 0 needs to be considered, but the cell 3 does not need to be considered, because the cell 3 (the primary scheduling cell) cannot send a downlink signal in the target time unit. In this case, ${N}_{cells , 0}^{DL , 0} \left(0\right) = 1$ and ${N}_{cells , 0}^{DL , 1} \left(0\right) = 0$. When ${N}_{cells , 1}^{DL , μ} \left(t\right)$ is not considered and it is assumed that ${N}_{cells}^{cap} = 3$, the result 1 is substituted into the formula ${\sum }_{μ = 0}^{3} \left({N}_{cells , 0}^{DL , μ}\left(t\right)+{γN}_{cells , 1}^{DL , μ}\left(t\right)\right)$, and ${\sum }_{μ = 0}^{3} \left({N}_{cells , 0}^{DL , μ}\left(t\right)+{γN}_{cells , 1}^{DL , μ}\left(t\right)\right) > {N}_{cells}^{cap}$ may be obtained. Therefore, ${M}_{PDCCH}^{total , slot , 0} \left(t\right) = \left⌊{N}_{cells}^{cap}{M}_{PDCCH}^{max , slot , 0}\left(t\right)\left({N}_{cells , 0}^{DL , 0}\left(t\right)+{γN}_{cells , 1}^{DL , 0}\left(t\right)\right)/{\sum }_{j = 0}^{3} \left({N}_{cells , 0}^{DL , j}\left(t\right)+{γN}_{cells , 1}^{DL , j}\left(t\right)\right)\right⌋ = \left⌊3⋅{M}_{PDCCH}^{max , slot , μ}\left(t\right)⋅1/4\right⌋ = \left⌊{M}_{PDCCH}^{max , slot , μ}\left(t\right)⋅3/4\right⌋$. When ${N}_{cells , 1}^{DL , μ} \left(t\right)$ is not considered and it is assumed that ${N}_{cells}^{cap} = 3$, the result 2 is substituted into the formula ${\sum }_{μ = 0}^{3} \left({N}_{cells , 0}^{DL , μ}\left(t\right)+{γN}_{cells , 1}^{DL , μ}\left(t\right)\right)$, and may be obtained. Therefore, ${M}_{PDCCH}^{total , slot , 0} \left(t\right) = {M}_{PDCCH}^{max , slot , 0} \left(t\right)$. Therefore, ${M}_{PDCCH}^{total , slot , 0} \left(t\right)$ obtained based on the result 1 is less than ${M}_{PDCCH}^{total , slot , 0} \left(t\right)$ obtained based on the result 2. In other words, in the target time unit 0, a maximum quantity of detection times corresponding to the result 1 is less than a maximum quantity of detection times corresponding to the result 2. For ${C}_{PDCCH}^{total , slot , μ} \left(t\right)$, there is a similar conclusion that a maximum quantity of non-overlapped CCEs corresponding to the result 1 is less than a maximum quantity of non-overlapped CCEs corresponding to the result 2. In this way, scheduling of the frequency unit based on the result 1 limits flexibility of frequency unit scheduling. Therefore, the first value may be determined in the manner of the result 2, to improve flexibility of frequency unit scheduling. In other words, if the downlink signal cannot be sent in the target time unit and on the frequency unit in the frequency unit set, the control information does not need to be detected in the target time unit and on the frequency unit in the frequency unit set, and a blind detection capability in the target time unit and on the frequency unit in the frequency unit set may be flexibly used in another time unit or another frequency unit in/on which the control information needs to be detected, thereby improving flexibility of frequency unit scheduling.

In an optional manner, if no PDCCH resource is configured in the target time unit or on the frequency unit 1 in the frequency unit set when the PDCCH resource is configured, even if the downlink signal can be sent in the target time unit and on the frequency unit 1, the frequency unit 1 is not considered when the first value is determined, or the frequency unit 1 is not considered when the first value is determined. Because the network device does not send the control information in the target time unit, the terminal does not need to detect the control information in the target time unit. For a meaning of not considering the frequency unit 1, refer to the foregoing descriptions of not considering the frequency unit. Details are not described herein.

It may be understood that, if a time unit corresponding to a specific frequency unit in the frequency unit set includes a PDCCH detection occasion, or includes a time-frequency resource for detecting a PDCCH, and the time unit further includes a target time unit, the frequency unit may be considered when the first value is determined, or the frequency unit is calculated when the first value is determined. Because there is the PDCCH detection occasion or the time-frequency resource for detecting the PDCCH in the target time unit and on the frequency unit, the network device may send the control information in the target time unit and on the frequency unit. Therefore, the terminal may detect the control information in the target time unit and on the frequency unit. An example in which the frequency unit is a cell is used. If the frequency unit set includes a cell 0 and a cell 1, the target time unit is a slot 2 of the cell 1, and the slot 2 of the cell 1 includes a PDCCH detection occasion, the cell 1 may be considered when the first value is determined, or the cell 1 may be calculated when the first value is determined. For a meaning of not considering the frequency unit, refer to the foregoing descriptions of not considering the frequency unit. Details are not described herein.

It may be understood that, after determining the first value, the terminal may determine the detection capability information of the first frequency unit based on the first value. The following describes a meaning of the detection capability information in detail. For example, the detection capability information may have the following two cases.

Case A: The detection capability information may include a first maximum value and/or a second maximum value.

The first maximum value is a maximum quantity of detection times of the terminal in a first time unit, or the first maximum value may be a maximum quantity of times that the terminal can blindly detect a candidate PDCCH in the first time unit, or the first maximum value may be a maximum quantity of candidate PDCCHs that can be blindly detected by the terminal in the first time unit. The second maximum value is a maximum quantity of non-overlapped CCEs of the terminal in the first time unit, or the second maximum value may be a maximum quantity of non-overlapped CCEs when the terminal performs PDCCH blind detection in the first time unit. The first time unit is a time unit corresponding to the first frequency unit.

As described above, the target time unit may be the time unit corresponding to the first frequency unit, or may not be the time unit corresponding to the first frequency unit. If the target time unit is the time unit corresponding to the first frequency unit, a process in which the terminal determines the detection capability information of the first frequency unit based on the first value is similar to a process in which the terminal determines the blind detection capability of the terminal in the primary scheduling cell based on ${N}_{cells , 0}^{DL , μ}$ and ${N}_{cells , 1}^{DL , μ}$ in the foregoing explanations and descriptions of the technical terms. Therefore, reference may be made to the foregoing corresponding descriptions. A difference is that in Case 1, the detection capability information of the first frequency unit is related to the target time unit. Optionally, the terminal determines the detection capability information of the first frequency unit based on the target time unit. In other words, the terminal determines the detection capability information of the first frequency unit in each target time unit.

If the target time unit is not the time unit corresponding to the first frequency unit, that the terminal determines the detection capability information of the first frequency unit based on the first value includes: The terminal determines a third maximum value and/or a fourth maximum value based on the first value, and determines the detection capability information of the first frequency unit based on the third maximum value and/or the fourth maximum value. The third maximum value is a maximum quantity of detection times of the terminal in the target time unit, or the third maximum value may be a maximum quantity of times that the terminal can blindly detect a candidate PDCCH in the target time unit, or the third maximum value may be a maximum quantity of candidate PDCCHs that can be blindly detected by the terminal in the target time unit. The fourth maximum value is a maximum quantity of non-overlapped CCEs of the terminal in the target time unit, or the fourth maximum value may be a maximum quantity of non-overlapped CCEs when the terminal performs PDCCH blind detection in the target time unit. A process in which the terminal determines the third maximum value and/or the fourth maximum value based on the first value is similar to a process in which the terminal determines the blind detection capability of the terminal in the primary scheduling cell based on ${N}_{cells , 0}^{DL , μ}$ and ${N}_{cells , 1}^{DL , μ}$ in the foregoing explanations and descriptions of the technical terms. Therefore, reference may be made to the foregoing corresponding descriptions. A difference is that in Case 1, the detection capability information of the first frequency unit is related to the target time unit. Optionally, the terminal determines the detection capability information of the first frequency unit based on the target time unit. In other words, the terminal determines the detection capability information of the first frequency unit in each target time unit. The following describes a specific process in which the terminal determines the detection capability information of the first frequency unit based on the third maximum value and/or the fourth maximum value.

In a possible design, if N first time units correspond to the target time unit, a maximum quantity of detection times of the terminal in the N first time units and on the first frequency unit (or a maximum quantity of times that the terminal can blindly detect candidate PDCCHs in the N first time units and on the first frequency unit, or a maximum quantity of candidate PDCCHs that can be blindly detected by the terminal in the N first time units and on the first frequency unit) is the third maximum value, and/or a maximum quantity of non-overlapped CCEs of the terminal in the N first time units and on the first frequency unit (or a maximum quantity of non-overlapped CCEs when the terminal performs PDCCH blind detection in the N first time units and on the first frequency unit) is the fourth maximum value. N is a positive integer.

Optionally, a sum of maximum quantities of detection times in the N first time units (or maximum quantities of times that candidate PDCCHs can be blindly detected in the N first time units, or maximum quantities of candidate PDCCHs that can be blindly detected in the N first time units) is the third maximum value, and/or a sum of maximum quantities of non-overlapped CCEs of the terminal in the N first time units and on the first frequency unit (or maximum quantities of non-overlapped CCEs when the terminal performs PDCCH blind detection in the N first time units and on the first frequency unit) is the fourth maximum value.

Optionally, a sum of maximum quantities of detection times in the N first time units (or maximum quantities of times that candidate PDCCHs can be blindly detected in the N first time units, or maximum quantities of candidate PDCCHs that can be blindly detected in the N first time units) is less than or equal to the third maximum value, and/or a sum of maximum quantities of non-overlapped CCEs of the terminal in the N first time units and on the first frequency unit (or maximum quantities of non-overlapped CCEs when the terminal performs PDCCH blind detection in the N first time units and on the first frequency unit) is less than or equal to the fourth maximum value.

It may be understood that the maximum quantities of detection times in all first time units in the N first time units may be the same or may be different. Optionally, the maximum quantity of detection times in each first time unit in the N first time units is $\left⌊P/N\right⌋$ or $\left⌈P/N\right⌉$, where P is the third maximum value. $\left⌊P/N\right⌋$ indicates rounding down, for example, $\left⌊5/3\right⌋ = 1$; and $\left⌈P/N\right⌉$ indicates rounding up, for example, $\left⌈5/3\right⌉ = 2$.

For example, FIG. 16 is a schematic diagram of division into time units. In FIG. 16, a length of the target time unit is the same as a length of a time unit corresponding to the frequency unit 2. An example in which the third maximum value is 44, and the fourth maximum value is 56 is used. For a frequency unit 0, a maximum quantity of detection times of the terminal in a slot 0 to a slot 3 is 44, and a maximum quantity of non-overlapped CCEs of the terminal in the slot 0 to the slot 3 is 56. Further, for the frequency unit 0, a maximum quantity of detection times of the terminal in the slot 0, the slot 1, the slot 2, or the slot 3 is 11; or a maximum quantity of detection times of the terminal in the slot 0 is 10, a maximum quantity of detection times in the slot 1 is 11, a maximum quantity of detection times in the slot 2 is 13, and a maximum quantity of detection times in the slot 3 is 10. A maximum quantity of non-overlapped CCEs of the terminal in the slot 0, the slot 1, the slot 2, or the slot 3 is 14; or a maximum quantity of non-overlapped CCEs of the terminal in the slot 0 is 12, a maximum quantity of non-overlapped CCEs in the slot 1 is 16, a maximum quantity of non-overlapped CCEs in the slot 2 is 13, and a maximum quantity of non-overlapped CCEs in the slot 3 is 15. For the frequency unit 1, a maximum quantity of detection times of the terminal in the slot 0 and the slot 1 is 44, and a maximum quantity of non-overlapped CCEs of the terminal in the slot 0 and the slot 1 is 56. Further, for the frequency unit 1, a maximum quantity of detection times of the terminal in the slot 0 or the slot 1 is 22; or a maximum quantity of detection times of the terminal in the slot 0 is 24, and a maximum quantity of detection times of the terminal in the slot 1 is 20. A maximum quantity of non-overlapped CCEs of the terminal in the slot 0 or the slot 1 is 28; or a maximum quantity of non-overlapped CCEs of the terminal in the slot 0 is 26, and a maximum quantity of non-overlapped CCEs in the slot 1 is 30. For the frequency unit 2, a maximum quantity of detection times of the terminal in the slot 0 is 44, and a maximum quantity of non-overlapped CCEs of the terminal in the slot 0 is 56.

In a possible design, if the first time unit corresponds to M target time units, the first maximum value is a sum of M third maximum values, and the second maximum value is a sum of M fourth maximum values.

In the M third maximum values, an i^{th} third maximum value is a maximum quantity of detection times of the terminal in the second time unit (or a maximum quantity of times that the terminal can blindly detect a candidate PDCCH in the second time unit, or a maximum quantity of candidate PDCCHs that can be blindly detected by the terminal in the second time unit). In the M fourth maximum values, an i^{th} fourth maximum value is a maximum quantity of non-overlapped CCEs of the terminal in the second time unit (or a maximum quantity of non-overlapped CCEs when the terminal performs PDCCH blind detection in the second time unit). The second time unit is an i^{th} target time unit in the M target time units corresponding to the first time unit, M is a positive integer, i is a positive integer, and i is less than or equal to M.

For example, FIG. 17 is a schematic diagram of division into time units. In FIG. 17, a length of the target time unit is the same as a length of a time unit corresponding to the frequency unit 0. A length of a slot 0 of the frequency unit 1 is twice the length of the target time unit, and a length of a slot 0 of the frequency unit 2 is four times the length of the target time unit. An example in which a third maximum value corresponding to a target time unit 0 is 20, a fourth maximum value corresponding to the target time unit 0 is 32, a third maximum value corresponding to a target time unit 1 is 18, a fourth maximum value corresponding to the target time unit 1 is 30, a third maximum value corresponding to a target time unit 2 is 19, a fourth maximum value corresponding to the target time unit 2 is 31, a third maximum value corresponding to a target time unit 3 is 20, and a fourth maximum value corresponding to the target time unit 3 is 32 is used. For the frequency unit 0, a maximum quantity of detection times of the terminal in the slot 0 is 20, a maximum quantity of non-overlapped CCEs of the terminal in the slot 0 is 32, a maximum quantity of detection times of the terminal in the slot 1 is 18, a maximum quantity of non-overlapped CCEs of the terminal in the slot 1 is 30, a maximum quantity of detection times of the terminal in the slot 2 is 19, a maximum quantity of non-overlapped CCEs of the terminal in the slot 2 is 31, a maximum quantity of detection times of the terminal in the slot 3 is 20, and a maximum quantity of non-overlapped CCEs of the terminal in the slot 3 is 32. For the frequency unit 1, a maximum quantity of detection times of the terminal in the slot 0 is 20+18=38, a maximum quantity of non-overlapped CCEs of the terminal in the slot 0 is 32+30=62, a maximum quantity of detection times of the terminal in the slot 1 is 19+20=39, and a maximum quantity of non-overlapped CCEs of the terminal in the slot 1 is 31+32=63. For the frequency unit 2, a maximum quantity of detection times of the terminal in the slot 0 is 20+18+19+20=77, and a maximum quantity of non-overlapped CCEs of the terminal in the slot 0 is 32+30+31+32=125.

Optionally, the first maximum value is less than or equal to the sum of M third maximum values, and the second maximum value is less than or equal to the sum of M fourth maximum values.

Case B: The detection capability information includes a fifth maximum value and/or a sixth maximum value.

The fifth maximum value is a maximum quantity of detection times of the terminal in a target time unit, or the fifth maximum value may be a maximum quantity of times that the terminal can blindly detect a candidate PDCCH in the target time unit, or the fifth maximum value may be a maximum quantity of candidate PDCCHs that can be blindly detected by the terminal in the target time unit. The sixth maximum value is a maximum quantity of non-overlapped CCEs of the terminal in the target time unit, or the sixth maximum value may be a maximum quantity of non-overlapped CCEs when the terminal performs PDCCH blind detection in the target time unit.

In a possible design, if the first time unit corresponds to M target time units, a maximum quantity of detection times of the terminal in an i^{th} third time unit and on the first frequency unit (or a maximum quantity of times that the terminal can blindly detect a candidate PDCCH in the i^{th} third time unit and on the first frequency unit, or a maximum quantity of candidate PDCCHs that can be blindly detected by the terminal in the i^{th} third time unit and on the first frequency unit) is an i^{th} fifth maximum value, and a maximum quantity of non-overlapped CCEs of the terminal in the i^{th} third time unit and on the first frequency unit (or a maximum quantity of non-overlapped CCEs when the terminal performs blind PDCCH detection in the i^{th} third time unit and on the first frequency unit) is an i^{th} sixth maximum value.

The i^{th} third time unit is an i^{th} time unit in M time units that are in the first time unit and that correspond to the M target time units, M is a positive integer, i is a positive integer, and i is less than or equal to M. The i^{th} fifth maximum value is a maximum quantity of detection times of the terminal in the target time unit corresponding to the i^{th} third time unit, or a maximum quantity of times that the terminal can blindly detect a candidate PDCCH in the target time unit corresponding to the i^{th} third time unit, or a maximum quantity of candidate PDCCHs that can be blindly detected by the terminal in the target time unit corresponding to the i^{th} third time unit. The i^{th} sixth maximum value is a maximum quantity of non-overlapped CCEs of the terminal in the target time unit corresponding to the i^{th} third time unit, or a maximum quantity of non-overlapped CCEs when the terminal performs PDCCH blind detection in the target time unit corresponding to the ith third time unit.

It may be understood that, in the foregoing possible implementation, the terminal may determine the maximum quantity of detection times and/or the maximum quantity of non-overlapped CCEs in the third time unit, and determine a PDCCH blind detection position in the third time unit based on the maximum quantity of detection times, the maximum quantity of non-overlapped CCEs, and a PDCCH blind detection occasion that correspond to the third time unit. Therefore, a plurality of positions that may be detected may be provided for one PDCCH blind detection occasion. This improves a possibility of being detected.

Example 1: FIG. 17 is a schematic diagram of division into time units. In FIG. 17, a length of the target time unit is the same as a length of a time unit corresponding to the frequency unit 0. A length of a slot 0 of the frequency unit 1 is twice the length of the target time unit, and a length of a slot 0 of the frequency unit 2 is four times the length of the target time unit. An example in which a fifth maximum value corresponding to a target time unit 0 is 20, a sixth maximum value corresponding to the target time unit 0 is 32, a fifth maximum value corresponding to a target time unit 1 is 18, a sixth maximum value corresponding to the target time unit 1 is 30, a fifth maximum value corresponding to a target time unit 2 is 19, a sixth maximum value corresponding to the target time unit 2 is 31, a fifth maximum value corresponding to a target time unit 3 is 20, and a sixth maximum value corresponding to the target time unit 3 is 32 is used. For the frequency unit 0, a maximum quantity of detection times of the terminal in the slot 0 is 20, a maximum quantity of non-overlapped CCEs of the terminal in the slot 0 is 32, a maximum quantity of detection times of the terminal in a slot 1 is 18, a maximum quantity of non-overlapped CCEs of the terminal in the slot 1 is 30, a maximum quantity of detection times of the terminal in a slot 2 is 19, a maximum quantity of non-overlapped CCEs of the terminal in the slot 2 is 31, a maximum quantity of detection times of the terminal in a slot 3 is 20, and a maximum quantity of non-overlapped CCEs of the terminal in the slot 3 is 32. For the frequency unit 1, a maximum quantity of detection times of the terminal in a time unit 1701 (namely, a time unit corresponding to the target time unit 0) is 20, a maximum quantity of non-overlapped CCEs of the terminal in the time unit 1701 is 32, a maximum quantity of detection times of the terminal in a time unit 1702 (namely, a time unit corresponding to the target time unit 1) is 18, a maximum quantity of non-overlapped CCEs of the terminal in the time unit 1702 is 30, a maximum quantity of detection times of the terminal in a time unit 1703 (namely, a time unit corresponding to the target time unit 2) is 19, a maximum quantity of non-overlapped CCEs of the terminal in the time unit 1703 is 31, a maximum quantity of detection times of the terminal in a time unit 1704 (namely, a time unit corresponding to the target time unit 3) is 20, and a maximum quantity of non-overlapped CCEs of the terminal in the time unit 1704 is 32. For the frequency unit 2, a maximum quantity of detection times of the terminal in a time unit 1705 (namely, a time unit corresponding to the target time unit 0) is 20, a maximum quantity of non-overlapped CCEs of the terminal in the time unit 1705 is 32, a maximum quantity of detection times of the terminal in a time unit 1706 (namely, a time unit corresponding to the target time unit 1) is 18, a maximum quantity of non-overlapped CCEs of the terminal in the time unit 1706 is 30, a maximum quantity of detection times of the terminal in a time unit 1707 (namely, a time unit corresponding to the target time unit 2) is 19, a maximum quantity of non-overlapped CCEs of the terminal in the time unit 1707 is 31, a maximum quantity of detection times of the terminal in a time unit 1708 (namely, a time unit corresponding to the target time unit 3) is 20, and a maximum quantity of non-overlapped CCEs of the terminal in the time unit 1708 is 32.

Further, optionally, if the terminal does not detect the control information in a j^{th} third time unit, or there is no PDCCH blind detection occasion in the j^{th} third time unit, the terminal may allocate a maximum quantity of detection times in the j^{th} third time unit and/or a maximum quantity of non-overlapped CCEs in the j^{th} third time unit to a subsequent third time unit, where j is a positive integer, and j is less than M.

Example 2: The foregoing example 1 is used as an example. If the terminal does not detect the control information in the time unit 1705, or there is no PDCCH blind detection occasion in the time unit 1705, the terminal may allocate the maximum quantity of detection times in the time unit 1705 and/or the maximum quantity of non-overlapped CCEs in the time unit 1705 to one or more of the time unit 1706 to the time unit 1708. For example, if the terminal does not detect the control information in the time unit 1705, or there is no PDCCH blind detection occasion in the time unit 1705, the terminal allocates the maximum quantity of detection times in the time unit 1705 and/or the maximum quantity of non-overlapped CCEs in the time unit 1705 to the time unit 1706, the time unit 1707, and the time unit 1708. Specifically, the maximum quantity of detection times of the terminal in the time unit 1706 is 20+6=26, the maximum quantity of non-overlapped CCEs of the terminal in the time unit 1706 is 32+10=42, the maximum quantity of detection times of the terminal in the time unit 1707 is 19+6=25, the maximum quantity of non-overlapped CCEs of the terminal in the time unit 1707 is 31+10=41, the maximum quantity of detection times of the terminal in the time unit 1708 is 20+6=26, and the maximum quantity of non-overlapped CCEs of the terminal in the time unit 1708 is 32+10=42.

Example 3: The foregoing example 1 is used as an example. If the terminal does not detect the control information in the time unit 1705, or there is no PDCCH blind detection occasion in the time unit 1705, the terminal may allocate the maximum quantity of detection times in the time unit 1705 and/or the maximum quantity of non-overlapped CCEs in the time unit 1705 to the time unit 1706. In this case, the maximum quantity of detection times of the terminal in the time unit 1706 is 20+18=38, the maximum quantity of non-overlapped CCEs of the terminal in the time unit 1706 is 32+30=62, the maximum quantity of detection times of the terminal in the time unit 1707 is 19, the maximum quantity of non-overlapped CCEs of the terminal in the time unit 1707 is 31, the maximum quantity of detection times of the terminal in the time unit 1708 is 20, and the maximum quantity of non-overlapped CCEs of the terminal in the time unit 1708 is 32. It may be understood that, if the terminal does not detect the control information in the time unit 1706, or there is no PDCCH blind detection occasion in the time unit 1706, the terminal may allocate the maximum quantities of detection times in the time unit 1705 and the time unit 1706 and/or the maximum quantities of non-overlapped CCEs in the time unit 1705 and the time unit 1706 to the time unit 1707, and the rest may be deduced by analogy.

Optionally, if a final quantity of detection times of the terminal in the j^{th} third time unit is less than the maximum quantity of detection times of the terminal in the j^{th} third time unit, the terminal allocates a quantity of remaining times in the j^{th} third time unit to a subsequent third time unit. Similarly, if a final quantity of non-overlapped CCEs of the terminal in the j^{th} third time unit is less than the maximum quantity of non-overlapped CCEs of the terminal in the j^{th} third time unit, the terminal allocates a quantity of remaining non-overlapped CCEs in the j^{th} third time unit to a subsequent third time unit.

Example 4: The foregoing example 1 is used as an example. If a final quantity of detection times of the terminal in the time unit 1705 is 11, and a final quantity of non-overlapped CCEs of the terminal in the time unit 1705 is 20, in the time unit 1705, 9 is remaining relative to the maximum quantity 20 of detection times, and 12 is remaining relative to the maximum quantity 32 of non-overlapped CCEs. In this case, the terminal may allocate 9 and 12 to the time unit 1706. For example, the maximum quantity of detection times of the terminal in the time unit 1706 is 20+9=29, and the maximum quantity of non-overlapped CCEs of the terminal in the time unit 1706 is 32+12=44. Similarly, if a final quantity of detection times of the terminal in the time unit 1706 is less than 29, and a final quantity of non-overlapped CCEs of the terminal in the time unit 1706 is less than 44, the terminal may allocate a quantity of remaining detection times and a quantity of remaining non-overlapped CCEs to the time unit 1707, and the rest may be deduced by analogy.

Case 2: The first value is a sum of quantities of times that all frequency units are calculated in frequency units that can be scheduled by a frequency unit in a frequency unit set.

The frequency unit set may include at least one frequency unit, and the at least one frequency unit is a primary scheduling frequency unit, and may include the first frequency unit in S1301. The at least one frequency unit corresponds to a same subcarrier spacing. Optionally, the frequency units included in the frequency unit set are all frequency units configured by the network device for the terminal, or the frequency units included in the frequency unit set are a subset of all frequency units configured by the network device for the terminal. For other descriptions of the frequency unit set and descriptions of all the frequency units, refer to the descriptions in Case 1 in S1301.

In a possible implementation, a quantity of times that any frequency unit is calculated in the frequency units that can be scheduled by the frequency unit in the frequency unit set is less than or equal to Y, where Y is a positive integer. In the frequency units that can be scheduled by the frequency unit in the frequency unit set, different frequency units may have a same or different values of Y.

For example, an example in which the frequency unit is a cell is used. The terminal may group the frequency units based on the subcarrier spacing, denoted as ${N}_{cells , 0}^{′ DL , μ}$ or ${N}_{cells , 1}^{′ DL , μ}$. ${N}_{cells , 0}^{′ DL , μ}$ or ${N}_{cells , 1}^{′ DL , μ}$ may indicate a sum of quantities of times that all cells in cells that can be scheduled by the primary scheduling cell with a subcarrier spacing of 2*^{µ}* ·15 kHz are calculated. In other words, the first value includes ${N}_{cells , 0}^{′ DL , μ}$ and ${N}_{cells , 1}^{′ DL , μ}$. For a difference between ${N}_{cells , 0}^{′ DL , μ}$ and ${N}_{cells , 1}^{′ DL , μ}$, refer to descriptions of a difference between ${N}_{cells , 0}^{DL , μ}$ and ${N}_{cells , 1}^{DL , μ}$ in the foregoing descriptions of technical terms.

For example, that the frequency unit is a cell is used as an example for description. FIG. 18 is a schematic diagram of cross-carrier scheduling. FIG. 18 shows that the frequency unit set includes a cell 0 and a cell 2. Cells that can be scheduled by the cell 0 are the cell 0, a cell 1, and a cell 2, and cells that can be scheduled by the cell 2 are the cell 0 and the cell 1. Therefore, cells that can be scheduled by the cell 0 and the cell 2 are the cell 0, the cell 1, and the cell 2. An example in which Y=2 is used. A quantity of times that the cell 0, the cell 1, and the cell 2 are calculated is 1. In this case, ${N}_{cells , 0}^{′ DL , 0} = 1 + 1 + 1 = 3$. An example in which the value of Y corresponding to the cell 0 is 1, and the value of Y corresponding to the cell 1 and the cell 2 are 2. A quantity of times that the cell 0 is calculated is 1, and a quantity of times that the cell 1 and the cell 2 are calculated is 2. In this case, ${N}_{cells , 0}^{′ DL , 0} = 1 + 2 + 2 = 5$.

It may be understood that flexibility of frequency unit scheduling may be controlled by using the value of Y. A larger value of Y indicates higher flexibility, and a smaller value of Y indicates lower flexibility. However, higher flexibility of frequency unit scheduling indicates a larger quantity of times that the terminal needs to perform blind detection, and higher complexity of blind detection. Therefore, the value of Y needs to be set appropriately to match an actual requirement.

In a possible implementation, the terminal may report the value of Y to the network device. For example, the terminal sends first indication information to the network device, where the first indication information may be used by the network device to determine the value of Y. For example, the first indication information includes the value of Y, or the first indication information includes a parameter used to determine the value of Y.

In a possible design, the terminal can detect the control information on the frequency unit in the frequency unit set. In other words, a downlink signal can be sent on the frequency unit in the frequency unit set. Alternatively, a time domain resource corresponding to the frequency unit in the frequency unit set includes a downlink symbol or a flexible symbol. A meaning of the control information that can be detected by the terminal on the frequency unit in the frequency unit set is similar to a meaning of the control information that can be detected by the terminal in the target time unit and on the frequency unit in the frequency unit set. Therefore, reference may be made to corresponding descriptions in Case 1. Details are not described herein.

It may be understood that, after determining the first value, the terminal may determine the detection capability information of the first frequency unit based on the first value. The detection capability information includes a seventh maximum value and/or an eighth maximum value. The seventh maximum value is a maximum quantity of detection times of the terminal in a time unit corresponding to the first frequency unit, or the seventh maximum value may be a maximum quantity of times that the terminal can blindly detect a candidate PDCCH in the time unit corresponding to the first frequency unit, or the seventh maximum value may be a maximum quantity of candidate PDCCHs that can be blindly detected by the terminal in the time unit corresponding to the first frequency unit. The eighth maximum value is a maximum quantity of non-overlapped CCEs of the terminal in the time unit corresponding to the first frequency unit, or the eighth maximum value may be a maximum quantity of non-overlapped CCEs when the terminal performs PDCCH blind detection in the time unit corresponding to the first frequency unit. The seventh maximum value and/or the eighth maximum value may indicate a PDCCH blind detection capability. For Case 2, a process in which the terminal determines the detection capability information of the first frequency unit based on the first value is similar to a process in which the terminal determines the blind detection capability of the terminal in the primary scheduling cell based on ${N}_{cells , 0}^{DL , μ}$ and ${N}_{cells , 1}^{DL , μ}$ in the foregoing explanations and descriptions of the technical terms. Therefore, reference may be made to the foregoing corresponding descriptions.

S1302: The network device determines the detection capability information of the first frequency unit based on the first value.

The network device may be the network device 801 in the communication system 80 shown in FIG. 8.

It may be understood that a process in which the network device determines the detection capability information of the first frequency unit based on the first value is similar to a process in which the terminal determines the detection capability information of the first frequency unit based on the first value. Therefore, for a specific process of S1302, refer to corresponding descriptions in S1301. Details are not described herein.

An execution sequence of S1301 and S1302 is not limited in this embodiment of this application. For example, S1301 may be performed before S1302 in this embodiment of this application, or S1302 may be performed before S1301 in this embodiment of this application, or S1301 and S1302 may be performed at the same time in this embodiment of this application. This is not limited.

S1303: The terminal detects the control information based on the detection capability information.

In a possible implementation, for Case A in S1301, the terminal detects the control information in the first time unit and on the frequency unit in the frequency unit set based on the detection capability information. For Case B in S1301, the terminal detects the control information in the target time unit and on the frequency unit in the frequency unit set based on the detection capability information. For Case 2 in S1301, the terminal detects the control information on the frequency unit in the frequency unit set based on the detection capability information.

Optionally, when the control information needs to be sent, the network device sends the control information to the terminal based on the detection capability information. In other words, when sending the control information to the terminal, the network device may consider the detection capability information, so that the control information sent by the network device falls within a detection range of the terminal. It should be understood that regardless of whether the network device sends the control information, the terminal may detect the control information based on the detection capability information, to determine whether there is control information from the network device.

According to the method in FIG. 13, the terminal may determine the detection capability information of the first frequency unit based on the first value, and detect the control information based on the detection capability information. When the first value is the quantity of frequency units that can be scheduled by the frequency unit in the frequency unit set in the target time unit, the terminal may determine a detection capability based on the target time unit, detect the control information based on the detection capability, and then determine the detection capability information at different moments based on an actual situation. This improves flexibility of frequency unit scheduling. In addition, the terminal may apply, at different moments, a PDCCH blind detection capability to a position that needs to be detected, so that flexibility of frequency unit scheduling is improved without increasing terminal complexity. When the first value is the sum of quantities of times that all frequency units are calculated in the frequency units that can be scheduled by the frequency unit in the frequency unit set, flexibility of frequency unit scheduling may be controlled by using the quantity of times that any frequency unit is calculated in the frequency units that can be scheduled by the frequency unit in the frequency unit set, to implement flexible frequency unit scheduling.

Actions of the terminal or the network device in S1301 to S1303 may be performed by the processor 901 in the communication apparatus 90 shown in FIG. 9 by invoking the application program code stored in the memory 903. This is not limited in this embodiment of this application.

FIG. 19 shows another communication method according to an embodiment of this application. The communication method includes S1901 and S1902.

S1901: A network device sends first indication information to a terminal. Correspondingly, the terminal receives the first indication information from the network device.

The network device may be the network device 801 in the communication system 80 shown in FIG. 8, and the terminal may be any terminal, for example, the terminal 802, the terminal 803, or the terminal 804, in the communication system 80 shown in FIG. 8. The first indication information may be used by the terminal to determine a plurality of first frequency units in a first frequency unit set.

The first frequency unit set may include a plurality of frequency units. Optionally, the plurality of frequency units are all frequency units configured by the network device for the terminal, or the plurality of frequency units are a subset of all frequency units configured by the network device for the terminal.

Optionally, transmission directions of any two frequency units included in all the frequency units configured by the network device for the terminal in a same time unit are opposite or the same. For explanations of opposite or same transmission directions, refer to descriptions in S1001.

Optionally, a transmission direction of any frequency unit included in all the frequency units in the time unit is independently configured.

Optionally, the terminal receives indication information A sent by the network device, where the indication information A indicates a transmission direction, in a time unit A, of a frequency unit A included in all the frequency units. The transmission direction may be for uplink transmission or downlink transmission.

Optionally, the terminal further receives indication information B sent by the network device, where the indication information B indicates a transmission direction, in the time unit A, of a frequency unit B included in all the frequency units. The transmission direction may be for uplink transmission or downlink transmission.

In an implementation, the indication information A is configured for the frequency unit A, and the indication information B is configured for the frequency unit B.

For specific descriptions of the first indication information, specific descriptions of the first frequency unit set, descriptions of the first frequency unit, and a process in which the terminal determines the plurality of first frequency units in the first frequency unit set based on the first indication information, refer to corresponding descriptions in S1001. Details are not described herein.

S1902: The terminal detects first control information on a frequency unit in the plurality of first frequency units.

For descriptions of S1902, refer to corresponding descriptions in S1002. Details are not described herein.

According to the method in FIG. 19, the terminal may receive the first indication information from the network device, and detect, on the frequency unit in the plurality of first frequency units based on the first indication information, the first control information used to schedule data transmission on a second frequency unit. In the foregoing process, the second frequency unit may be scheduled by the plurality of first frequency units, so that the frequency unit is flexibly scheduled, a transmission delay is low, implementation is simple, and data transmission flexibility is improved. In addition, in the foregoing process, quite large uplink-downlink switching overheads and small-granularity transmission do not need to be introduced. Therefore, DMRS overheads are small. In addition, the plurality of first frequency units are determined in the first frequency unit set, so that the terminal may detect the first control information on the frequency unit in the plurality of first frequency units. This reduces complexity of blind detection performed by the terminal.

Actions of the terminal or the network device in S1901 and S1902 may be performed by the processor 901 in the communication apparatus 90 shown in FIG. 9 by invoking the application program code stored in the memory 903. This is not limited in this embodiment of this application.

FIG. 20 shows another communication method according to an embodiment of this application. The communication method includes S2001 and S2002.

S2001: A network device sends first indication information to a terminal. Correspondingly, the terminal receives the first indication information from the network device.

The network device may be the network device 801 in the communication system 80 shown in FIG. 8, and the terminal may be any terminal, for example, the terminal 802, the terminal 803, or the terminal 804, in the communication system 80 shown in FIG. 8. The first indication information may be used by the terminal to determine at least one first frequency unit in a first frequency unit set.

The first frequency unit set may include a plurality of frequency units. Optionally, the plurality of frequency units are all frequency units configured by the network device for the terminal, or the plurality of frequency units are a subset of all frequency units configured by the network device for the terminal.

Optionally, transmission directions of any two frequency units included in all the frequency units configured by the network device for the terminal in a same time unit are opposite or the same. For explanations of opposite or same transmission directions, refer to descriptions in S1001.

Optionally, a transmission direction of any frequency unit included in all the frequency units in the time unit is independently configured.

Optionally, the terminal receives indication information A sent by the network device, where the indication information A indicates a transmission direction, in a time unit A, of a frequency unit A included in all the frequency units. The transmission direction may be for uplink transmission or downlink transmission.

Optionally, the terminal further receives indication information B sent by the network device, where the indication information B indicates a transmission direction, in the time unit A, of a frequency unit B included in all the frequency units. The transmission direction may be for uplink transmission or downlink transmission.

In an implementation, the indication information A is configured for the frequency unit A, and the indication information B is configured for the frequency unit B.

For specific descriptions of the first indication information, specific descriptions of the first frequency unit set, descriptions of the first frequency unit, and a process in which the terminal determines the at least one first frequency unit in the first frequency unit set based on the first indication information, refer to corresponding descriptions in S1201. Details are not described herein.

S2002: The terminal detects first control information on a frequency unit in the at least one first frequency unit and in a time unit in at least one first time unit.

For descriptions of S2002, refer to corresponding descriptions in S1202. Details are not described herein.

According to the method shown in FIG. 20, the terminal may receive the first indication information from the network device, and detect the first control information on the frequency unit in the at least one first frequency unit and in the time unit in the at least one first time unit based on the first indication information. The first control information may be used to schedule data transmission on a second frequency unit. In the foregoing process, the second frequency unit may be scheduled by the at least one first frequency unit, and any first frequency unit in the at least one first frequency unit may correspond to the at least one first time unit. In other words, a candidate frequency unit (namely, the first frequency unit) that carries the first control information may be configured based on the time unit, so that the frequency unit is flexibly scheduled, a transmission delay is low, and implementation is simple. In addition, in the foregoing process, quite large uplink-downlink handover overheads and small-granularity transmission do not need to be introduced. Therefore, DMRS overheads are relatively small. In addition, when the at least one first frequency unit includes a plurality of first frequency units, candidate frequency units for carrying the first control information may be different in different first time units, or frequency units used to schedule the second frequency unit may be different in different first time units, so that the frequency unit is more flexibly scheduled.

Actions of the terminal or the network device in S2001 and S2002 may be performed by the processor 901 in the communication apparatus 90 shown in FIG. 9 by invoking the application program code stored in the memory 903. This is not limited in this embodiment of this application.

It may be understood that, in the foregoing embodiments, the methods and/or steps implemented by the terminal may alternatively be implemented by a component (for example, a chip or a circuit) that can be used in the terminal, and the methods and/or steps implemented by the network device may alternatively be implemented by a component (for example, a chip or a circuit) that can be used in the network device.

The foregoing mainly describes the solutions provided in embodiments of this application from a perspective of interaction between network elements. Correspondingly, an embodiment of this application further provides a communication apparatus. The communication apparatus may be the terminal in the foregoing method embodiments, an apparatus including the foregoing terminal, or a component that can be used in the terminal. Alternatively, the communication apparatus may be the network device in the foregoing method embodiments, an apparatus including the foregoing network device, or a component that can be used in the network device. It may be understood that, to implement the foregoing functions, the terminal or the network device includes corresponding hardware structures and/or software modules for performing the functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the terminal or the network device may be obtained through division based on the foregoing method examples. For example, each functional module may be obtained through division in correspondence to each function, or two or more functions may be integrated into one processing module. The integrated module may be implemented in a form of hardware, or may be implemented in a form of a software functional module. It should be noted that, in embodiments of this application, division into modules is an example, and is merely logical function division. During actual implementation, another division manner may be used.

For example, when functional modules are obtained through division in an integrated manner, FIG. 21 is a schematic diagram of a structure of a communication apparatus 210. The communication apparatus 210 includes a receiving module 2101 and a processing module 2102. The receiving module 2101 may also be referred to as a receiving unit, and is configured to implement a receiving function, for example, may be a receiving circuit, a receiver machine, a receiver, or a communication interface. Optionally, the communication apparatus 210 further includes a sending module 2103. The sending module 2103 may also be referred to as a sending unit, and is configured to implement a sending function, for example, may be a sending circuit, a transmitter machine, a transmitter, or a communication interface.

For example, the communication apparatus 210 is configured to implement a function of a terminal. The communication apparatus 210 is, for example, the terminal described in the embodiment shown in FIG. 10 or the embodiment shown in FIG. 19.

The receiving module 2101 is configured to receive first indication information from a network device, where the first indication information is used by the communication apparatus 210 to determine a plurality of first frequency units in a first frequency unit set, the first frequency unit is a candidate frequency unit for carrying first control information, and the first control information is used to schedule data transmission on a second frequency unit. The processing module 2102 is configured to detect the first control information on a frequency unit in the plurality of first frequency units.

Alternatively, the receiving module 2101 is configured to receive first indication information from a network device, where the first indication information is used by the communication apparatus 210 to determine a candidate frequency unit set in a first frequency unit set, the candidate frequency unit set includes at least two first frequency units, the first frequency unit is a candidate frequency unit for carrying first control information, and the first control information is used to schedule data transmission on a second frequency unit. The processing module 2102 is configured to determine, in the candidate frequency unit set, a frequency unit used to detect the first control information.

Alternatively, the receiving module 2101 is configured to receive first indication information from a network device, where the first indication information is used by the communication apparatus 210 to determine a candidate frequency unit set in a first frequency unit set, the candidate frequency unit set includes at least two first frequency units, the first frequency unit is a candidate frequency unit for carrying first control information, and the first control information is used to schedule data transmission on a second frequency unit. The processing module 2102 is configured to detect the first control information on at least one first frequency unit in the candidate frequency unit set.

In a possible implementation, the first indication information indicates a correspondence between the first frequency unit and a first time unit, and the first time unit is a candidate time unit for detecting the first control information.

In a possible implementation, the first indication information includes an index of the at least one first frequency unit, and the index of the first frequency unit corresponds to the first time unit.

In a possible implementation, the first indication information indicates a periodicity of the first frequency unit.

In a possible implementation, the first indication information includes periodicity information of the first frequency unit.

In a possible implementation, the first indication information indicates a periodicity of the first frequency unit and a first offset, the first offset is an offset between at least one first time unit corresponding to the first frequency unit and a time domain start position of the periodicity of the first·frequency unit, and the first time unit is a candidate time unit for detecting the first control information.

In a possible implementation, the first indication information includes periodicity information of the first frequency unit and a first offset, the first offset is an offset between at least one first time unit corresponding to the first frequency unit and a time domain start position of a periodicity of the first frequency unit, and the first time unit is a candidate time unit for detecting the first control information.

In a possible implementation, the first indication information indicates a periodicity of a time unit set, the time unit set includes a plurality of time units, the plurality of time units include a first time unit, and the first time unit is a candidate time unit for detecting the first control information.

In a possible implementation, the first indication information includes periodicity information of a time unit set, the time unit set includes a plurality of time units, the plurality of time units include a first time unit, and the first time unit is a candidate time unit for detecting the first control information.

In a possible implementation, the first indication information indicates a periodicity of a time unit set and a second offset, the time unit set includes a plurality of time units, the plurality of time units include a first time unit, the first time unit is a candidate time unit for detecting the first control information, and the second offset is an offset between the time unit set corresponding to the first frequency unit and a time domain start position of the periodicity of the time unit set.

In a possible implementation, the first indication information includes periodicity information of a time unit set and a second offset, the time unit set includes a plurality of time units, the plurality of time units include a first time unit, the first time unit is a candidate time unit for detecting the first control information, and the second offset is an offset between the time unit set corresponding to the first frequency unit and a time domain start position of a periodicity of the time unit set.

In a possible implementation, the receiving module 2101 is further configured to receive fourth indication information from the network device, where the fourth indication information indicates a position of the first time unit in the time unit set.

In a possible implementation, the receiving module 2101 is further configured to receive fourth indication information from the network device, where the fourth indication information includes indication information of a time domain position, and the indication information of the time domain position indicates a position of the first time unit in the time unit set.

In a possible implementation, the first indication information is carried in radio resource control signaling, a media access control control element, or physical layer signaling.

In a possible implementation, if the plurality of first frequency units include the second frequency unit, the frequency unit for carrying the first control information is the second frequency unit.

In a possible implementation, a quantity of frequency units used to detect the first control information is less than or equal to a first threshold.

In a possible implementation, the sending module 2103 is configured to send second indication information to the network device, where the second indication information indicates the first threshold.

In a possible implementation, a length of the first time unit is the same as a length of a time unit corresponding to a reference frequency unit, or the length of the first time unit is configured by the network device.

In a possible implementation, the reference frequency unit is configured by the network device or predefined.

In a possible implementation, the receiving module 2101 is further configured to receive third indication information from the network device, where the third indication information indicates the first frequency unit set.

When the communication apparatus 210 is configured to implement the function of the terminal, for other functions that can be implemented by the communication apparatus 210, refer to related descriptions of the embodiment shown in FIG. 10 or the embodiment shown in FIG. 19. Details are not described.

Alternatively, for example, the communication apparatus 210 is configured to implement a function of a terminal. The communication apparatus 210 is, for example, the terminal described in the embodiment shown in FIG. 12 or the embodiment shown in FIG. 20.

The receiving module 2101 is configured to receive first indication information from a network device, where the first indication information is used by the communication apparatus 210 to determine at least one first frequency unit in a first frequency unit set, the first frequency unit corresponds to at least one first time unit, the first frequency unit is a candidate frequency unit for carrying first control information, the first control information is used to schedule data transmission on a second frequency unit, and the first time unit is a candidate time unit for detecting the first control information. The processing module 2102 is configured to detect the first control information on a frequency unit in the at least one first frequency unit and in a time unit in the at least one first time unit.

Alternatively, the receiving module 2101 is configured to receive first indication information from a network device, where the first indication information is used by the communication apparatus 210 to determine a candidate frequency unit set in a first frequency unit set, the candidate frequency unit set includes at least one first frequency unit, the first frequency unit corresponds to at least one first time unit, the first frequency unit is a candidate frequency unit for carrying first control information, the first control information is used to schedule data transmission on a second frequency unit, and the first time unit is a candidate time unit for detecting the first control information. The processing module 2102 is configured to determine, in the candidate frequency unit set, a frequency unit used to detect the first control information.

Alternatively, the receiving module 2101 is configured to receive first indication information from a network device, where the first indication information is used by the communication apparatus 210 to determine a candidate frequency unit set in a first frequency unit set, the candidate frequency unit set includes at least one first frequency unit, the first frequency unit corresponds to at least one first time unit, the first frequency unit is a candidate frequency unit for carrying first control information, the first control information is used to schedule data transmission on a second frequency unit, and the first time unit is a candidate time unit for detecting the first control information. The processing module 2102 is configured to detect the first control information on a frequency unit in the at least one first frequency unit and in a time unit in the at least one first time unit.

In a possible implementation, the first indication information indicates a correspondence between the first frequency unit and the first time unit.

In a possible implementation, the first indication information includes an index of the at least one first frequency unit, and the index of the first frequency unit corresponds to the first time unit.

In a possible implementation, the first indication information indicates a periodicity of the first frequency unit.

In a possible implementation, the first indication information includes periodicity information of the first frequency unit.

In a possible implementation, the first indication information indicates a periodicity of the first frequency unit and a first offset, and the first offset is an offset between the at least one first time unit corresponding to the first frequency unit and a time domain start position of the periodicity of the first frequency unit.

In a possible implementation, the first indication information includes periodicity information of the first frequency unit and a first offset, and the first offset is an offset between the at least one first time unit corresponding to the first frequency unit and a time domain start position of a periodicity of the first frequency unit.

In a possible implementation, the first indication information indicates a periodicity of a time unit set, the time unit set includes a plurality of time units, and the plurality of time units include the first time unit.

In a possible implementation, the first indication information includes periodicity information of a time unit set, the time unit set includes a plurality of time units, and the plurality of time units include the first time unit.

In a possible implementation, the first indication information indicates a periodicity of a time unit set and a second offset, the time unit set includes a plurality of time units, the plurality of time units include the first time unit, and the second offset is an offset between the time unit set corresponding to the first frequency unit and a time domain start position of the periodicity of the time unit set.

In a possible implementation, the first indication information includes periodicity information of a time unit set and a second offset, the time unit set includes a plurality of time units, the plurality of time units include the first time unit, and the second offset is an offset between the time unit set corresponding to the first frequency unit and a time domain start position of a periodicity of the time unit set.

In a possible implementation, the receiving module 2101 is further configured to receive fourth indication information from the network device, where the fourth indication information indicates a position of the first time unit in the time unit set.

In a possible implementation, the receiving module 2101 is further configured to receive fourth indication information from the network device, where the fourth indication information includes indication information of a time domain position, and the indication information of the time domain position indicates a position of the first time unit in the time unit set.

In a possible implementation, the first indication information is carried in radio resource control signaling, a media access control control element, or physical layer signaling.

In a possible implementation, if the plurality of first frequency units include the second frequency unit, the frequency unit for carrying the first control information is the second frequency unit.

In a possible implementation, a quantity of frequency units used to detect the first control information is less than or equal to a first threshold.

In a possible implementation, the sending module 2103 is configured to send second indication information to the network device, where the second indication information indicates the first threshold.

In a possible implementation, a length of the first time unit is the same as a length of a time unit corresponding to a reference frequency unit, or the length of the first time unit is configured by the network device.

In a possible implementation, the reference frequency unit is configured by the network device or predefined.

In a possible implementation, the receiving module 2101 is further configured to receive third indication information from the network device, where the third indication information indicates the first frequency unit set.

When the communication apparatus 210 is configured to implement the function of the terminal, for other functions that can be implemented by the communication apparatus 210, refer to related descriptions of the embodiment shown in FIG. 12 or the embodiment shown in FIG. 20. Details are not described.

In a simple embodiment, a person skilled in the art may figure out that the communication apparatus 210 may be in the form shown in FIG. 9. For example, the processor 901 in FIG. 9 may invoke the computer-executable instructions stored in the memory 903, so that the communication apparatus 210 performs the method in the foregoing method embodiments.

For example, functions/implementation processes of the receiving module 2101, the processing module 2102, and the sending module 2103 in FIG. 21 may be implemented by the processor 901 in FIG. 9 by invoking the computer-executable instructions stored in the memory 903. Alternatively, a function/implementation process of the processing module 2102 in FIG. 21 may be implemented by the processor 901 in FIG. 9 by invoking the computer-executable instructions stored in the memory 903, and functions/implementation processes of the receiving module 2101 and the sending module 2103 in FIG. 21 may be implemented by the communication interface 904 in FIG. 9.

For example, when functional modules are obtained through division in an integrated manner, FIG. 22 is a schematic diagram of a structure of a communication apparatus 220. The communication apparatus 220 includes a sending module 2201. The sending module 2201 may also be referred to as a sending unit, and is configured to implement a sending function, for example, may be a sending circuit, a transmitter machine, a transmitter, or a communication interface. Optionally, the communication apparatus 220 further includes a receiving module 2202. The receiving module 2202 may also be referred to as a receiving unit, and is configured to implement a receiving function, for example, may be a receiving circuit, a receiver machine, a receiver, or a communication interface.

For example, the communication apparatus 220 is configured to implement a function of a network device. The communication apparatus 220 is, for example, the network device described in the embodiment shown in FIG. 10 or the embodiment shown in FIG. 19.

The sending module 2201 is configured to send first indication information to a terminal, where the first indication information is used by the terminal to determine a plurality of first frequency units in a first frequency unit set, the first frequency unit is a candidate frequency unit for carrying first control information, and the first control information is used to schedule data transmission on a second frequency unit. The sending module 2201 is further configured to send the first control information to the terminal on a frequency unit in the plurality of first frequency units.

Alternatively, the sending module 2201 is configured to send first indication information to a terminal, where the first indication information is used by the terminal to determine a candidate frequency unit set in a first frequency unit set, the candidate frequency unit set includes at least two first frequency units, the first frequency unit is a candidate frequency unit for carrying first control information, and the first control information is used to schedule data transmission on a second frequency unit. The sending module 2201 is further configured to send the first control information on at least one first frequency unit in the candidate frequency unit set.

In a possible implementation, the first indication information indicates a correspondence between the first frequency unit and a first time unit, and the first time unit is a candidate time unit for detecting the first control information by the terminal.

In a possible implementation, the first indication information includes an index of the at least one first frequency unit, and the index of the first frequency unit corresponds to the first time unit.

In a possible implementation, the first indication information indicates a periodicity of the first frequency unit.

In a possible implementation, the first indication information includes periodicity information of the first frequency unit.

In a possible implementation, the first indication information indicates a periodicity of the first frequency unit and a first offset, the first offset is an offset between at least one first time unit corresponding to the first frequency unit and a time domain start position of the periodicity of the first frequency unit, and the first time unit is a candidate time unit for detecting the first control information by the terminal.

In a possible implementation, the first indication information includes periodicity information of the first frequency unit and a first offset, the first offset is an offset between at least one first time unit corresponding to the first frequency unit and a time domain start position of a periodicity of the first frequency unit, and the first time unit is a candidate time unit for detecting the first control information by the terminal.

In a possible implementation, the first indication information indicates a periodicity of a time unit set, the time unit set includes a plurality of time units, the plurality of time units include a first time unit, and the first time unit is a candidate time unit for detecting the first control information by the terminal.

In a possible implementation, the first indication information includes periodicity information of a time unit set, the time unit set includes a plurality of time units, the plurality of time units include a first time unit, and the first time unit is a candidate time unit for detecting the first control information by the terminal.

In a possible implementation, the first indication information indicates a periodicity of a time unit set and a second offset, the time unit set includes a plurality of time units, the plurality of time units include a first time unit, the first time unit is a candidate time unit for detecting the first control information by the terminal, and the second offset is an offset between the time unit set corresponding to the first frequency unit and a time domain start position of the periodicity of the time unit set.

In a possible implementation, the first indication information includes periodicity information of a time unit set and a second offset, the time unit set includes a plurality of time units, the plurality of time units include a first time unit, the first time unit is a candidate time unit for detecting the first control information by the terminal, and the second offset is an offset between the time unit set corresponding to the first frequency unit and a time domain start position of a periodicity of the time unit set.

In a possible implementation, the sending module 2201 is further configured to send fourth indication information to the terminal, where the fourth indication information indicates a position of the first time unit in the time unit set.

In a possible implementation, the sending module 2201 is further configured to send fourth indication information to the terminal, where the fourth indication information includes indication information of a time domain position, and the indication information of the time domain position indicates a position of the first time unit in the time unit set.

In a possible implementation, the first indication information is carried in radio resource control signaling, a media access control control element, or physical layer signaling.

In a possible implementation, if the plurality of first frequency units include the second frequency unit, the frequency unit for carrying the first control information is the second frequency unit.

In a possible implementation, a quantity of frequency units for detecting the first control information by the terminal is less than or equal to a first threshold.

In a possible implementation, the receiving module 2202 is configured to receive second indication information from the terminal, where the second indication information indicates the first threshold.

In a possible implementation, a length of the first time unit is the same as a length of a time unit corresponding to a reference frequency unit, or the length of the first time unit is configured by the communication apparatus 220.

In a possible implementation, the reference frequency unit is configured by the communication apparatus 220 or predefined.

In a possible implementation, the sending module 2201 is further configured to send third indication information to the terminal, where the third indication information indicates the first frequency unit set.

When the communication apparatus 220 is configured to implement the function of the network device, for other functions that can be implemented by the communication apparatus 220, refer to related descriptions of the embodiment shown in FIG. 10 or the embodiment shown in FIG. 19. Details are not described.

Alternatively, for example, the communication apparatus 220 is configured to implement a function of a network device. The communication apparatus 220 is, for example, the network device described in the embodiment shown in FIG. 12 or the embodiment shown in FIG. 20.

The sending module 2201 is configured to send first indication information to a terminal, where the first indication information is used by the terminal to determine at least one first frequency unit in a first frequency unit set, the first frequency unit corresponds to at least one first time unit, the first frequency unit is a candidate frequency unit for carrying first control information, the first control information is used to schedule data transmission on a second frequency unit, and the first time unit is a candidate time unit for detecting the first control information by the terminal. The sending module 2201 is further configured to send the first control information on a frequency unit in the at least one first frequency unit and in a time unit in the at least one first time unit.

Alternatively, the sending module 2201 is configured to send first indication information to a terminal, where the first indication information is used by the terminal to determine a candidate frequency unit set in a first frequency unit set, the candidate frequency unit set includes at least one first frequency unit, the first frequency unit corresponds to at least one first time unit, the first frequency unit is a candidate frequency unit for carrying first control information, the first control information is used to schedule data transmission on a second frequency unit, and the first time unit is a candidate time unit for detecting the first control information by the terminal. The sending module 2201 is further configured to send the first control information on a frequency unit in the at least one first frequency unit and in a time unit in the at least one first time unit.

In a possible implementation, the first indication information indicates a correspondence between the first frequency unit and the first time unit.

In a possible implementation, the first indication information includes an index of the at least one first frequency unit, and the index of the first frequency unit corresponds to the first time unit.

In a possible implementation, the first indication information indicates a periodicity of the first frequency unit.

In a possible implementation, the first indication information includes periodicity information of the first frequency unit.

In a possible implementation, the first indication information indicates a periodicity of the first frequency unit and a first offset, and the first offset is an offset between the at least one first time unit corresponding to the first frequency unit and a time domain start position of the periodicity of the first frequency unit.

In a possible implementation, the first indication information includes periodicity information of the first frequency unit and a first offset, and the first offset is an offset between the at least one first time unit corresponding to the first frequency unit and a time domain start position of a periodicity of the first frequency unit.

In a possible implementation, the first indication information indicates a periodicity of a time unit set, the time unit set includes a plurality of time units, and the plurality of time units include the first time unit.

In a possible implementation, the first indication information includes periodicity information of a time unit set, the time unit set includes a plurality of time units, and the plurality of time units include the first time unit.

In a possible implementation, the first indication information indicates a periodicity of a time unit set and a second offset, the time unit set includes a plurality of time units, the plurality of time units include the first time unit, and the second offset is an offset between the time unit set corresponding to the first frequency unit and a time domain start position of the periodicity of the time unit set.

In a possible implementation, the first indication information includes periodicity information of a time unit set and a second offset, the time unit set includes a plurality of time units, the plurality of time units include the first time unit, and the second offset is an offset between the time unit set corresponding to the first frequency unit and a time domain start position of a periodicity of the time unit set.

In a possible implementation, the sending module 2201 is further configured to send fourth indication information to the terminal, where the fourth indication information indicates a position of the first time unit in the time unit set.

In a possible implementation, the sending module 2201 is further configured to send fourth indication information to the terminal, where the fourth indication information includes indication information of a time domain position, and the indication information of the time domain position indicates a position of the first time unit in the time unit set.

In a possible implementation, the first indication information is carried in radio resource control signaling, a media access control control element, or physical layer signaling.

In a possible implementation, if the plurality of first frequency units include the second frequency unit, the frequency unit for carrying the first control information is the second frequency unit.

In a possible implementation, a quantity of frequency units for detecting the first control information by the terminal is less than or equal to a first threshold.

In a possible implementation, the receiving module 2202 is configured to receive second indication information from the terminal, where the second indication information indicates the first threshold.

In a possible implementation, a length of the first time unit is the same as a length of a time unit corresponding to a reference frequency unit, or the length of the first time unit is configured by the communication apparatus 220.

In a possible implementation, the reference frequency unit is configured by the communication apparatus 220 or predefined.

In a possible implementation, the sending module 2201 is further configured to send third indication information to the terminal, where the third indication information indicates the first frequency unit set.

When the communication apparatus 220 is configured to implement the function of the network device, for other functions that can be implemented by the communication apparatus 220, refer to related descriptions of the embodiment shown in FIG. 12 or the embodiment shown in FIG. 20. Details are not described.

In a simple embodiment, a person skilled in the art may figure out that the communication apparatus 220 may be in the form shown in FIG. 9. For example, the processor 901 in FIG. 9 may invoke the computer-executable instructions stored in the memory 903, so that the communication apparatus 220 performs the method in the foregoing method embodiments.

For example, functions/implementation processes of the sending module 2201 and the receiving module 2202 in FIG. 22 may be implemented by the processor 901 in FIG. 9 by invoking the computer-executable instructions stored in the memory 903. Alternatively, functions/implementation processes of the sending module 2201 and the receiving module 2202 in FIG. 22 may be implemented by the communication interface 904 in FIG. 9.

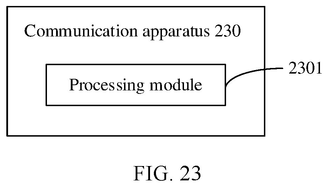

For example, when functional modules are obtained through division in an integrated manner, FIG. 23 is a schematic diagram of a structure of a communication apparatus 230. The communication apparatus 230 includes a processing module 2301.

For example, the communication apparatus 230 is configured to implement a function of a terminal. The communication apparatus 230 is, for example, the terminal described in the embodiment shown in FIG. 13.

The processing module 2301 is configured to determine detection capability information of a first frequency unit based on a first value. The processing module 2301 is further configured to detect control information based on the detection capability information, where the first value is a quantity of frequency units that can be scheduled by a frequency unit in a frequency unit set in a target time unit, and the frequency unit set includes the first frequency unit; or the first value is a sum of quantities of times that all frequency units are calculated in frequency units that can be scheduled by a frequency unit in the frequency unit set, a quantity of times that any frequency unit is calculated in the frequency units that can be scheduled by the frequency unit in the frequency unit set is less than or equal to Y, Y is a positive integer, and the frequency unit set includes the first frequency unit.

In a possible implementation, the first value is the quantity of frequency units that can be scheduled by the frequency unit in the frequency unit set in the target time unit, and the communication apparatus 230 can detect control information in the target time unit and on the frequency unit in the frequency unit set; or the first value is the sum of quantities of times that all frequency units are calculated in the frequency units that can be scheduled by the frequency unit in the frequency unit set, and the communication apparatus 230 can detect control information in on the frequency unit in the frequency unit set.

In a possible implementation, the first value is the quantity of frequency units that can be scheduled by the frequency unit in the frequency unit set in the target time unit, the detection capability information includes a first maximum value and/or a second maximum value, the first maximum value is a maximum quantity of detection times of the communication apparatus 230 in the first time unit, the second maximum value is a maximum quantity of non-overlapped control channel elements of the communication apparatus 230 in the first time unit, and the first time unit is a time unit corresponding to the first frequency unit.

In a possible implementation, N first time units correspond to the target time unit, a maximum quantity of detection times of the communication apparatus 230 in the N first time units and on the first frequency unit is a third maximum value, a maximum quantity of non-overlapped control channel elements of the communication apparatus 230 in the N first time units and on the first frequency unit is a fourth maximum value, the third maximum value is a maximum quantity of detection times of the communication apparatus 230 in the target time unit, and the fourth maximum value is a maximum quantity of non-overlapped control channel elements of the communication apparatus 230 in the target time unit.

In a possible implementation, the first time unit corresponds to M target time units, the first maximum value is a sum of M third maximum values, and the second maximum value is a sum of M fourth maximum values. In the M third maximum values, an i^{th} third maximum value is a maximum quantity of detection times of the communication apparatus 230 in a second time unit. In the M fourth maximum values, an i^{th} fourth maximum value is a maximum quantity of non-overlapped control channel elements of the communication apparatus 230 in the second time unit. The second time unit is an i^{th} target time unit in the M target time units corresponding to the first time unit, M is a positive integer, i is a positive integer, and i is less than or equal to M.

In a possible implementation, the first value is the quantity of frequency units that can be scheduled by the frequency unit in the frequency unit set in the target time unit, the detection capability information includes a fifth maximum value and/or a sixth maximum value, the fifth maximum value is the maximum quantity of detection times of the communication apparatus 230 in the target time unit, and the sixth maximum value is the maximum quantity of non-overlapped control channel elements of the communication apparatus 230 in the target time unit.

In a possible implementation, the first time unit corresponds to M target time units, a maximum quantity of detection times of the communication apparatus 230 in an i^{th} third time unit and on the first frequency unit is an i^{th} fifth maximum value, and a maximum quantity of non-overlapped control channel elements of the communication apparatus 230 in the i^{th} third time unit and on the first frequency unit is an i^{th} sixth maximum value. The first time unit is a time unit corresponding to the first frequency unit, the i^{th} third time unit is an i^{th} time unit in M time units that are in the first time unit and that correspond to the M target time units, M is a positive integer, i is a positive integer, and i is less than or equal to M. The i^{th} fifth maximum value is a maximum quantity of detection times of the communication apparatus 230 in a target time unit corresponding to the i^{th} third time unit, and the i^{th} sixth maximum value is a maximum quantity of non-overlapped control channel elements of the communication apparatus 230 in the target time unit corresponding to the i^{th} third time unit.

When the communication apparatus 230 is configured to implement the function of the terminal, for other functions that can be implemented by the communication apparatus 230, refer to related descriptions of the embodiment shown in FIG. 13. Details are not described.

Alternatively, for example, the communication apparatus 230 is configured to implement a function of a network device. The communication apparatus 230 is, for example, the network device described in the embodiment shown in FIG. 13.

The processing module 2301 is configured to determine detection capability information of a first frequency unit based on a first value, where the first value is a quantity of frequency units that can be scheduled by a frequency unit in a frequency unit set in a target time unit, and the frequency unit set includes the first frequency unit; or the first value is a sum of quantities of times that all frequency units are calculated in frequency units that can be scheduled by a frequency unit in the frequency unit set, a quantity of times that any frequency unit is calculated in the frequency units that can be scheduled by the frequency unit in the frequency unit set is less than or equal to Y, Y is a positive integer, and the frequency unit set includes the first frequency unit.

In a possible implementation, the first value is the quantity of frequency units that can be scheduled by the frequency unit in the frequency unit set in the target time unit, and the terminal can detect control information in the target time unit and on the frequency unit in the frequency unit set; or the first value is the sum of quantities of times that all frequency units are calculated in the frequency units that can be scheduled by the frequency unit in the frequency unit set, and the terminal can detect control information on the frequency unit in the frequency unit set.

In a possible implementation, the first value is the quantity of frequency units that can be scheduled by the frequency unit in the frequency unit set in the target time unit, the detection capability information includes a first maximum value and/or a second maximum value, the first maximum value is a maximum quantity of detection times of the terminal in a first time unit, the second maximum value is a maximum quantity of non-overlapped control channel elements of the terminal in the first time unit, and the first time unit is a time unit corresponding to the first frequency unit.

In a possible implementation, N first time units correspond to the target time unit, a maximum quantity of detection times of the terminal in the N first time units and on the first frequency unit is a third maximum value, a maximum quantity of non-overlapped control channel elements of the terminal in the N first time units and on the first frequency unit is a fourth maximum value, the third maximum value is a maximum quantity of detection times of the terminal in the target time unit, and the fourth maximum value is a maximum quantity of non-overlapped control channel elements of the terminal in the target time unit.

In a possible implementation, the first time unit corresponds to M target time units, the first maximum value is a sum of M third maximum values, and the second maximum value is a sum of M fourth maximum values. In the M third maximum values, an i^{th} third maximum value is a maximum quantity of detection times of the terminal in a second time unit. In the M fourth maximum values, an i^{th} fourth maximum value is a maximum quantity of non-overlapped control channel elements of the terminal in the second time unit. The second time unit is an i^{th} target time unit in the M target time units corresponding to the first time unit, M is a positive integer, i is a positive integer, and i is less than or equal to M.

In a possible implementation, the first value is the quantity of frequency units that can be scheduled by the frequency unit in the frequency unit set in the target time unit, the detection capability information includes a fifth maximum value and/or a sixth maximum value, the fifth maximum value is the maximum quantity of detection times of the terminal in the target time unit, and the sixth maximum value is the maximum quantity of non-overlapped control channel elements of the terminal in the target time unit.

In a possible implementation, the first time unit corresponds to M target time units, a maximum quantity of detection times of the terminal in an i^{th} third time unit and on the first frequency unit is an i^{th} fifth maximum value, and a maximum quantity of non-overlapped control channel elements of the terminal in the i^{th} third time unit and on the first frequency unit i s an i^{th} sixth maximum value. The first time unit is a time unit corresponding to the first frequency unit, the i^{th} third time unit is an i^{th} time unit in M time units that are in the first time unit and that correspond to the M target time units, M is a positive integer, i is a positive integer, and i is less than or equal to M. The i^{th} fifth maximum value is a maximum quantity of detection times of the terminal in a target time unit corresponding to the i^{th} third time unit, and the i^{th} sixth maximum value is a maximum quantity of non-overlapped control channel elements of the terminal in the target time unit corresponding to the i^{th} third time unit.

When the communication apparatus 230 is configured to implement the function of the network device, for other functions that can be implemented by the communication apparatus 230, refer to related descriptions of the embodiment shown in FIG. 13. Details are not described.

In a simple embodiment, a person skilled in the art may figure out that the communication apparatus 230 may be in the form shown in FIG. 9. For example, the processor 901 in FIG. 9 may invoke the computer-executable instructions stored in the memory 903, so that the communication apparatus 230 performs the method in the foregoing method embodiments.

For example, a function/implementation process of the processing module 2301 in FIG. 23 may be implemented by the processor 901 in FIG. 9 by invoking the computer-executable instructions stored in the memory 903.

It should be noted that one or more of the foregoing modules or units may be implemented by software, hardware, or a combination thereof. When any one of the foregoing modules or units is implemented by software, the software exists in a form of computer program instructions, and is stored in the memory. The processor may be configured to execute the program instructions and implement the foregoing method procedure. The processor may be built into a SoC (system-on-a-chip) or an ASIC, or may be an independent semiconductor chip. In addition to a core configured to execute software instructions to perform an operation or processing, the processor may further include a necessary hardware accelerator, for example, a field programmable gate array (field programmable gate array, FPGA), a PLD (programmable logic device), or a logic circuit that implements a dedicated logic operation.

When the foregoing module or unit is implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or perform the foregoing method procedure without depending on software.

Optionally, an embodiment of this application further provides a chip system. The chip system includes at least one processor and an interface. The at least one processor is coupled to a memory through the interface. When the at least one processor executes a computer program or instructions in the memory, the method according to any one of the foregoing method embodiments is performed. In a possible implementation, the chip system further includes the memory. Optionally, the chip system may include a chip, or may include a chip and another discrete component. This is not specifically limited in embodiments of this application.

Optionally, an embodiment of this application further provides a computer-readable storage medium. All or some of the procedures in the foregoing method embodiments may be implemented by a computer program instructing related hardware. The program may be stored in the computer-readable storage medium. When the program is executed, the procedures of the foregoing method embodiments may be included. The computer-readable storage medium may be an internal storage unit of the communication apparatus in any one of the foregoing embodiments, for example, a hard disk or memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the communication apparatus. Further, the computer-readable storage medium may alternatively include both the internal storage unit and the external storage device of the communication apparatus. The computer-readable storage medium is configured to store the computer program and other programs and data that are required by the communication apparatus. The computer-readable storage medium may be further configured to temporarily store data that has been output or is to be output.

Optionally, an embodiment of this application further provides a computer program product. All or some of the procedures in the foregoing method embodiments may be implemented by a computer program instructing related hardware. The program may be stored in the computer program product. When the program is executed, the procedures of the foregoing method embodiments may be included.

Optionally, an embodiment of this application further provides computer instructions. All or some of the procedures in the foregoing method embodiments may be implemented by computer instructions instructing related hardware (such as a computer, a processor, an access network device, a mobility management network element, or a session management network element). The program may be stored in the computer-readable storage medium or the computer program product.

Based on the descriptions of the implementations, a person skilled in the art may clearly understand that, for the purpose of convenient and brief description, division into the foregoing functional modules is merely used as an example for description. During actual application, the functions may be allocated to different functional modules for implementation based on a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Therefore, the protection scope of this application shall be subject to the protection scope of the claims.

## Claims

1. A communication method, applied to a terminal (802, 803, 804), wherein the method comprises:
receiving (S1001) first indication information from a network device, wherein the first indication information is used by the terminal to determine a plurality of first frequency units in a first frequency unit set, the first frequency unit is a candidate frequency unit for carrying first control information, and the first control information is used to schedule data transmission on a second frequency unit; and
detecting (S1002) the first control information on a frequency unit in the plurality of first frequency units,
wherein if the plurality of first frequency units comprises the second frequency unit, the second frequency unit is additionally used to carry the first control information.

2. The method according to claim 1, wherein the first indication information indicates a correspondence between the first frequency unit and a first time unit, and the first time unit is a candidate time unit for detecting the first control information.

3. The method according to claim 1 or 2, wherein the first indication information comprises an index of at least one first frequency unit, and the index of the first frequency unit corresponds to the first time unit.

4. The method according to any one of claims 1 to 3, wherein the first indication information is carried in radio resource control signaling, a media access control control element, or physical layer signaling.

5. The method according to any one of claims 1 to 4, wherein a quantity of frequency units used to detect the first control information is less than or equal to a first threshold.

6. The method according to any one of claims 1 to 5, wherein the method further comprises:
sending second indication information to the network device, wherein the second indication information indicates the first threshold.

7. A communication method, applied to a network device (801), wherein the method comprises:
sending (S1901) first indication information to a terminal, wherein the first indication information is used by the terminal to determine a plurality of first frequency units in a first frequency unit set, the first frequency unit is a candidate frequency unit for carrying first control information, and the first control information is used to schedule data transmission on a second frequency unit; and
sending (S1902) the first control information to the terminal on a frequency unit in the plurality of first frequency units,
wherein if the plurality of first frequency units comprises the second frequency unit, the second frequency unit is additionally used to carry the first control information.

8. The method according to claim 7, wherein the first indication information indicates a correspondence between the first frequency unit and a first time unit, and the first time unit is a candidate time unit for detecting the first control information by the terminal.

9. The method according to claim 7 or 8, wherein the first indication information comprises an index of at least one first frequency unit, and the index of the first frequency unit corresponds to the first time unit.

10. The method according to any one of claims 7 to 9, wherein the first indication information is carried in radio resource control signaling, a media access control control element, or physical layer signaling.

11. The method according to any one of claims 7 to 10, wherein a quantity of frequency units for detecting the first control information by the terminal is less than or equal to a first threshold.

12. The method according to claim 11, wherein the method further comprises:
receiving second indication information from the terminal, wherein the second indication information indicates the first threshold.

13. A communication apparatus, configured to perform the method according to any one of claims 1 to 6.

14. A communication apparatus, configured to perform the method according to any one of claims 7 to 12.

## Patentansprüche

1. Kommunikationsverfahren, das auf ein Endgerät (802, 803, 804) angewendet wird, wobei das Verfahren Folgendes umfasst:
Empfangen (S1001) von ersten Angabeinformationen von einer Netzwerkeinrichtung, wobei die ersten Angabeinformationen durch das Endgerät verwendet werden, um eine Vielzahl von ersten Frequenzeinheiten in einem ersten Frequenzeinheitensatz zu bestimmen, die erste Frequenzeinheit eine Kandidatenfrequenzeinheit zum Transportieren erster Steuerinformationen ist und die ersten Steuerinformationen verwendet werden, um Datenübertragung auf einer zweiten Frequenzeinheit zu planen; und
Detektieren (S1002) der ersten Steuerinformationen auf einer Frequenzeinheit in der Vielzahl von ersten Frequenzeinheiten, wobei, wenn die Vielzahl von ersten Frequenzeinheiten die zweite Frequenzeinheit umfasst, die zweite Frequenzeinheit zusätzlich verwendet wird, um die ersten Steuerinformationen zu transportieren.

2. Verfahren nach Anspruch 1, wobei die ersten Angabeinformationen eine Entsprechung zwischen der ersten Frequenzeinheit und einer ersten Zeiteinheit angeben und die erste Zeiteinheit eine Kandidatenzeiteinheit zum Detektieren der ersten Steuerinformationen ist.

3. Verfahren nach Anspruch 1 oder 2, wobei die ersten Angabeinformationen einen Index mindestens einer ersten Frequenzeinheit umfassen und der Index der ersten Frequenzeinheit der ersten Zeiteinheit entspricht.

4. Verfahren nach einem der Ansprüche 1 bis 3, wobei die ersten Angabeinformationen in Funkressourcensteuersignalgebung, einem Medienzugriffssteuerelement oder der Signalgebung der physikalischen Schicht transportiert werden.

5. Verfahren nach einem der Ansprüche 1 bis 4, wobei eine Menge von Frequenzeinheiten, die verwendet wird, um die ersten Steuerinformationen zu detektieren, kleiner als ein erster Schwellenwert oder gleich diesem ist.

6. Verfahren nach einem der Ansprüche 1 bis 5, wobei das Verfahren ferner Folgendes umfasst:
Senden von zweiten Angabeinformationen an die Netzwerkeinrichtung, wobei die zweiten Angabeinformationen den ersten Schwellenwert angeben.

7. Kommunikationsverfahren, das auf eine Netzwerkeinrichtung (801) angewendet wird, wobei das Verfahren Folgendes umfasst:
Senden (S1901) von ersten Angabeinformationen an ein Endgerät, wobei die ersten Angabeinformationen durch das Endgerät verwendet werden, um eine Vielzahl von ersten Frequenzeinheiten in einem ersten Frequenzeinheitensatz zu bestimmen, die erste Frequenzeinheit eine Kandidatenfrequenzeinheit zum Transportieren erster Steuerinformationen ist und die ersten Steuerinformationen verwendet werden, um Datenübertragung auf einer zweiten Frequenzeinheit zu planen; und
Senden (S1902) der ersten Steuerinformationen an das Endgerät auf einer Frequenzeinheit in der Vielzahl von ersten Frequenzeinheiten, wobei, wenn die Vielzahl von ersten Frequenzeinheiten die zweite Frequenzeinheit umfasst, die zweite Frequenzeinheit zusätzlich verwendet wird, um die ersten Steuerinformationen zu transportieren.

8. Verfahren nach Anspruch 7, wobei die ersten Angabeinformationen eine Entsprechung zwischen der ersten Frequenzeinheit und einer ersten Zeiteinheit angeben und die erste Zeiteinheit eine Kandidatenzeiteinheit zum Detektieren der ersten Steuerinformationen durch das Endgerät ist.

9. Verfahren nach Anspruch 7 oder 8, wobei die ersten Angabeinformationen einen Index mindestens einer ersten Frequenzeinheit umfassen und der Index der ersten Frequenzeinheit der ersten Zeiteinheit entspricht.

10. Verfahren nach einem der Ansprüche 7 bis 9, wobei die ersten Angabeinformationen in Funkressourcensteuersignalgebung, einem Medienzugriffssteuerelement oder der Signalgebung der physikalischen Schicht transportiert werden.

11. Verfahren nach einem der Ansprüche 7 bis 10, wobei eine Menge von Frequenzeinheiten zum Detektieren der ersten Steuerinformationen durch das Endgerät kleiner als ein erster Schwellenwert oder gleich diesem ist.

12. Verfahren nach Anspruch 11, wobei das Verfahren ferner Folgendes umfasst:
Empfangen von zweiten Angabeinformationen von dem Endgerät, wobei die zweiten Angabeinformationen den ersten Schwellenwert angeben.

13. Kommunikationsvorrichtung, die dazu konfiguriert ist, das Verfahren nach einem der Ansprüche 1 bis 6 durchzuführen.

14. Kommunikationsvorrichtung, die dazu konfiguriert ist, das Verfahren nach einem der Ansprüche 7 bis 12 durchzuführen.

## Revendications

1. Procédé de communication, appliqué à un terminal (802, 803, 804), dans lequel le procédé comprend :
la réception (S1001) de premières informations d'indication en provenance d'un dispositif de réseau, dans lequel les premières informations d'indication sont utilisées par le terminal pour déterminer une pluralité de premières unités de fréquence dans un premier ensemble d'unités de fréquence, la première unité de fréquence est une unité de fréquence candidate pour porter des premières informations de commande, et les premières informations de commande sont utilisées pour planifier une transmission de données sur une seconde unité de fréquence ; et
la détection (S1002) des premières informations de commande sur une unité de fréquence dans la pluralité de premières unités de fréquence,
dans lequel si la pluralité de premières unités de fréquence comprend la seconde unité de fréquence, la seconde unité de fréquence est en outre utilisée pour porter les premières informations de commande.

2. Procédé selon la revendication 1, dans lequel les premières informations d'indication indiquent une correspondance entre la première unité de fréquence et une première unité de temps, et la première unité de temps est une unité de temps candidate pour détecter les premières informations de commande.

3. Procédé selon la revendication 1 ou 2, dans lequel la première information d'indication comprend un index d'au moins une première unité de fréquence, et l'index de la première unité de fréquence correspond à la première unité de temps.

4. Procédé selon l'une quelconque des revendications 1 à 3, dans lequel les premières informations d'indication sont portées dans une signalisation de commande de ressources radio, un élément de commande de contrôle d'accès, ou une signalisation de couche physique.

5. Procédé selon l'une quelconque des revendications 1 à 4, dans lequel une quantité d'unités de fréquence utilisées pour détecter les premières informations de commande sont inférieures ou égales à un premier seuil.

6. Procédé selon l'une quelconque des revendications 1 à 5, dans lequel le procédé comprend en outre :
l'envoi de secondes informations d'indication vers le dispositif de réseau, dans lequel les secondes informations d'indication indiquent le premier seuil.

7. Procédé de communication, appliqué à un dispositif de réseau (801), dans lequel le procédé comprend :
l'envoi (S1901) de premières informations d'indication vers un terminal, dans lequel les premières informations d'indication sont utilisées par le terminal pour déterminer une pluralité de premières unités de fréquence dans un premier ensemble d'unités de fréquence, la première unité de fréquence est une unité de fréquence candidate pour porter de premières informations de commande, et les premières informations de commande sont utilisées pour planifier une transmission de données sur une seconde unité de fréquence ; et
l'envoi (S1902) des premières informations de commande au terminal sur une unité de fréquence dans la pluralité de premières unités de fréquence, dans lequel si la pluralité de premières unités de fréquence comprend la seconde unité de fréquence, la seconde unité de fréquence est en outre utilisée pour porter les premières informations de commande.

8. Procédé selon la revendication 7, dans lequel les premières informations d'indication indiquent une correspondance entre la première unité de fréquence et une première unité de temps, et la première unité de temps est une unité de temps candidate pour détecter les premières informations de commande par le terminal.

9. Procédé selon la revendication 7 et 8, dans lequel les premières information d'indication comprennent un index d'au moins une première unité de fréquence, et l'index de la première unité de fréquence correspond à la première unité de temps.

10. Procédé selon l'une quelconque des revendications 7 à 9, dans lequel les premières informations d'indication sont portées dans une signalisation de commande de ressources radio, un élément de commande de contrôle d'accès, ou une signalisation de couche physique.

11. Procédé selon l'une quelconque des revendications 7 à 10, dans lequel une quantité d'unités de fréquence pour détecter les premières informations de commande par le terminal sont inférieures ou égales à un premier seuil.

12. Procédé selon la revendication 11, dans lequel le procédé comprend en outre :
la réception de secondes informations d'indication en provenance du terminal, dans lequel les secondes informations d'indication indiquent le premier seuil.

13. Appareil de communication, configuré pour réaliser le procédé selon l'une quelconque des revendications 1 à 6.

14. Appareil de communication, configuré pour réaliser le procédé selon l'une quelconque des revendications 7 à 12.
